# EUROPÄISCHE PATENTSCHRIFT

(11) **EP 4 292 182 B1**
(45) Veröffentlichungstag und Bekanntmachung des Hinweises auf die Patenterteilung: **29.05.2024**
(21) Anmeldenummer: 22713923.5
(22) Anmeldetag: 10.03.2022
(51) Int. Cl.: H02H 1/00, H02H 7/26

(54) **SYSTEM UND ÜBERWACHUNGSFELDGERÄT**
SYSTEM AND MONITORING FIELD DEVICE
SYSTÈME ET DISPOSITIF DE TERRAIN DE SURVEILLANCE

(30) Priorität: 17.03.2021 DE 102021106487
(43) Veröffentlichungstag der Anmeldung: 20.12.2023
(73) Patentinhaber: Beckhoff Automation GmbH, 33415 Verl (DE)
(72) Erfinder: POHL, Christopher, 33415 Verl (DE); RETTIG, Thomas, 33378 Rheda-Wiedenbrück (DE); BRUNS, Benjamin, 29221 Celle (DE); PETROVIC, Sebastian, 32257 Bünde (DE)
(74) Vertreter: Patentanwaltskanzlei WILHELM & BECK
(86) Internationale Anmeldenummer: PCT/EP2022/056253
(87) Internationale Veröffentlichungsnummer: WO 2022/194680

(56) Entgegenhaltungen:
- LUTZ LIEBERS: "DART Dynamic arc recognition and termination intrinsic safety without the power limits", SICE ANNUAL CONFERENCE (SICE), 2011 PROCEEDINGS OF, IEEE, 13. September 2011 (2011-09-13), Seiten 1566-1573, XP032064836, ISBN: 978-1-4577-0714-8

## Beschreibung

Die vorliegende Erfindung betrifft ein System umfassend ein Einspeisegerät und mehrere mit dem Einspeisegerät elektrisch verbundene Feldgeräte. Wenigstens ein Feldgerät ist ein Überwachungsfeldgerät. Die Erfindung betrifft des Weiteren ein Überwachungsfeldgerät für ein solches System.

Diese Patentanmeldung beansprucht die Priorität der deutschen Patentanmeldung DE 10 2021 106 487.2.

Ein Automatisierungssystem kann eine Mehrzahl an Sensoren und Aktoren umfassen. Zur elektrischen Energieversorgung kann ein mit derartigen Komponenten elektrisch verbundenes Einspeisegerät zum Einsatz kommen. Das Einspeisegerät kann zusätzlich dazu ausgebildet sein, eine Datenkommunikation mit den Komponenten bzw. eine Steuerung der Komponenten durchzuführen.

In einem möglichen Anwendungsfall befinden sich Bestandteile des Systems in einem oder mehreren explosionsgefährdeten Bereichen, zum Beispiel in einer Zone 0/20 oder Zone 1/21 gemäß der ATEX-Richtlinie (Atmosphäres Explosibles). Dies macht es erforderlich, geeignete Schutzmaßnahmen vorzusehen, um den Anforderungen an den Explosionsschutz zu genügen. Zu diesem Zweck können für Bestandteile des Systems der ATEX-Richtlinie entsprechende Ausgestaltungen bzw. Konstruktionsprinzipien, auch als "Zündschutzart" bezeichnet, zum Einsatz kommen.

Die Norm PD IEC/TS 60079-39:2015 "Explosive atmospheres - Part 39: Intrinsically safe systems with electronically controlled spark duration limitation" beschreibt ein System umfassend wenigstens ein Feldgerät (Power-i field device) und eine mit dem Feldgerät elektrisch verbundene Einspeisequelle (Power-i source). Die Einspeisequelle dient zur elektrischen Energieversorgung des Feldgeräts, und wird ferner zur Überwachung der elektrischen Energieversorgung eingesetzt. Hierfür ist die Einspeisequelle dazu ausgebildet, eine Funkenentstehung bei der elektrischen Energieversorgung zu erfassen, um hierauf basierend die Energieversorgung abzuschalten.

Bei einem gemäß der vorgenannten Norm aufgebauten System richtet sich die übertragbare elektrische Leistung nach der Reaktionszeit des Systems (System Response Time).

Die Reaktionszeit umfasst Verzögerungen, welche von Leitungslängen einer zur elektrischen Verbindung eingesetzten Verkabelung, von kapazitiven und/oder induktiven Effekten, und von der Funkenerkennung und Abschaltung, herrühren können. Je größer die Entfernung und je langsamer die Erkennung bzw. Abschaltung ist, desto kleiner ist auch die maximal übertragbare elektrische Leistung. Abhängig von der Ausgestaltung des Systems können Parameter wie Leitungslängen, kapazitive und/oder induktive Effekte mit solchen Einschränkungen verbunden sein, dass das oben beschriebene Konzept nicht angewendet werden kann. Dieser Fall kann zum Beispiel auftreten, wenn, wie in der Prozesstechnik üblich, Leitungslängen im Bereich von bis zu 1000m vorgesehen sind.

Lutz Liebers: "DART - Dynamic Arc Recognition and Termination Intrinsic Safety without the Power Limits", SICE Annual Conference 2011, Proceedings of IEEE, 13. September 2011, Seiten 1566 - 1573 beschreibt ein System umfassend ein Einspeisegerät und mehrere mit dem Einspeisegerät elektrisch verbundene Verbraucher. Das Einspeisegerät dient zur elektrischen Energieversorgung der Verbraucher. Das Einspeisegerät weist eine Überwachungseinrichtung auf, welche dazu dient, eine Funkenentstehung im Falle eines Fehlers anhand einer Stromänderung zu erfassen und hierauf basierend die Energieversorgung abzuschalten. Den Verbrauchern ist ein Entkopplungsmodul zugeordnet, welches optional ausgebildet ist, im Fehlerfall anhand einer erfassten Stromänderung eine Abschaltung der Energieversorgung durchzuführen.

Die Aufgabe der vorliegenden Erfindung besteht darin, eine Lösung für ein verbessertes System anzugeben, mit dessen Hilfe Feldkomponenten wie Aktoren und Sensoren, welche sich in einem explosionsgefährdeten Bereich befinden können, elektrisch versorgt werden können.

Diese Aufgabe wird durch die Merkmale des unabhängigen Anspruchs 1 gelöst. Weitere vorteilhafte Ausführungsformen der Erfindung sind in den abhängigen Ansprüchen angegeben.

Gemäß einem Aspekt der Erfindung wird ein System vorgeschlagen, welches ein Einspeisegerät und mehrere mit dem Einspeisegerät elektrisch verbundene Feldgeräte umfasst. Das Einspeisegerät ist ausgebildet, eine elektrische Energie zur elektrischen Energieversorgung der Feldgeräte bereitzustellen. Das Einspeisegerät weist eine Einspeisegerät-Überwachungseinrichtung auf, welche ausgebildet ist, eine Funkenentstehung bei der elektrischen Energieversorgung zu erfassen und hierauf basierend die elektrische Energieversorgung abzuschalten. Die Feldgeräte weisen jeweils einen Eingangsanschluss zum Anschließen einer Versorgungsleitung auf, über welchen die von dem Einspeisegerät bereitgestellte elektrische Energie dem jeweiligen Feldgerät zugeführt werden kann. Wenigstens ein Feldgerät weist eine Anschlusseinrichtung zum Anschließen wenigstens einer Ausgangsleitung auf, über welche die elektrische Energie zur elektrischen Energieversorgung wenigstens einer Feldkomponente weitergeleitet werden kann. Des Weiteren ist wenigstens ein Feldgerät ein Überwachungsfeldgerät, welches zur elektrischen Energieversorgung wenigstens eines nachfolgenden Feldgeräts und zur Überwachung ausgebildet ist. Das Überwachungsfeldgerät weist wenigstens einen Ausgangsanschluss zum Anschließen einer weiteren Versorgungsleitung auf, über welchen die elektrische Energie zur elektrischen Energieversorgung wenigstens eines nachfolgenden Feldgeräts weitergeleitet werden kann. Das Überwachungsfeldgerät weist ferner eine Überwachungseinrichtung auf, welche ausgebildet ist, eine Funkenentstehung bei der elektrischen Energieversorgung wenigstens eines nachfolgenden Feldgeräts zu erfassen und hierauf basierend die elektrische Energieversorgung abzuschalten.

Die Feldgeräte des vorgeschlagenen Systems weisen einen Eingangsanschluss zum Anschließen einer Versorgungsleitung auf. Über den Eingangsanschluss und eine daran angeschlossene Versorgungsleitung kann die von dem Einspeisegerät des Systems bereitgestellte elektrische Energie in die Feldgeräte eingebracht werden. Wenigstens ein Feldgerät des Systems weist eine Anschlusseinrichtung zum Anschließen wenigstens einer Ausgangsleitung auf. Auf diese Weise kann die dem Feldgerät zugeführte elektrische Energie an eine mit der Ausgangsleitung verbundene Feldkomponente weitergeleitet werden, um diese elektrisch zu versorgen. Die Feldkomponente kann eine Einrichtung bzw. externe Einrichtung wie zum Beispiel ein Sensor oder Aktor sein. Es können mehrere Feldkomponenten über mehrere Ausgangsleitungen an die Anschlusseinrichtung angeschlossen sein und dadurch energetisch versorgt werden. Ferner können mehrere oder sämtliche Feldgeräte des Systems jeweils eine entsprechende Anschlusseinrichtung aufweisen, an welche eine oder mehrere Feldkomponenten zur elektrischen Energieversorgung angeschlossen sein können.

Das Einspeisegerät des Systems dient, neben dem Bereitstellen der elektrischen Energie, zum Überwachen der elektrischen Energieversorgung. Die Überwachung kann sich u.a. auf wenigstens ein dem Einspeisegerät nachfolgendes Feldgerät beziehen. Zum Zwecke der Überwachung weist das Einspeisegerät eine Einspeisegerät-Überwachungseinrichtung auf. Mit Hilfe der Einspeisegerät-Überwachungseinrichtung kann ein bei der elektrischen Energieversorgung aufgrund eines Fehlers auftretender Funken bzw. Lichtbogen in dessen Entstehung erfasst werden, und hierauf basierend mit einer niedrigen Latenz die elektrische Energieversorgung abgeschaltet werden, um den Funken zu terminieren.

Eine Überwachung wird bei dem vorgeschlagenen System nicht nur durch das Einspeisegerät durchgeführt. Denn wenigstens ein Feldgerät des Systems ist in Form eines Überwachungsfeldgeräts ausgebildet, welches zur elektrischen Energieversorgung wenigstens eines nachfolgenden Feldgeräts durch Weiterleiten der elektrischen Energie und zur Überwachung eingesetzt werden kann. Das Überwachungsfeldgerät weist wenigstens einen Ausgangsanschluss zum Anschließen einer weiteren Versorgungsleitung auf, über welchen die dem Überwachungsfeldgerät zugeführte elektrische Energie zur elektrischen Energieversorgung wenigstens eines nachgeordneten Feldgeräts weitergeleitet werden kann.

Es ist möglich, dass nicht nur das wenigstens eine Überwachungsfeldgerät, sondern weitere bzw. mehrere oder auch sämtliche Feldgeräte des Systems neben dem Eingangsanschluss wenigstens einen Ausgangsanschluss aufweisen. Der wenigstens eine Ausgangsanschluss eines Feldgeräts kann mit dem zugehörigen Eingangsanschluss elektrisch verbunden sein. Hierbei kann eine an einen Ausgangsanschluss eines Feldgeräts angeschlossene Versorgungsleitung an einen Eingangsanschluss eines weiteren bzw. nachfolgenden Feldgeräts angeschlossen sein, so dass die elektrische Energie zum Zwecke der Energieversorgung von dem einen Feldgerät zu dem nachfolgenden Feldgerät weitergeleitet werden kann.

Zum Zwecke der Überwachung weist das wenigstens eine Überwachungsfeldgerät des Systems, entsprechend des Einspeisegeräts, eine Überwachungseinrichtung auf. Mit Hilfe der Überwachungseinrichtung des Überwachungsfeldgeräts kann ein bei der elektrischen Energieversorgung wenigstens eines nachfolgenden Feldgeräts aufgrund eines Fehlers auftretender Funken bzw. Lichtbogen in dessen Entstehung erfasst werden, und hierauf basierend mit einer niedrigen Latenz die elektrische Energieversorgung abgeschaltet werden, um den Funken zu terminieren.

Im Betrieb des Systems kann unter Verwendung des Einspeisegeräts und des wenigstens einen Überwachungsfeldgeräts eine Funkendauerbegrenzung erzielt werden. Hierdurch kann zuverlässig verhindert werden, dass bei einem Fehlerfall ein Funke bzw. Zündfunke mit für eine Zündung ausreichender Energie im Bereich der Eingangs- und Ausgangsanschlüsse der Feldgeräte sowie im Bereich der an die Feldgeräte angeschlossenen Versorgungsleitungen erzeugt wird.

Bei dem vorgeschlagenen System erfolgt eine Überwachung der elektrischen Energieversorgung somit nicht allein durch das Einspeisegerät, sondern zusätzlich durch das wenigstens eine Überwachungsfeldgerät. Auf diese Weise erfolgt die Überwachung in aufgeteilter bzw. segmentierter Form, und ist auf mehrere Abschnitte des Systems verteilt. Hierbei werden erfindungsgemäß mit Hilfe des Einspeisegeräts und des wenigstens einen Überwachungsfeldgeräts einzelne bzw. unterschiedliche Systemabschnitte überwacht. Durch das Einspeisegerät kann ein erster Systemabschnitt, und durch ein oder mehrere dem Einspeisegerät nachfolgende bzw. nachgeordnete Überwachungsfeldgeräte kann ein weiterer oder können weitere Systemabschnitte des Systems überwacht werden. Die Überwachung kann sich dabei auf die in den jeweiligen Systemabschnitten befindenden Eingangs- und Ausgangsanschlüsse der Feldgeräte und Versorgungsleitungen beziehen. Aufgrund der abschnittsweise verwirklichten Überwachung können sich Parameter wie Leitungslängen von Versorgungsleitungen, kapazitive und/oder induktive Effekte und hiermit verbundene Einschränkungen lediglich auf die einzelnen bzw. einzeln überwachten Systemabschnitte, und nicht auf das System als Ganzes, beziehen. Infolgedessen kann für das System eine Ausgestaltung mit relativ großen Leitungslängen und/oder Anzahlen von Feldgeräten in Betracht kommen, und kann auch in einer solchen Ausgestaltung eine zuverlässige Überwachung der Energieversorgung gewährleistet werden. Eine Ausdehnung des Systems kann im Allgemeinen durch die verfügbare Energie an dem durch das Einspeisegerät überwachten ersten Systemabschnitt limitiert sein, und nicht durch eine Gesamtlänge des Systems.

Aufgrund der vorgenannten Eigenschaften kann für das System zum Beispiel folgendes Anwendungsszenario in Betracht kommen. Die Feldgeräte können in einem explosionsgefährdeten Bereich (zum Beispiel Zone 1/21 gemäß der ATEX-Richtlinie) angeordnet sein. Das Einspeisegerät kann sich in einem nicht oder nur wenig explosionsgefährdeten Bereich (zum Beispiel Zone 2/22 gemäß der ATEX-Richtlinie) befinden. Für Feldkomponenten (Sensor- und/oder Aktor-Komponenten), welche über Ausgangsleitungen an ein bzw. mehrere Feldgeräte angeschlossen sein können, kann eine Anordnung in einem stärker explosionsgefährdeten Bereich (zum Beispiel Zone 0/20 gemäß der ATEX-Richtlinie) in Betracht kommen. Zum Verwirklichen dieses Anwendungsszenarios können, zusätzlich zu der mit Hilfe des Einspeisegeräts und des wenigstens einen Überwachungsfeldgeräts erzielten Überwachung, weitere Maßnahmen und Ausgestaltungen zum Einsatz kommen, wie weiter unten näher erläutert wird.

Im Folgenden werden weitere mögliche Details und Ausführungsformen näher beschrieben, welche für das System und dessen Bestandteile in Betracht kommen können.

Bei der mit Hilfe des Einspeisegeräts bereitgestellten elektrischen Energie kann es sich um einen elektrischen Gleichstrom (DC, Direct Current) handeln. Für das Bereitstellen der elektrischen Energie kann das Einspeisegerät mit einer Stromquelle bzw. Gleichstromquelle elektrisch verbunden sein und auf diese Weise durch die Stromquelle elektrisch gespeist werden. Alternativ kann die mit Hilfe des Einspeisegeräts bereitgestellte elektrische Energie ein elektrischer Wechselstromstrom (AC, Alternating Current) sein. Hierbei kann das Einspeisegerät mit einer Wechselstromquelle elektrisch verbunden sein.

Innerhalb der Feldgeräte kann die elektrische Energie u.a. über interne elektrische Leiter transportiert werden. Die elektrischen Leiter können zum Beispiel in Form von Leiterbahnen vorliegen.

Wie oben angegeben wurde, kann wenigstens ein bzw. können mehrere oder sämtliche Feldgeräte des Systems eine Anschlusseinrichtung aufweisen, und dadurch mit Feldkomponenten (Sensoren und/oder Aktoren) verbunden sein, um diese elektrisch zu versorgen. Hierbei können die betreffenden Feldgeräte als Energieverteiler für die Feldkomponenten dienen. Die Anschlusseinrichtung eines Feldgeräts kann wenigstens einen Ausgangsleitungsanschluss zum Anschließen einer Ausgangsleitung aufweisen. Bei einer Ausgestaltung mit mehreren Ausgangsleitungsanschlüssen können mehrere Ausgangsleitungen an die Anschlusseinrichtung angeschlossen werden.

Die Feldkomponenten (Sensoren und/oder Aktoren) können dem System zugerechnet werden und dadurch Bestandteile des Systems sein. Entsprechendes gilt für eingesetzte Leitungen wie Versorgungsleitungen und Ausgangsleitungen. Die verwendeten Leitungen können mit Steckverbindern versehen sein, mit deren Hilfe die Leitungen an Bestandteile wie die Feldgeräte und Feldkomponenten angeschlossen werden können.

Wie oben angedeutet wurde, können mehrere bzw. sämtliche Feldgeräte des Systems neben dem Eingangsanschluss wenigstens einen Ausgangsanschluss aufweisen. Auf diese Weise ist folgende Ausführungsform für das System denkbar.

In einer weiteren Ausführungsform ist das Einspeisegerät über eine Versorgungsleitung mit einem der Feldgeräte verbunden, und sind die Feldgeräte untereinander über weitere und jeweils zwei Feldgeräte verbindende Versorgungsleitungen miteinander verbunden.

Dieser Aufbau kann sich durch einen geringen Verkabelungsaufwand auszeichnen. Die die Feldgeräte verbindenden Versorgungsleitungen können an Eingangsanschlüsse und Ausgangsanschlüsse von Feldgeräten angeschlossen sein. Die das Einspeisegerät mit einem der Feldgeräte verbindende Versorgungsleitung kann an einen Einspeisegerät-Ausgangsanschluss des Einspeisegeräts und einen Eingangsanschluss des betreffenden Feldgeräts angeschlossen sein.

In der vorgenannten Ausführungsform kann die von dem Einspeisegerät bereitgestellte elektrische Energie einem Feldgerät zugeführt und hiervon ausgehend an die weiteren Feldgeräte, d.h. jeweils von einem zu einem weiteren Feldgerät, weitergeleitet werden. Diejenigen Feldgeräte, welche eine Anschlusseinrichtung aufweisen, können die ihnen auf diese Weise zur Verfügung gestellte elektrische Energie über hieran angeschlossene Ausgangsleitungen an Feldkomponenten (Sensoren- und/oder Aktoren) weiter verteilen.

Das System weist wie oben angegeben wenigstens ein, also ein oder mehrere Überwachungsfeldgeräte, auf. Die folgende Beschreibung, welche sich u.a. auf Ausgestaltungen des bzw. eines Überwachungsfeldgeräts bezieht, kann in Bezug auf sämtliche Überwachungsfeldgeräte des Systems zur Anwendung kommen.

Die Überwachungseinrichtung des Überwachungsfeldgeräts kann mit dem Eingangsanschluss und mit dem wenigstens einen Ausgangsanschluss elektrisch verbunden sein. Des Weiteren kann die Überwachungseinrichtung zwischen dem Eingangsanschluss und dem wenigstens einen Ausgangsanschluss des Überwachungsfeldgeräts angeordnet sein.

In einer weiteren Ausführungsform weist die Überwachungseinrichtung des Überwachungsfeldgeräts eine Detektoreinrichtung zum Erfassen einer Stromänderung bei einer Funkenentstehung, eine Steuereinheit und eine Schalteinheit auf. Die Steuereinheit ist ausgebildet, das Abschalten der Energieversorgung durch Ansteuern der Schalteinheit auf der Grundlage einer mit Hilfe der Detektoreinrichtung erfassten Stromänderung durchzuführen. Hierdurch kann das Abschalten der Energieversorgung von wenigstens einem dem Überwachungsfeldgerät nachgeordneten Feldgerät im Fehlerfall zuverlässig durchgeführt werden.

In einer weiteren Ausführungsform weist die Detektoreinrichtung der Überwachungseinrichtung des Überwachungsfeldgeräts einen ersten Detektor und einen zweiten Detektor auf. Der erste Detektor ist ausgebildet, eine Stromänderung bei einem entstehenden Schließfunken (make-spark) zu erfassen. Ein solcher Funke kann bei einem Schließen bzw. Kurzschließen eines Stromkreises auftreten. Der zweite Detektor ist ausgebildet, eine Stromänderung bei einem entstehenden Öffnungsfunken (break-spark) zu erfassen. Ein solcher Funke kann bei einem Öffnen bzw. Trennen eines Stromkreises auftreten. Im Betrieb kann mit Hilfe der Detektoren eine eine Funkenentstehung wiedergebende Stromänderung zuverlässig erfasst werden, und kann die Steuereinheit hierauf basierend durch entsprechendes Ansteuern der Schalteinheit die elektrische Energieversorgung sicher abschalten.

Die vorgenannte Ausgestaltung kann in entsprechender Weise mit Bezug auf das Einspeisegerät des Systems zur Anwendung kommen. Hierzu ist gemäß einer weiteren Ausführungsform vorgesehen, dass die Einspeisegerät-Überwachungseinrichtung eine Einspeisegerät-Detektoreinrichtung zum Erfassen einer Stromänderung bei einer Funkenentstehung, eine Einspeisegerät-Steuereinheit und eine Einspeisegerät-Schalteinheit aufweist. Die Einspeisegerät-Steuereinheit ist ausgebildet, das Abschalten der Energieversorgung durch Ansteuern der Einspeisegerät-Schalteinheit auf der Grundlage einer mit Hilfe der Einspeisegerät-Detektoreinrichtung erfassten Stromänderung durchzuführen. Die Einspeisegerät-Detektoreinrichtung kann einen ersten Einspeisegerät-Detektor zum Erfassen einer Stromänderung bei einem entstehenden Schließfunken, und einen zweiten Einspeisegerät-Detektor zum Erfassen einer Stromänderung bei einem entstehenden Öffnungsfunken aufweisen.

In einer weiteren Ausführungsform weist das Überwachungsfeldgerät des Systems eine Weiterleitungsbegrenzungseinrichtung auf, welche ausgebildet ist, eine Begrenzung einer bei dem Weiterleiten der elektrischen Energie über den wenigstens einen Ausgangsanschluss übertragbaren elektrischen Leistung hervorzurufen. Hierdurch kann ein zuverlässiger und sicherer Betrieb des Systems begünstigt werden. Die Weiterleitungsbegrenzungseinrichtung kann der Überwachungseinrichtung des Überwachungsfeldgeräts vorgeordnet sein.

Eine zuverlässige Begrenzung kann gemäß einer weiteren Ausführungsform dadurch erzielt werden, dass die Weiterleitungsbegrenzungseinrichtung ausgebildet ist, eine Strombegrenzung und eine Spannungsbegrenzung zu bewirken. Zu diesem Zweck kann die Weiterleitungsbegrenzungseinrichtung elektrische Bauelemente wie zum Beispiel wenigstens einen Widerstand zur Strombegrenzung und wenigstens ein spannungsbegrenzendes Bauelement wie beispielsweise eine Zener-Diode oder einen Thyristor zur Spannungsbegrenzung aufweisen.

In einer weiteren Ausführungsform weist das Überwachungsfeldgerät des Systems eine Schalteinrichtung auf, mit deren Hilfe das Weiterleiten der elektrischen Energie über den wenigstens einen Ausgangsanschluss geschaltet werden kann. Mit Hilfe der Schalteinrichtung ist es möglich, den Eingangsanschluss und den wenigstens einen Ausgangsanschluss des Überwachungsfeldgeräts voneinander zu trennen, und das Weiterleiten der elektrischen Energie über den wenigstens einen Ausgangsanschluss zu steuern. Die Schalteinrichtung kann in diesem Zusammenhang zum Beispiel zur Kurzschlussisolation eingesetzt werden. Die Schalteinrichtung kann zwischen dem Eingangsanschluss und dem wenigstens einen Ausgangsanschluss bzw. zwischen dem Eingangsanschluss und der Überwachungseinrichtung angeordnet sein.

Das Überwachungsfeldgerät des Systems weist wenigstens einen, also einen oder mehrere Ausgangsanschlüsse auf. Bei einer Ausgestaltung mit mehreren Ausgangsanschlüssen kann das Überwachungsfeldgerät als Energieverteiler dienen und die elektrische Energie über mehrere Versorgungsleitungen an mehrere Feldgeräte weiterleiten. Auch können auf diese Weise mehrere Systemabschnitte durch das Überwachungsfeldgerät überwacht werden.

Im Hinblick auf eine Ausgestaltung des Überwachungsfeldgeräts mit mehreren Ausgangsanschlüssen können ferner folgende Ausgestaltungen in Betracht kommen. Das Überwachungsfeldgerät kann mehrere Überwachungseinrichtungen, also je Ausgangsanschluss eine zugeordnete Überwachungseinrichtung, aufweisen. Auf diese Weise kann die durch Weiterleiten der elektrischen Energie über die einzelnen Ausgangsanschlüsse bewirkte Energieversorgung mit Bezug auf jeden der Ausgangsanschlüsse separat überwacht werden. Die mehreren Überwachungseinrichtungen können jeweils zwischen dem Eingangsanschluss und dem zugehörigen Ausgangsanschluss angeordnet sein.

Das Überwachungsfeldgerät kann ferner mehrere Weiterleitungsbegrenzungseinrichtungen, also je Ausgangsanschluss und Überwachungseinrichtung eine zugeordnete Weiterleitungsbegrenzungseinrichtung, aufweisen. Auf diese Weise kann eine Begrenzung der übertragbaren elektrischen Leistung in Bezug auf jeden der Ausgangsanschlüsse separat erzielt werden. Die Weiterleitungsbegrenzungseinrichtungen können den zugehörigen Überwachungseinrichtungen vorgeordnet sein.

Das Überwachungsfeldgerät kann des Weiteren mehrere Schalteinrichtungen, also je Ausgangsanschluss und Überwachungseinrichtung eine zugeordnete Schalteinrichtung, aufweisen. Hierdurch kann das Weiterleiten der elektrischen Energie über die einzelnen Ausgangsanschlüsse gesteuert werden. Die Schalteinrichtungen können jeweils zwischen dem Eingangsanschluss und dem zugehörigen Ausgangsanschluss bzw. zwischen dem Eingangsanschluss und der zugehörigen Überwachungseinrichtung angeordnet sein.

Abgesehen von dem Überwachungsfeldgerät können auch weitere bzw. mehrere oder auch sämtliche Feldgeräte des Systems neben dem Eingangsanschluss wenigstens einen Ausgangsanschluss aufweisen. Hierbei können die betreffenden Feldgeräte zwischen dem Eingangsanschluss und dem wenigstens einen Ausgangsanschluss jeweils eine entsprechende Schalteinrichtung aufweisen, wodurch sich das Weiterleiten der elektrischen Energie über den wenigstens einen Ausgangsanschluss steuern lässt. Bei einer Ausgestaltung mit mehreren Ausgangsanschlüssen können die Feldgeräte als Energieverteiler dienen und die elektrische Energie über mehrere Versorgungsleitungen an mehrere Feldgeräte weiterleiten.

Eine Ansteuerung der wenigstens einen Schalteinrichtung eines Feldgeräts kann zum Beispiel mit Hilfe eines weiter unten beschriebenen Kommunikationscontrollers erfolgen.

Erfindungsgemäß weisen die Feldgeräte des Systems eine Entkopplungseinrichtung auf, welche ausgebildet ist, eine vorgegebene Eingangsimpedanz für das Erfassen der Funkenentstehung bereitzustellen. Auf diese Weise können die Feldgeräte ein bekanntes und vorhersagbares elektrisches Verhalten besitzen, was ein zuverlässiges und genaues Erfassen einer Funkenentstehung durch das Einspeisegerät und durch das wenigstens eine Überwachungsfeldgerät bei einem Fehlerfall möglich macht. Mit Hilfe der Entkopplungseinrichtung eines Feldgeräts kann unterdrückt werden, dass der Entkopplungseinrichtung nachgeordnete Komponenten bzw. Schaltungskomponenten des Feldgeräts das Erfassen der Funkenentstehung beeinflussen können.

Erfindungsgemäß ist die Entkopplungseinrichtung eines Feldgeräts mit dem zugehörigen Eingangsanschluss verbunden und diesem nachgeordnet. Die Entkopplungseinrichtung weist einen LC-Tiefpass mit einer Induktivität und wenigstens einer Kapazität auf. Ferner kann wenigstens ein Bauelement wie beispielsweise eine Diode zum Vorgeben einer Stromflussrichtung vorgesehen sein. Ein weiterer möglicher Bestandteil der Entkopplungseinrichtung ist eine Spannungsbegrenzungseinrichtung, zum Beispiel in Form einer aus spannungsbegrenzenden Bauelementen wie beispielsweisen Dioden aufgebauten Klemmschaltung, welche parallel zu der Induktivität geschaltet sein kann.

Erfindungsgemäß ist vorgesehen, dass bei dem wenigstens einen Überwachungsfeldgerät des Systems die zugehörige Entkopplungseinrichtung als Endabschluss bzw. Abschlussimpedanz eines überwachten Systemabschnitts des Systems dient. Der betreffende Systemabschnitt wird durch das dem Überwachungsfeldgerät vorgeordnete Einspeisegerät oder, bei einer Ausgestaltung des Systems mit mehreren Überwachungsfeldgeräten, durch ein dem betrachteten Überwachungsfeldgerät vorgeordnetes weiteres Überwachungsfeldgerät, überwacht.

Mit Hilfe einer einen Systemabschnitt abschließenden Entkopplungseinrichtung kann jeweils erzielt werden, dass der Entkopplungseinrichtung nachgeordnete Komponenten bzw. Schaltungskomponenten keinen Einfluss auf das Erfassen der Funkenentstehung bei dem überwachten Systemabschnitt haben. Erfindungsgemäß ist das wenigstens eine Überwachungsfeldgerät in diesem Zusammenhang derart ausgebildet, dass die Überwachungseinrichtung des Überwachungsfeldgeräts der Entkopplungseinrichtung nachgeordnet ist. In entsprechender Weise können, bei einer Ausgestaltung mit mehreren Überwachungseinrichtungen, die mehreren Überwachungseinrichtungen der Entkopplungseinrichtung nachgeordnet sein. Gleiches gilt für eine oder mehrere Weiterleitungsbegrenzungseinrichtungen. Hierdurch kann verhindert werden, dass es aufgrund der Überwachungseinrichtung(en) sowie Weiterleitungsbegrenzungseinrichtung(en) zu einer Beeinträchtigung in Bezug auf das Erfassen der Funkenentstehung kommt.

Im Hinblick auf verwendete Begriffe wie "vorgeordnet", "nachgeordnet" und "nachfolgend" wird darauf hingewiesen, dass sich diese Begriffe auf das Transportieren bzw. Weiterleiten der elektrischen Energie beziehen können.

In einer weiteren Ausführungsform weisen die Feldgeräte des Systems einen Einschaltstrombegrenzer auf, welcher ausgebildet ist, einen Einschaltstrom bei einem Beginn der elektrischen Energieversorgung zu begrenzen. Auf diese Weise kann vermieden werden, dass bei einem Beginn der elektrischen Energieversorgung ein hoher bzw. überhöhter Einschaltstrom bei einem oder mehreren Feldgeräten auftritt mit der Folge, dass ein fehlerhaftes Abschalten der elektrischen Energieversorgung durch das Einspeisegerät oder durch das wenigstens eine Überwachungsfeldgerät durchgeführt wird, obwohl keine Funkenentstehung vorliegt.

In einer weiteren Ausführungsform weisen die Feldgeräte des Systems ein internes Netzteil auf, welches über die zugeführte elektrische Energie elektrisch versorgt werden kann.

Mit Hilfe des internen Netzteils eines Feldgeräts kann wenigstens eine interne Einrichtung bzw. Komponente des Feldgeräts mit elektrischer Energie versorgt werden.

Das System kann nicht nur zur Anwendung kommen, um Feldkomponenten (Sensoren- und/oder Aktoren), welche an ein bzw. mehrere Feldgeräte angeschlossen sein können, energetisch zu versorgen, sondern auch um eine Datenkommunikation und Steuerung mit Bezug auf diese Komponenten durchzuführen. Das System kann in diesem Sinne als Automatisierungssystem ausgestaltet sein. In diesem Zusammenhang können im Folgenden erläuterte Ausgestaltungen zur Anwendung kommen.

In einer weiteren Ausführungsform sind die Feldgeräte des Systems zum Durchführen einer Datenkommunikation ausgebildet, indem die Feldgeräte wenigstens einen Kommunikationsanschluss zum Anschließen einer Datenleitung zum Empfangen und/oder Senden von Datensignalen und einen mit dem wenigstens einen Kommunikationsanschluss verbundenen Kommunikationscontroller aufweisen. In dieser Ausgestaltung kann der Kommunikationscontroller, über welchen die Datenkommunikation des zugehörigen Feldgeräts gesteuert werden kann, Datensignale über den Kommunikationsanschluss empfangen und/oder senden.

Innerhalb der Feldgeräte kann die Datenkommunikation u.a. über interne Datenverbindungen bzw. Datenleitungen mit entsprechenden elektrischen Leitern erfolgen. Die elektrischen Leiter können zum Beispiel in Form von Leiterbahnen vorliegen.

Auch außerhalb der Feldgeräte bzw. zwischen den Feldgeräten untereinander kann die Datenkommunikation über elektrische Leiter bzw. Datenleitungen mit elektrischen Leitern erfolgen. Anstelle die Datenkommunikation zwischen den Feldgeräten in elektrischer Form durchzuführen, kann ferner eine optische Datenkommunikation mit Hilfe von Glasfasern bzw. glasfaserbasierten Datenleitungen in Betracht kommen.

In einer weiteren Ausführungsform ist bei dem wenigstens einen mit der Anschlusseinrichtung versehenen Feldgerät der Kommunikationscontroller über eine Kommunikationsverbindung mit der Anschlusseinrichtung verbunden, um Datensignale über die Anschlusseinrichtung zu empfangen und/oder zu senden. Hierbei kann über das betreffende Feldgerät bzw. dessen Kommunikationscontroller eine Datenkommunikation mit wenigstens einer an die Anschlusseinrichtung über eine Ausgangsleitung angeschlossenen Feldkomponente (Sensor bzw. Aktor) durchgeführt werden. Wie oben erläutert wurde, können mehrere oder auch sämtliche Feldgeräte des Systems eine Anschlusseinrichtung aufweisen, so dass über die jeweiligen Feldgeräte bzw. deren Kommunikationscontroller eine Datenkommunikation mit an die Anschlusseinrichtungen über Ausgangsleitungen angeschlossenen Feldkomponenten (Sensoren und/oder Aktoren) erfolgen kann. Es können zum Beispiel Sensordaten bzw. Sensorsignale von Sensoren ausgelesen und über die Feldgeräte weitergeleitet werden. Des Weiteren können Steuerdaten bzw. Steuersignale an Aktoren übertragen werden.

Das System kann in diesem Zusammenhang ferner eine übergeordnete Steuervorrichtung aufweisen, welche in geeigneter Weise mit den Feldgeräten verbunden sein kann, um eine Datenkommunikation mit den Feldgeräten bzw. mit deren Kommunikationscontrollern durchzuführen. Auf diese Weise können die Feldgeräte bzw. deren Kommunikationscontroller Datensignale wie beispielsweise Sensorsignale zu der übergeordneten Steuervorrichtung übertragen und/oder Datensignale wie beispielsweise Steuersignale von der übergeordneten Steuervorrichtung empfangen. Die Datenkommunikation kann dabei zwischen den Feldgeräten untereinander sowie zwischen den Feldgeräten und der übergeordneten Steuervorrichtung erfolgen, wobei Letzteres gegebenenfalls über das Einspeisegerät stattfinden kann.

Es ist möglich, dass wenigstens ein Feldgerät des Systems keine Anschlusseinrichtung aufweist, und dadurch nicht mit einer Feldkomponente verbunden sein kann. Eine solche Ausgestaltung ist zum Beispiel in Bezug auf das wenigstens eine Überwachungsfeldgerät denkbar. Hierbei kann das betreffende Feldgerät, neben der Weiterleitung von elektrischer Energie und gegebenenfalls der Überwachung, dazu genutzt werden, um eine Datenkommunikation mit wenigstens einem weiteren Feldgerät und gegebenenfalls mit dem Einspeisegerät durchzuführen.

Wenigstens ein Feldgerät bzw. mehrere oder sämtliche Feldgeräte des Systems können des Weiteren mehrere oder zwei mit dem zugehörigen Kommunikationscontroller verbundene Kommunikationsanschlüsse aufweisen. Auf diese Weise kann eine Datenkommunikation ferner jeweils über zwei durch eine Datenleitung verbundene Feldgeräte oder über mehrere durch Datenleitungen verbundene Feldgeräte erfolgen.

Mit Bezug auf die Anschlusseinrichtung, welche bei wenigstens einem Feldgerät vorhanden ist, kann ferner folgende Ausgestaltung zur Anwendung kommen. In einer weiteren Ausführungsform weist die Anschlusseinrichtung einen Eingabe/Ausgabe-Controller auf, welcher dazu ausgebildet ist, ein Empfangen und/oder Senden von Datensignalen über die Anschlusseinrichtung zu steuern. Auf diese Weise ist eine zuverlässige Datenkommunikation mit wenigstens einer an die Anschlusseinrichtung über eine Ausgangsleitung angeschlossenen Feldkomponente (Sensor bzw. Aktor) möglich. Der Eingabe/Ausgabe-Controller kann über die Kommunikationsverbindung mit dem zugehörigen Kommunikationscontroller des Feldgeräts kommunizieren, um entsprechende Datensignale zu dem Kommunikationscontroller zu senden bzw. von diesem zu empfangen.

Sofern die Feldgeräte wie vorstehend beschrieben zum Durchführen einer Datenkommunikation ausgebildet sind, können folgende Ausgestaltungen zum Einsatz kommen, um den Verkabelungsaufwand möglichst gering zu halten.

In einer weiteren Ausführungsform ist der Eingangsanschluss der Feldgeräte in Form eines den wenigstens einen Kommunikationsanschluss umfassenden Hybridanschlusses ausgebildet, an welchem eine in Form einer Hybridleitung ausgebildete Versorgungsleitung angeschlossen werden kann. In dieser Ausgestaltung kann der Eingangsanschluss dazu genutzt werden, um elektrische Energie zur Energieversorgung einzuspeisen und Datensignale zu übertragen. Die an den Eingangsanschluss angeschlossene Versorgungsleitung kann gleichzeitig als Datenleitung fungieren, über welche elektrische Energie zur Energieversorgung und Datensignale übertragen werden können.

Eine Ausgestaltung in Form eines Hybridanschlusses kann auch in Bezug auf den wenigstens einen Ausgangsanschluss in Betracht kommen, welcher bei dem wenigstens eines Überwachungsfeldgerät vorhanden ist. Auch weitere bzw. mehrere oder sämtliche Feldgeräte des Systems können wie oben angegeben wenigstens einen Ausgangsanschluss aufweisen. Hierzu ist gemäß einer weiteren Ausführungsform vorgesehen, dass der wenigstens eine Ausgangsanschluss in Form eines einen Kommunikationsanschluss umfassenden weiteren Hybridanschlusses ausgebildet ist, an welchem eine in Form einer Hybridleitung ausgebildete weitere Versorgungsleitung angeschlossen werden kann. In dieser Ausgestaltung kann der Ausgangsanschluss dazu genutzt werden, um elektrische Energie zur Energieversorgung weiterzuleiten und Datensignale zu übertragen. Die an den Ausgangsanschluss angeschlossene Versorgungsleitung kann gleichzeitig als Datenleitung fungieren, über welche elektrische Energie zur Energieversorgung und Datensignale übertragen werden können.

Hinsichtlich des wenigstens einen Ausgangsleitungsanschlusses einer Anschlusseinrichtung, welche bei wenigstens einem Feldgerät vorgesehen ist, ist ebenfalls eine Ausgestaltung als Hybridanschluss denkbar, um elektrische Energie und Datensignale übertragen zu können. Eine hieran angeschlossene Ausgangsleitung, welche mit einer Feldkomponente (Sensor bzw. Aktor) verbunden sein kann, kann als Hybridleitung zur Übertragung von elektrischer Energie und Datensignalen ausgeführt sein.

Im Hinblick auf das oben beschriebene Anwendungsszenario, in welchem die Feldgeräte in einem explosionsgefährdeten Bereich (zum Beispiel Zone 1/21 gemäß der ATEX-Richtlinie) und die Feldkomponenten (Sensoren und/oder Aktoren) in einem stärker explosionsgefährdeten Bereich (zum Beispiel Zone 0/20 gemäß der ATEX-Richtlinie) angeordnet sind, können ferner folgende Ausgestaltungen in Betracht kommen, um eine hohe Sicherheit des Systems zu erzielen.

In einer weiteren Ausführungsform weist das wenigstens eine mit der Anschlusseinrichtung versehene Feldgerät einen ersten Gerätebereich und einen zweiten Gerätebereich auf. Der erste Gerätebereich weist den Eingangsanschluss, und der zweite Gerätebereich weist die Anschlusseinrichtung auf. Die von dem Einspeisegerät bereitgestellte elektrische Energie kann über den Eingangsanschluss dem ersten Gerätebereich zugeführt, über eine elektrische Energieversorgungsverbindung von dem ersten Gerätebereich zu dem zweiten Gerätebereich übertragen, und über die Anschlusseinrichtung an wenigstens eine Feldkomponente (Sensor bzw. Aktor) weitergeleitet werden. Die elektrische Energieversorgungsverbindung des ersten und zweiten Gerätebereichs weist eine Leistungsbegrenzungseinrichtung auf, welche ausgebildet ist, eine Begrenzung einer von dem ersten Gerätebereich zu dem zweiten Gerätebereich im Rahmen der Energieübertragung übertragbaren elektrischen Leistung hervorzurufen.

Wie oben angegeben wurde, kann die Anschlusseinrichtung wenigstens einen Ausgangsleitungsanschluss zum Anschließen wenigstens einer Ausgangsleitung aufweisen, so dass eine Verbindung mit wenigstens einer Feldkomponente (Sensor bzw. Aktor) hergestellt sein kann. In der vorgenannten Ausführungsform kann mit Hilfe der Leistungsbegrenzungseinrichtung eine Begrenzung der von dem ersten Gerätebereich zu dem zweiten Gerätebereich übertragbaren bzw. maximal übertragbaren elektrischen Leistung bewirkt werden. Hierdurch kann sichergestellt werden, dass die an der Anschlusseinrichtung bzw. an dem wenigstens einen Ausgangsleitungsanschluss des zweiten Gerätebereichs zur Verfügung stehende elektrische Energie limitiert ist und nicht ausreicht, um im Fehlerfall einen Funken bzw. Zündfunken im Bereich der Anschlusseinrichtung bzw. des wenigstens einen Ausgangsleitungsanschlusses, und damit auch im Bereich einer hieran angeschlossenen Ausgangsleitung und einer hiermit verbundenen Feldkomponente, zu erzeugen.

Die Leistungsbegrenzungseinrichtung kann ausgebildet sein, eine Strombegrenzung und eine Spannungsbegrenzung zu bewirken. Hierfür kann die Leistungsbegrenzungseinrichtung elektrische Bauelemente wie zum Beispiel wenigstens einen Widerstand zur Strombegrenzung und wenigstens ein spannungsbegrenzendes Bauelement wie beispielsweise eine Zener-Diode oder einen Thyristor zur Spannungsbegrenzung aufweisen.

Sofern mehrere oder sämtliche Feldgeräte des Systems eine Anschlusseinrichtung aufweisen, kann die vorgenannte Ausgestaltung mit dem ersten und zweiten Gerätebereich und der Leistungsbegrenzungseinrichtung bei allen mit der Anschlusseinrichtung ausgestatteten Feldgeräten vorhanden sein. Entsprechendes gilt für im Folgenden beschriebene Merkmale.

Je nach Ausgestaltung kann der erste Gerätebereich, zusätzlich zu dem Eingangsanschluss, wenigstens eine weitere der oben genannten Komponenten, zum Beispiel wenigstens einen Ausgangsanschluss, wenigstens eine Schalteinrichtung, eine Entkopplungseinrichtung, einen Einschaltstrombegrenzer, ein internes Netzteil, einen Kommunikationscontroller und/oder wenigstens einen Kommunikationsanschluss aufweisen. Auch für das wenigstens eine Überwachungsfeldgerät kann, sofern dieses eine Anschlusseinrichtung aufweist, eine Ausgestaltung mit dem ersten und zweiten Gerätebereich und der Leistungsbegrenzungseinrichtung in Betracht kommen. Hierbei kann der erste Gerätebereich zusätzlich die bzw. wenigstens eine Überwachungseinrichtung sowie gegebenenfalls wenigstens eine Weiterleitungsbegrenzungseinrichtung aufweisen.

Das wenigstens eine bzw. mehrere Feldgeräte, welche mit dem ersten und zweiten Gerätebereich ausgestaltet sind, können ferner eine galvanische Trennung aufweisen. Eine galvanische Trennung kann in dem ersten Gerätebereich bzw. in der elektrischen Energieversorgungsverbindung des ersten und zweiten Gerätebereichs und/oder in der Leistungsbegrenzungseinrichtung ausgebildet sein. Hierdurch kann die dem ersten Gerätebereich zugeführte elektrische Energie auf getrennten elektrischen Stromkreisen geführt werden, was einen zuverlässigen und sicheren Betrieb des Systems begünstigt. Zusätzlich oder alternativ kann eine galvanische Trennung in dem Einspeisegerät ausgebildet sein.

Im Hinblick auf die oben erläuterte Datenkommunikation kann, bei einer Ausgestaltung eines bzw. mehrerer Feldgeräte mit dem ersten und zweiten Gerätebereich, ferner Folgendes in Betracht kommen. Wie oben angegeben wurde, kann der Kommunikationscontroller über eine Kommunikationsverbindung mit der Anschlusseinrichtung verbunden sein. Der Kommunikationscontroller kann Bestandteil des ersten Gerätebereichs, und die Anschlusseinrichtung mit dem wenigstens einen Ausgangsleitungsanschluss kann Bestandteil des zweiten Gerätebereichs sein.

In einer weiteren Ausführungsform weist die Kommunikationsverbindung des Kommunikationscontrollers und der Anschlusseinrichtung eine Barriereeinrichtung auf, welche ausgebildet ist, eine Begrenzung einer von dem Kommunikationscontroller zu der Anschlusseinrichtung bei einer Datenkommunikation übertragbaren elektrischen Leistung und/oder eine galvanische Trennung hervorzurufen. Hierdurch kann sichergestellt werden, dass aufgrund der Datenkommunikation kein Funke bzw. Zündfunke im Bereich der Anschlusseinrichtung bzw. des wenigstens einen Ausgangsleitungsanschlusses, und damit auch im Bereich einer hieran angeschlossenen Ausgangsleitung und einer hiermit verbundenen Feldkomponente (Sensor bzw. Aktor) hervorgerufen werden kann.

In einer weiteren Ausführungsform ist zwischen dem Kommunikationscontroller und dem wenigstens einen Kommunikationsanschluss der Feldgeräte eine physikalische Schnittstelle angeordnet. Mit Hilfe der physikalischen Schnittstelle, welche auch als PHY bezeichnet werden kann und welche in Form eines physikalischen Schnittstellenbausteins verwirklicht sein kann, kann eine Verarbeitung in Form einer Kodierung bzw. Dekodierung von Datensignalen erfolgen.

In einer weiteren Ausführungsform ist zusätzlich oder alternativ zwischen dem Kommunikationscontroller und dem wenigstens einen Kommunikationsanschluss der Feldgeräte eine Barriereschaltung angeordnet, welche ausgebildet ist, eine Begrenzung einer zu dem Kommunikationsanschluss bei einer Datenkommunikation übertragbaren elektrischen Leistung und/oder eine galvanische Trennung hervorzurufen. Mit Hilfe der Barriereschaltung kann erzielt werden, dass aufgrund der Datenkommunikation kein Funke bzw. Zündfunke im Bereich des Kommunikationsanschlusses, und damit auch im Bereich einer hieran angeschlossenen Daten- bzw. Versorgungsleitung, hervorgerufen werden kann.

Mit Bezug auf eine optische glasfaserbasierte Datenkommunikation, wie sie oben angedeutet wurde, kann Folgendes in Betracht kommen. In einer weiteren Ausführungsform ist zusätzlich oder alternativ zwischen dem Kommunikationscontroller und dem wenigstens einen Kommunikationsanschluss der Feldgeräte ein optischer Sendeempfänger bzw. Transceiver angeordnet, welcher ausgebildet ist, optische Datensignale in elektrische Datensignale und/oder elektrische Datensignale in optische Datensignale umzusetzen. Dabei bezieht sich die Umsetzung in elektrische Datensignale auf das Empfangen, und die Umsetzung in optische Datensignale auf das Senden von Datensignalen über den Kommunikationsanschluss.

Bei einer Ausgestaltung eines Feldgeräts mit mehreren oder zwei Kommunikationsanschlüssen kann zwischen jedem der Kommunikationsanschlüsse und dem Kommunikationscontroller eine physikalische Schnittstelle und/oder eine Barriereschaltung angeordnet sein. Mit Bezug auf eine optische Datenkommunikation kann zwischen jedem der Kommunikationsanschlüsse und dem Kommunikationscontroller eine physikalische Schnittstelle und/oder ein optischer Transceiver angeordnet sein.

Die Feldgeräte können ferner wie folgt ausgeführt sein. In einer weiteren Ausführungsform ist der Eingangsanschluss und, sofern vorhanden, wenigstens ein Ausgangsanschluss, gemäß einer ersten Zündschutzart ausgebildet. Bei wenigstens einem Feldgerät, welches den ersten Gerätebereich und den zweiten Gerätebereich mit der Anschlusseinrichtung aufweist, ist der wenigstens eine Ausgangsleitungsanschluss der Anschlusseinrichtung gemäß einer zweiten Zündschutzart ausgebildet. Die zweite Zündschutzart entspricht einem größeren Schutzniveau als die erste Zündschutzart.

Die zweite Zündschutzart kann die Zündschutzart Eigensicherheit Ex ia, und die erste Zündschutzart kann die Zündschutzart Eigensicherheit Ex ib sein. Zu diesem Zweck können im Bereich der jeweiligen Anschlüsse vorhandene Bestandteile wie interne Komponenten und elektrische Leiter zu den Zündschutzarten korrespondierende Ausgestaltungen, zum Beispiel im Hinblick auf Abstände und Redundanzen, aufweisen. Auch die Überwachungsfunktion des Einspeisegeräts und des wenigstens einen Überwachungsfeldgeräts, sowie die Leistungslimitierung aufgrund der Leistungsbegrenzungseinrichtung, können zu den vorgenannten Eigensicherheiten Ex ia und Ex ib der Anschlüsse beitragen.

Die Feldgeräte können des Weiteren mit einer Vergusskapselung ausgebildet sein. Hierbei können die Feldgeräte bzw. deren Gehäuse mit einer Vergussmasse verfüllt sein, was das Eindringen eines explosionsfähigen Gemisches in die Feldgeräte verhindern kann. Auf diese Weise können die Feldgeräte gemäß der Zündschutzart Ex mb ausgestaltet sein. Es ist ferner eine weitere bzw. äquivalente Schutzart für die Feldgeräte möglich, zum Beispiel eine Ausgestaltung mit einer druckfesten Kapselung. Hierdurch können die Feldgeräte gemäß der Zündschutzart Ex db ausgebildet sein.

Mit Bezug auf das Einspeisegerät des Systems sind ferner folgende Ausgestaltungen denkbar.

Das Einspeisegerät kann einen Stromversorgungseingang aufweisen, über welchen das Einspeisegerät mit einer Stromquelle bzw. Gleichstromquelle elektrisch verbunden sein kann, um auf diese Weise durch die Stromquelle elektrisch gespeist zu werden. Das Einspeisegerät kann ferner eine Einspeisegerät-Begrenzungseinrichtung aufweisen, welche ausgebildet ist, eine Begrenzung der dem Einspeisegerät über den Stromversorgungseingang zugeführten elektrischen Leistung hervorzurufen. Auf diese Weise kann gleichzeitig die durch das Einspeisegerät zur Energieversorgung der Feldgeräte bereitgestellte elektrische Leistung limitiert werden. Die Einspeisegerät-Begrenzungseinrichtung kann ausgebildet sein, eine Strombegrenzung und eine Spannungsbegrenzung zu bewirken.

Wie oben angedeutet wurde, kann das Einspeisegerät eine galvanische Trennung aufweisen. Die galvanische Trennung kann in der Einspeisegerät-Begrenzungseinrichtung ausgebildet sein.

Das Einspeisegerät kann ferner einen Einspeisegerät-Ausgangsanschluss zum Anschließen einer Versorgungsleitung aufweisen. Über diese Versorgungsleitung kann das Einspeisegerät mit einem der Feldgeräte verbunden sein.

Hinsichtlich der Datenkommunikation kann das System wie oben beschrieben eine übergeordnete Steuervorrichtung aufweisen. In diesem Zusammenhang kann es in Betracht kommen, dass die übergeordnete Steuervorrichtung über das Einspeisegerät mit den Feldgeräten verbunden ist, um mit diesen zu kommunizieren bzw. Datensignale auszutauschen.

Das Einspeisegerät kann zu diesem Zweck zum Durchführen einer Datenkommunikation ausgebildet sein. Hierfür kann das Einspeisegerät einen Kommunikationseingang aufweisen, über welchen das Einspeisegerät mit der übergeordneten Steuervorrichtung verbunden sein kann, um Datensignale von der Steuervorrichtung zu empfangen und/oder an die Steuervorrichtung zu senden. Das Einspeisegerät kann ferner einen Einspeisegerät-Kommunikationscontroller, zwei physikalische Einspeisegerät-Schnittstellen zur Kodierung bzw. Dekodierung von Datensignalen und einen Einspeisegerät-Kommunikationsanschluss aufweisen. Über den Einspeisegerät-Kommunikationsanschluss und eine hieran angeschlossene Datenleitung kann das Einspeisegerät mit einem der Feldgeräte des Systems verbunden sein, um Datensignale zu dem Feldgerät zu senden und/oder von diesem zu empfangen. Eine erste der physikalischen Einspeisegerät-Schnittstellen kann zwischen dem Kommunikationseingang und dem Einspeisegerät-Kommunikationscontroller, und die zweite physikalische Einspeisegerät-Schnittstelle kann zwischen dem Einspeisegerät-Kommunikationsanschluss und dem Einspeisegerät-Kommunikationscontroller angeordnet sein.

Das Einspeisegerät kann ferner eine Einspeisegerät-Barriereschaltung aufweisen. Die Einspeisegerät-Barriereschaltung kann zwischen dem Einspeisegerät-Kommunikationsanschluss und der zweiten physikalischen Einspeisegerät-Schnittstelle angeordnet sein. Die Einspeisegerät-Barriereschaltung kann ausgebildet sein, eine Begrenzung der bei einer Datenkommunikation übertragbaren elektrischen Leistung und/oder eine galvanische Trennung hervorzurufen.

Für das Einspeisegerät kann, entsprechend den Feldgeräten, eine Ausgestaltung zum Durchführen einer optischen glasfaserbasierten Datenkommunikation in Betracht kommen. Hierbei kann das Einspeisegerät einen optischen Einspeisegerät-Transceiver aufweisen, welcher zwischen dem Einspeisegerät-Kommunikationscontroller und dem Einspeisegerät-Kommunikationsanschluss angeordnet sein kann. Auf diese Weise kann das Einspeisegerät optische Datensignale von einem Feldgerät empfangen und/oder an dieses senden. Das Einspeisegerät kann ferner einen weiteren optischen Einspeisegerät-Transceiver aufweisen, welcher zwischen dem Einspeisegerät-Kommunikationscontroller und dem Kommunikationseingang angeordnet sein kann. Auf diese Weise kann das Einspeisegerät optische Datensignale von der übergeordneten Steuervorrichtung empfangen und/oder an diese senden. Der bzw. die Einspeisegerät-Transceiver können ausgebildet sein, optische Datensignale in elektrische Datensignale und/oder elektrische Datensignale in optische Datensignale umzusetzen. Dabei bezieht sich die Umsetzung in elektrische Datensignale auf das Empfangen, und die Umsetzung in optische Datensignale auf das Senden von Datensignalen über den Einspeisegerät-Kommunikationsanschluss bzw. Kommunikationseingang des Einspeisegeräts.

Entsprechend den Feldgeräten kann der Einspeisegerät-Ausgangsanschluss in Form eines den Einspeisegerät-Kommunikationsanschluss umfassenden Hybridanschlusses ausgebildet sein, an welchem eine in Form einer Hybridleitung ausgebildete Versorgungsleitung angeschlossen werden kann. Hierdurch können elektrische Energie zur Energieversorgung und Datensignale über die Versorgungsleitung übertragen werden.

Das Einspeisegerät ist ausgebildet, eine elektrische Energie zur elektrischen Energieversorgung der Feldgeräte einschließlich des Überwachungsfeldgeräts bereitzustellen und eine Funkenentstehung bei der elektrischen Energieversorgung zu erfassen, um hierauf basierend die elektrische Energieversorgung abzuschalten. Das Überwachungsfeldgerät weist einen Eingangsanschluss zum Anschließen einer Versorgungsleitung auf, über welchen die von dem Einspeisegerät bereitgestellte elektrische Energie dem Überwachungsfeldgerät zugeführt werden kann. Das Überwachungsfeldgerät ist zur elektrischen Energieversorgung wenigstens eines nachfolgenden Feldgeräts und zur Überwachung ausgebildet. Das Überwachungsfeldgerät weist wenigstens einen Ausgangsanschluss zum Anschließen einer weiteren Versorgungsleitung auf, über welchen die elektrische Energie zur elektrischen Energieversorgung wenigstens eines nachfolgenden Feldgeräts weitergeleitet werden kann. Das Überwachungsfeldgerät weist ferner eine Überwachungseinrichtung auf, welche ausgebildet ist, eine Funkenentstehung bei der elektrischen Energieversorgung wenigstens eines nachfolgenden Feldgeräts zu erfassen und hierauf basierend die elektrische Energieversorgung abzuschalten.

Für das vorgeschlagene Überwachungsfeldgerät können oben beschriebene Ausführungsformen, Merkmale und Details in entsprechender Weise zur Anwendung kommen. Bei einem Einsatz des Überwachungsfeldgeräts in einem System können in gleicher Weise oben erläuterte Vorteile erzielt werden. Durch das Überwachungsfeldgerät kann, zusammen mit dem Einspeisegerät, unterdrückt werden, dass bei einem Fehlerfall ein Funke bzw. Zündfunke mit für eine Zündung ausreichender Energie im Bereich von Eingangs- und Ausgangsanschlüssen von Feldgeräten sowie im Bereich von an die Feldgeräte angeschlossenen Versorgungsleitungen erzeugt wird. Die Überwachung kann ferner abschnittsweise bzw. segmentweise erfolgen. Hierbei können durch das Einspeisegerät und durch das Überwachungsfeldgerät unterschiedliche Systemabschnitte des Systems überwacht werden. Parameter wie Leitungslängen von Versorgungsleitungen, kapazitive und/oder induktive Effekte und hiermit verbundene Einschränkungen können sich dabei auf die einzelnen Systemabschnitte beziehen, was eine Ausgestaltung des Systems mit relativ großen Leitungslängen möglich macht.

Die vorstehend erläuterten und/oder in den Unteransprüchen wiedergegebenen vorteilhaften Aus- und Weiterbildungen der Erfindung können - außer zum Beispiel in Fällen eindeutiger Abhängigkeiten oder unvereinbarer Alternativen - einzeln oder aber auch in beliebiger Kombination miteinander zur Anwendung kommen.

Die oben beschriebenen Eigenschaften, Merkmale und Vorteile dieser Erfindung, sowie die Art und Weise, wie diese erreicht werden, werden klarer und deutlicher verständlich in Zusammenhang mit der folgenden Beschreibung von Ausführungsbeispielen, die im Zusammenhang mit den schematischen Zeichnungen näher erläutert werden. Es zeigen:
Figur 1 ein System umfassend ein Einspeisegerät, mehrere Feldgeräte und mehrere Feldkomponenten;
Figur 2 ein Anwendungsszenario des Systems, in welchem sich das Einspeisegerät, die Feldgeräte und die Feldkomponenten in unterschiedlichen Bereichen befinden;
Figur 3 eine Darstellung des Einspeisegeräts;
Figur 4 eine Darstellung eines Feldgeräts;
Figur 5 eine Darstellung eines weiteren Feldgeräts, welches als Überwachungsfeldgerät ausgebildet ist, wobei das Überwachungsfeldgerät eine Ausgestaltung mit einem Eingangsanschluss, einem Ausgangsanschluss und einer Anschlusseinrichtung zum Anschließen von Feldkomponenten besitzt;
Figur 6 eine Darstellung des Systems mit mehreren überwachten Systemabschnitten;
Figur 7 eine Entkopplungseinrichtung eines Feldgeräts;
Figur 8 eine Weiterleitungsbegrenzungseinrichtung eines Überwachungsfeldgeräts;
Figur 9 eine Darstellung eines Überwachungsfeldgeräts gemäß einer weiteren Ausgestaltung, in welcher das Überwachungsfeldgerät einen Eingangsanschluss und einen Ausgangsanschluss aufweist;
Figur 10 eine Darstellung eines Überwachungsfeldgeräts gemäß einer weiteren Ausgestaltung, in welcher das Überwachungsfeldgerät einen Eingangsanschluss, mehrere Ausgangsanschlüsse und eine Anschlusseinrichtung zum Anschließen von Feldkomponenten aufweist; und
Figur 11 eine Darstellung eines Überwachungsfeldgeräts gemäß einer weiteren Ausgestaltung, in welcher das Überwachungsfeldgerät einen Eingangsanschluss und mehrere Ausgangsanschlüsse aufweist.

Auf der Grundlage der folgenden schematischen Figuren werden Ausgestaltungen eines Systems beschrieben, mit dessen Hilfe Feldkomponenten wie Aktoren und Sensoren energetisch versorgt sowie eine Kommunikation mit den Feldkomponenten bzw. eine Steuerung der Feldkomponenten vorgenommen werden kann. Die Feldkomponenten können sich dabei in einem explosionsgefährdeten Bereich befinden.

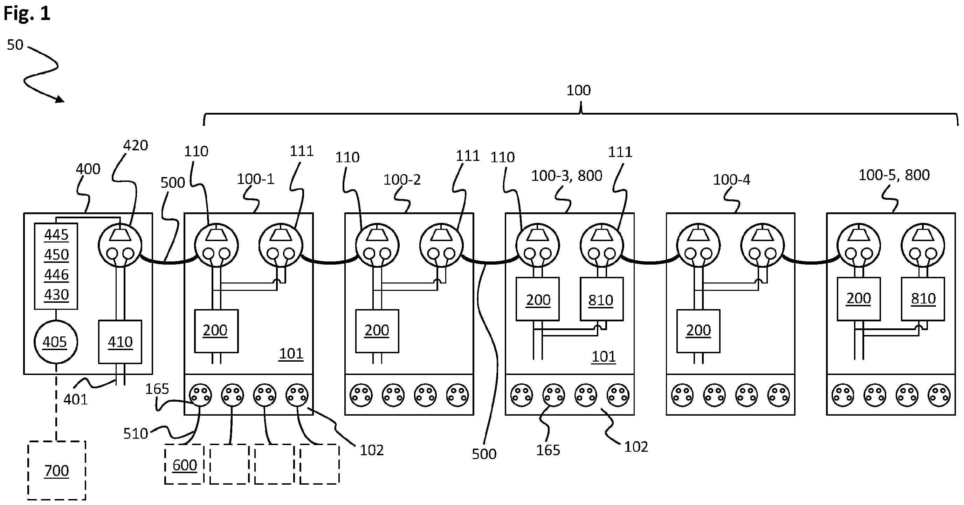

Zur weiteren Veranschaulichung zeigt Figur 1 eine schematische Darstellung eines Systems 50. Das System 50 umfasst ein Einspeisegerät 400, mehrere mit dem Einspeisegerät 400 elektrisch verbundene Feldgeräte 100, und mehrere mit den Feldgeräten 100 elektrisch verbundene Feldkomponenten 600. Hinsichtlich der Feldkomponenten 600 ist die Verbindung lediglich in Bezug auf eines der Feldgeräte 100 angedeutet. Das Einspeisegerät 400 ist u.a. dazu ausgebildet, eine elektrische Energie zur elektrischen Energieversorgung der Feldgeräte 100 und auch der Feldkomponenten 600 bereitzustellen. Bei der elektrischen Energie kann es sich um einen elektrischen Gleichstrom handeln.

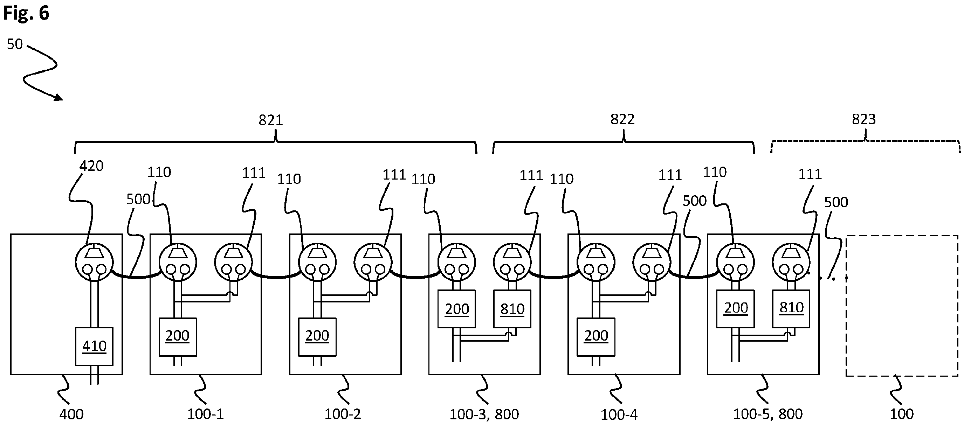

Gemäß der in Figur 1 gezeigten Ausgestaltung umfasst das System 50 eine Reihe bzw. einen Strang aus fünf Feldgeräten 100, welche zur Unterscheidung in Figur 1 mit den Bezugszeichen 100-1, 100-2, 100-3, 100-4, 100-5 versehen sind, und welche im Folgenden auch als erstes Feldgerät 100-1, zweites Feldgerät 100-2, drittes Feldgerät 100-3, viertes Feldgerät 100-4 und fünftes Feldgerät 100-5 bezeichnet werden. Abgesehen hiervon kann das System 50 eine andere bzw. größere Anzahl an Feldgeräten 100 umfassen (vgl. Figur 6).

Die elektrische Verbindung zwischen dem Einspeisegerät 400 und den Feldgeräten 100 bzw. zwischen den Feldgeräten 100 untereinander ist über Versorgungsleitungen 500 hergestellt. Wie in Figur 1 dargestellt ist, ist das Einspeisegerät 400 mit dem ersten Feldgerät 100-1 über eine Versorgungsleitung 500 verbunden. Über jeweils eine weitere Versorgungsleitung 500 ist das erste Feldgerät 100-1 mit dem zweiten Feldgerät 100-2, ist das zweite Feldgerät 100-2 mit dem dritten Feldgerät 100-3, ist das dritte Feldgerät 100-3 mit dem vierten Feldgerät 100-4, und ist das vierte Feldgerät 100-4 mit dem fünften Feldgerät 100-5 verbunden.

Die Versorgungsleitungen 500 sind an entsprechende Anschlüsse des Einspeisegeräts 400 und der Feldgeräte 100 angeschlossen. Das Einspeisegerät 400 weist einen Einspeisegerät-Ausgangsanschluss 420 auf, über welchen die von dem Einspeisegerät 400 bereitgestellte elektrische Energie zur Energieversorgung der Feldgeräte 100 ausgegeben werden kann. Die Feldgeräte 100 weisen einen Eingangsanschluss 110 und einen Ausgangsanschluss 111 auf. Der Eingangsanschluss 110 der Feldgeräte 100 dient zum Einspeisen von elektrischer Energie in die Feldgeräte 100, und der Ausgangsanschluss 111 zum Weiterleiten der eingebrachten elektrischen Energie bzw. eines Teils hiervon an ein weiteres Feldgerät 100, um dieses elektrisch zu versorgen.

Die das Einspeisegerät 400 mit dem ersten Feldgerät 100-1 verbindende Versorgungsleitung 500 ist an den Einspeisegerät-Ausgangsanschluss 420 des Einspeisegeräts 400 und an den Eingangsanschluss 110 des ersten Feldgeräts 100-1 angeschlossen. Mit Bezug auf die Verbindung der ersten bis fünften Feldgeräte 100-1, 100-2, 100-3, 100-4, 100-5 sind die Versorgungsleitungen 500 jeweils an einen Ausgangsanschluss 111 und einen Eingangsanschluss 110 von zwei aufeinanderfolgenden Feldgeräten 100 der ersten bis fünften Feldgeräte 100-1, 100-2, 100-3, 100-4, 100-5 angeschlossen. Die Versorgungsleitungen 500 können elektrische Leiter bzw. Adern für den Transport von elektrischer Energie und Steckverbinder mit entsprechenden Kontakten an deren Enden aufweisen (nicht dargestellt), mit deren Hilfe die Versorgungsleitungen 500 zum Anschließen an die jeweiligen Anschlüsse gesteckt werden können.

Die Feldgeräte 100 sind ferner ausgebildet, eine elektrische Verbindung mit den externen Feldkomponenten 600 des Systems 50 herzustellen, wie in Figur 1 lediglich mit Bezug auf das erste Feldgerät 100-1 veranschaulicht ist. Auf diese Weise können die Feldkomponenten 600 über die von dem Einspeisegerät 400 bereitgestellte und zu den Feldgeräten 100 übertragene elektrische Energie elektrisch versorgt werden. Bei den Feldkomponenten 600 kann es sich um Sensoren und/oder Aktoren des Systems 50 handeln.

Die Feldgeräte 100 des in Figur 1 gezeigten Systems 50 weisen mehrere Ausgangsleitungsanschlüsse 165 zum Anschließen von Ausgangsleitungen 510 auf. Abgesehen von der in Figur 1 gezeigten Ausgestaltung mit vier Ausgangsleitungsanschlüssen 165 je Feldgerät 100 können die Feldgeräte 100 mit einer anderen bzw. größeren Anzahl an Ausgangsleitungsanschlüssen 165 ausgebildet sein (nicht dargestellt). Über eine Ausgangsleitung 510 kann eine Feldkomponente 600 mit einem Feldgerät 100 verbunden sein. Entsprechend den Versorgungsleitungen 500 können die Ausgangsleitungen 510 Adern und Steckverbinder mit entsprechenden Kontakten an deren Enden aufweisen (nicht dargestellt), mit deren Hilfe die Ausgangsleitungen 510 zum Anschließen an die Ausgangsleitungsanschlüsse 165 der Feldgeräte 100 und entsprechende Anschlüsse der Feldkomponenten 600 gesteckt werden können.

Die von dem Einspeisegerät 400 bereitgestellte elektrische Energie kann über die das Einspeisegerät 400 mit dem ersten Feldgerät 100-1 verbindende Versorgungsleitung 500 in das erste Einspeisegerät 100-1 eingebracht werden. Hiervon ausgehend kann die elektrische Energie jeweils von einem zum nächsten Feldgerät 100, also von dem ersten Feldgerät 100-1 zu dem zweiten Feldgerät 100-2, von dem zweiten Feldgerät 100-2 zu dem dritten Feldgerät 100-3 usw. über die die jeweiligen Feldgeräte 100 paarweise verbindenden Versorgungsleitungen 500 zur Energieversorgung weitergeleitet werden. Die in die einzelnen Feldgeräte 100 eingebrachte elektrische Energie kann ferner über die an die Feldgeräte 100 angeschlossenen Ausgangsleitungen 510 an die Feldkomponenten 600 weitergeleitet bzw. weiterverteilt werden, um diese elektrisch zu versorgen. Die Feldgeräte 100 können dabei als Energieverteiler für die Feldkomponenten 600 dienen.

Das System 50 weist zusätzlich zu dem Einspeisegerät 400, den Feldgeräten 100 und den Feldkomponenten 600 eine übergeordnete und zur Steuerung des Systems 50 eingesetzte Steuervorrichtung 700 auf. Die Steuervorrichtung 700 dient u.a. zur Steuerung von Aktoren unter Verwendung von Steuerdaten bzw. Steuersignalen, was u.a. auf der Grundlage von Sensordaten bzw. Sensorsignalen von Sensoren durchgeführt wird. Das System 50 ist dementsprechend zum Durchführen einer Datenkommunikation ausgebildet, um einen Datenaustausch u.a. zwischen der Steuervorrichtung 700 und den Feldkomponenten 600 zu ermöglichen. Eine Datenkommunikation kann dabei zwischen den Feldgeräten 100 und den hieran angeschlossenen Feldkomponenten 600, zwischen den Feldgeräten 100 untereinander, zwischen dem ersten Feldgerät 100-1 und dem Einspeisegerät 400, sowie zwischen der Steuervorrichtung 700 und dem Einspeisegerät 400 erfolgen. In diesem Sinne kann das Einspeisegerät 400 als Kommunikationsvermittler zwischen der Steuervorrichtung 700 und den Feldgeräten 100 dienen, und können die Feldgeräte 100 ihrerseits als Kommunikationsvermittler zwischen dem Einspeisegerät 400 und den Feldkomponenten 600 dienen.

Um den Verkabelungsaufwand gering zu halten, findet die Datenkommunikation zwischen dem Einspeisegerät 400 und den Feldgeräten 100 bzw. zwischen dem Einspeisegerät 400 und dem ersten Feldgerät 100-1 sowie zwischen den Feldgeräten 100 untereinander, als auch die Datenkommunikation zwischen den Feldgeräten 100 und den Feldkomponenten 600, über die gleichen Schnittstellen und Leitungen statt, wie sie auch zur elektrischen Energieversorgung genutzt werden. Insofern dienen der Einspeisegerät-Ausgangsanschluss 420 des Einspeisegeräts 400 und die Eingangsanschlüsse 110, Ausgangsanschlüsse 111 und Ausgangsleitungsanschlüsse 165 der Feldgeräte 100 als Hybridanschlüsse, über welche sowohl elektrische Energie zur Energieversorgung als auch Datensignale übertragen werden können. In entsprechender Weise dienen die Versorgungsleitungen 500 und Ausgangsleitungen 510 als Hybridleitungen zur Übertragung von elektrischer Energie und von Datensignalen. Weitere Details hierzu werden weiter unten näher erläutert.

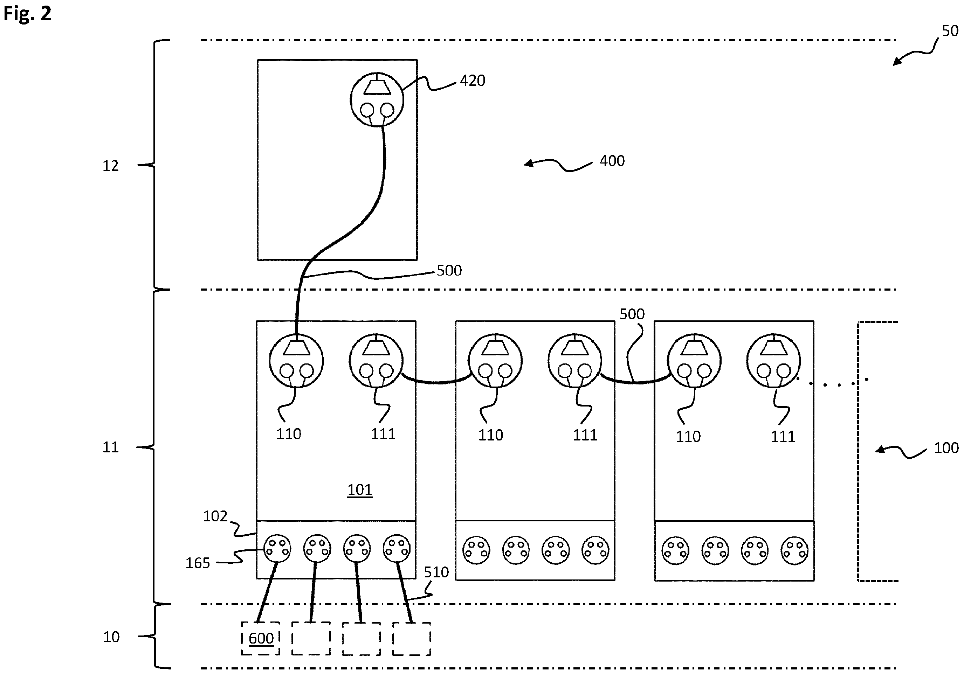

Figur 2 veranschaulicht ein mögliches Anwendungsszenario, welches für das System 50 in Betracht kommen kann. Hierbei befinden sich die mit den Feldgeräten 100 verbundenen Feldkomponenten 600 in einem ersten Bereich 10. Der erste Bereich 10 ist ein explosionsgefährdeter Bereich. In dem ersten Bereich 10 kann eine gefährliche explosionsfähige Atmosphäre als Gemisch aus Luft und brennbaren Gasen, Dämpfen, Nebeln oder Stäuben ständig, über lange Zeiträume oder häufig vorhanden sein. Der erste Bereich 10 kann zum Beispiel eine Zone 0/20 gemäß der ATEX-Richtlinie sein. Die Feldgeräte 100 sind in einem zweiten Bereich 11 angeordnet. Der zweite Bereich 11 ist im Unterschied zu dem ersten Bereich 10 ein weniger explosionsgefährdeter Bereich. In dem zweiten Bereich 11 kann sich gelegentlich eine gefährliche explosionsfähige Atmosphäre als Gemisch aus Luft und brennbaren Gasen, Dämpfen, Nebeln oder Stäuben bilden. Der zweite Bereich 11 kann zum Beispiel eine Zone 1/21 gemäß der ATEX-Richtlinie sein. Das Einspeisegerät 400 befindet sich in einem dritten Bereich 12. Der dritte Bereich 12 ist im Unterschied zu den anderen Bereichen 10, 11 ein nicht oder nur wenig explosionsgefährdeter Bereich. In dem dritten Bereich 12 kann eine gefährliche explosionsfähige Atmosphäre als Gemisch aus Luft und brennbaren Gasen, Dämpfen, Nebeln oder Stäuben nicht, oder nur selten und für kurze Zeit auftreten. Der dritte Bereich 12 kann zum Beispiel eine Zone 2/22 gemäß der ATEX-Richtlinie sein.

Das in Figur 2 gezeigte Anwendungsszenario kann ermöglicht werden, indem einerseits eine Überwachung der elektrischen Energieversorgung der Feldgeräte 100 durchgeführt wird, um im Fehlerfall einen entstehenden Funken durch schnelles Abschalten der Energieversorgung zu löschen, und andererseits eine leistungslimitierende Ausgestaltung der Feldgeräte 100 vorgesehen ist. Die Überwachung erfolgt bei dem System 50 durch das Einspeisegerät 400 und durch ein oder mehrere Feldgeräte 100, welche zu diesem Zweck in Form von Überwachungsfeldgeräten 800 ausgebildet sind. Wie in Figur 1 gezeigt ist, können das dritte und fünfte Feldgerät 100-3, 100-5 solche Überwachungsfeldgeräte 800 sein. Die Überwachung durch das Einspeisegerät 400 und durch die Überwachungsfeldgeräte 800 bezieht sich dabei, abhängig von der Ausgestaltung des Systems 50, jeweils u.a. auf wenigstes ein nachfolgendes Feldgerät 100. Das Einspeisegerät 400 und die Feldgeräte 100 können wie im Folgenden beschrieben ausgeführt sein.

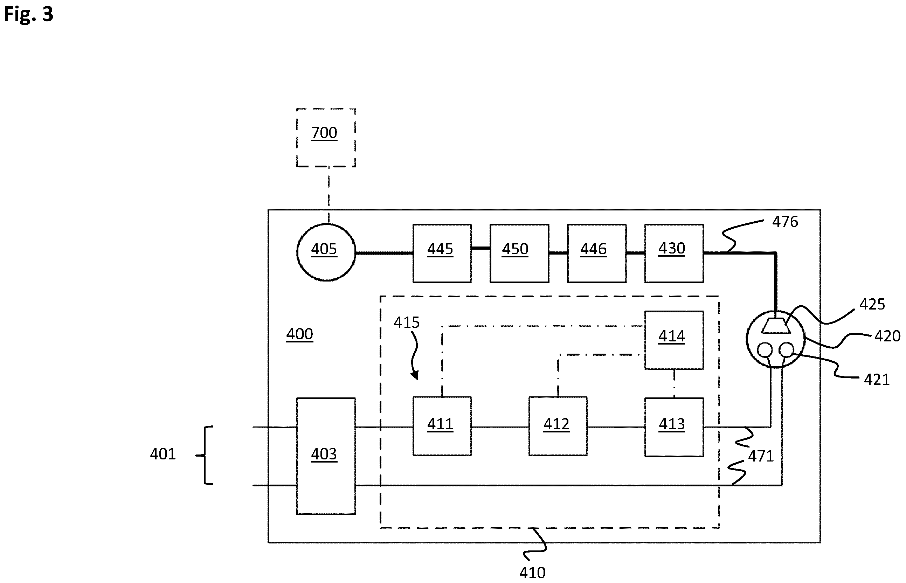

Figur 3 zeigt eine Darstellung des Einspeisegeräts 400 des Systems 50 gemäß einer möglichen Ausgestaltung. Das Einspeisegerät 400 weist mit Bezug auf die Bereitstellung von elektrischer Energie einen Stromversorgungseingang 401 auf, über welchen das Einspeisegerät 400 mit einer nicht dargestellten Stromquelle bzw. Gleichstromquelle elektrisch verbunden sein, und auf diese Weise durch die Stromquelle elektrisch gespeist werden kann. Ein weiterer Bestandteil ist eine mit dem Stromversorgungseingang 401 verbundene Einspeisegerät-Begrenzungseinrichtung 403. Die Einspeisegerät-Begrenzungseinrichtung 403 ist ausgebildet, eine Begrenzung der dem Einspeisegerät 400 über den Stromversorgungseingang 401 zugeführten elektrischen Leistung hervorzurufen, bevor diese im Rahmen der elektrischen Energieversorgung über den Einspeisegerät-Ausgangsanschluss 420 an die Feldgeräte 100 (bzw. gemäß der Darstellung von Figur 1 an das erste Feldgerät 100-1 und über dieses an die weiteren Feldgeräte 100) weitergegeben wird. Mit Hilfe der Einspeisegerät-Begrenzungseinrichtung 403 kann eine Strombegrenzung und eine Spannungsbegrenzung bewirkt werden. Darüber hinaus kann das Einspeisegerät 400 eine galvanische Trennung aufweisen, welche in der Einspeisegerät-Begrenzungseinrichtung 403 ausgebildet sein kann.

Das Einspeisegerät 400 weist ferner eine zwischen der Einspeisegerät-Begrenzungseinrichtung 403 und dem Einspeisegerät-Ausgangsanschluss 420 angeordnete Einspeisegerät-Überwachungseinrichtung 410 auf, welche ausgebildet ist, eine Funkenentstehung bei der elektrischen Energieversorgung infolge eines Fehlers zu erfassen und hierauf basierend die elektrische Energieversorgung abzuschalten. Das Erfassen und Abschalten erfolgen dabei mit einer niedrigen Latenz, um zu verhindern, dass ein Funke mit relevanter und für eine Zündung ausreichender Energie erzeugt werden kann.

Die Einspeisegerät-Überwachungseinrichtung 410 weist, wie in Figur 3 gezeigt ist, eine Einspeisegerät-Detektoreinrichtung 415 mit einem ersten Einspeisegerät-Detektor 411 und einem zweiten Einspeisegerät-Detektor 412, eine Einspeisegerät-Schalteinheit 413, und eine mit den beiden Einspeisegerät-Detektoren 411, 412 und der Einspeisegerät-Schalteinheit 413 verbundene Einspeisegerät-Steuereinheit 414 auf. Der erste Einspeisegerät-Detektor 411 kann dazu ausgebildet sein, eine Stromänderung bei einem entstehenden Schließfunken (make-spark) zu erfassen. Ein solcher Funke kann durch ein Schließen bzw. Kurzschließen eines elektrischen Stromkreises hervorgerufen werden. Die Stromänderung, welche hierbei auftritt, kann ein Anstieg des elektrischen Stroms über die Zeit (d.h. +di/dt) sein. Der zweite Einspeisegerät-Detektor 412 kann dazu ausgebildet sein, eine Stromänderung bei einem entstehenden Öffnungsfunken (break-spark) zu erfassen. Ein solcher Funke kann durch ein Öffnen bzw. Trennen eines elektrischen Stromkreises erzeugt werden. Die dabei auftretende Stromänderung kann eine Reduzierung des elektrischen Stroms über die Zeit (d.h. -di/dt) sein.

Im Betrieb der Einspeisegerät-Überwachungseinrichtung 410 können mit Hilfe des ersten und zweiten Einspeisegerät-Detektors 411, 412 eine für eine Funkenentstehung charakteristische Stromänderung und damit die Funkenentstehung erfasst werden. Die Einspeisegerät-Steuereinheit 414 kann hierauf basierend durch entsprechendes Ansteuern der Einspeisegerät-Schalteinheit 413 die elektrische Energieversorgung der Feldgeräte 100 abschalten. Dies hat ein Erlöschen des Funkens zur Folge.

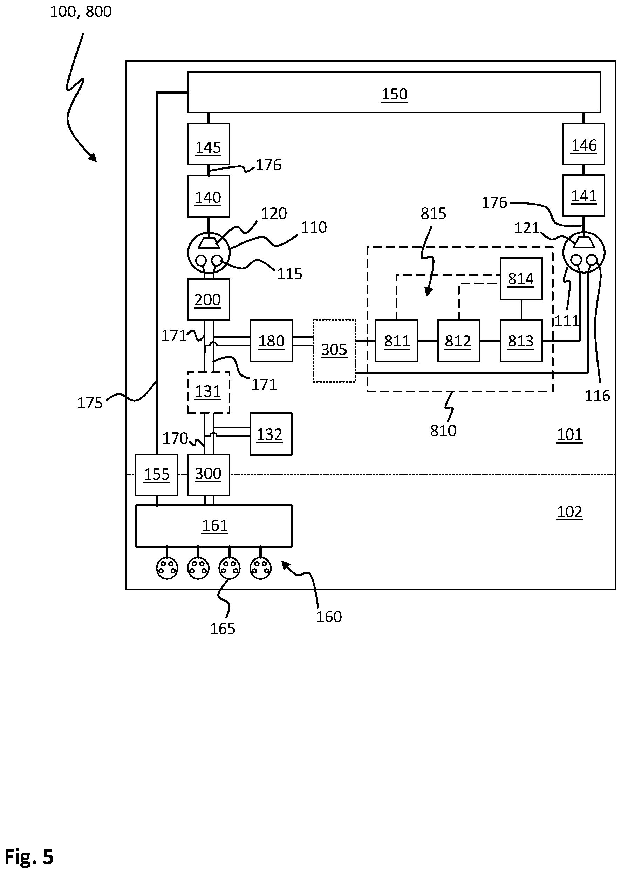

Wie weiter unten anhand von Figur 5 näher erläutert wird, weisen die Überwachungsfeldgeräte 800 des Systems 50 eine der Einspeisegerät-Überwachungseinrichtung 410 entsprechende Überwachungseinrichtung 810 auf. Mit Hilfe der Überwachungseinrichtung 810 eines Überwachungsfeldgeräts 800 kann in entsprechender Weise ein bei der elektrischen Energieversorgung wenigstens eines nachfolgenden Feldgeräts 100 durch Weiterleiten der elektrischen Energie aufgrund eines Fehlers auftretender Funke erfasst, und hierauf basierend die elektrische Energieversorgung abgeschaltet werden. Auch dies führt zu einem Erlöschen des Funkens.

Das Vorliegen eines Funkens, was durch das Einspeisegerät 400 und durch die Überwachungsfeldgeräte 800 erfasst werden kann, kann sich auf den Bereich der Eingangs- und Ausgangsanschlüsse 110, 111 der Feldgeräte 100 und der hieran angeschlossenen Versorgungsleitungen 500 beziehen. Hierbei kann, wie weiter unten anhand von Figur 6 näher erläutert wird, ein verteiltes bzw. abschnittsweises Überwachen des Systems 50 erfolgen, indem mit Hilfe der Einspeisegerät-Überwachungseinrichtung 410 des Einspeisegeräts 400 und der Überwachungseinrichtungen 810 der Überwachungsfeldgeräte 800 unterschiedliche Systemabschnitte überwacht werden. Das Erlöschen eines Funkens aufgrund des Abschaltens der Energieversorgung ist mit einer Funkendauerlimitierung verbunden, wodurch zuverlässig verhindert werden kann, dass ein Zündfunke mit für eine Zündung ausreichender Energie im Bereich der Eingangs- und Ausgangsanschlüsse 110, 111 der Feldgeräte 100 und der Versorgungsleitungen 500 erzeugt wird.

Im Hinblick auf das Einspeisegerät 400 sind in Figur 3 ferner interne elektrische Leiter 471 desselben angedeutet, über welche die elektrische Energie innerhalb des Einspeisegeräts 400 transportiert werden kann, und über welche Bestandteile des Einspeisegeräts 400, einschließlich des Einspeisegerät-Ausgangsanschlusses 420, miteinander verbunden sind. Mit Bezug auf den Einspeisegerät-Ausgangsanschluss 420 sind zwei interne Leiter 471 zu zwei Anschlusskontakten 421 des Einspeisegerät-Ausgangsanschlusses 420 geführt und mit diesen verbunden. Die Anschlusskontakte 421 können von Kontakten eines Steckverbinders einer zum Anschließen an den Einspeisegerät-Ausgangsanschluss 420 vorgesehenen Versorgungsleitung 500 (vgl. Figur 1) kontaktiert werden (nicht dargestellt), wodurch die von dem Einspeisegerät 400 bereitgestellte elektrische Energie über die betreffende Versorgungsleitung 500 weitergeleitet werden kann.

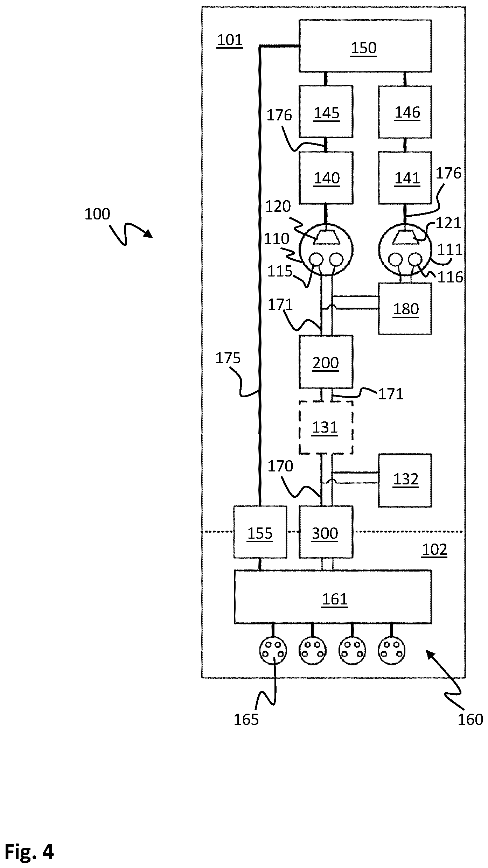

Figur 4 zeigt eine Darstellung eines Feldgeräts 100 des Systems 50 gemäß einer möglichen Ausgestaltung, welches nicht als Überwachungsfeldgerät 800 ausgeführt ist und daher nicht zur Überwachung eingesetzt werden kann. Die hier gezeigte Bauform kann für sämtliche nicht zur Überwachung ausgebildete Feldgeräte 100 des Systems 50 zur Anwendung kommen, d.h. mit Bezug auf Figur 1 auf das erste, zweite und vierte Feldgerät 100-1, 100-2, 100-4. Das in Figur 4 abgebildete Feldgerät 100 weist einen ersten Gerätebereich 101 und einen zweiten Gerätebereich 102 auf. Der erste Gerätebereich 101 weist die oben beschriebenen und zum Anschließen von Versorgungsleitungen 500 eingesetzten Anschlüsse, d.h. den Eingangsanschluss 110 und den Ausgangsanschluss 111 auf. Über den Eingangsanschluss 110 kann die mit Hilfe des Einspeisegeräts 400 bereitgestellte elektrische Energie in den ersten Gerätebereich 101 des Feldgeräts 100 eingebracht werden. Über den Ausgangsanschluss 111 kann die elektrische Energie ausgegeben und dadurch zur Energieversorgung an ein weiteres Feldgerät 100 übertragen werden. In Figur 4 sind ferner interne elektrische Leiter 171 des Feldgeräts 100 angedeutet, über welche die elektrische Energie innerhalb des Feldgeräts 100 transportiert bzw. weitergeleitet werden kann, und über welche Bestandteile des Feldgeräts 100 wie der Eingangsanschluss 110 und der Ausgangsanschluss 111 miteinander verbunden sind. Die internen Leiter 171 können in Form von Leiterbahnen vorliegen.

Der Eingangsanschluss 110 weist zwei Anschlusskontakte 115 auf, welche mit zwei internen elektrischen Leitern 171 verbunden sind. Auch der Ausgangsanschluss 111 weist zwei Anschlusskontakte 116 auf, welche mit zwei internen elektrischen Leitern 171 verbunden sind. Die Anschlusskontakte 115, 116 des Eingangsanschlusses 110 und des Ausgangsanschlusses 111, welche im Rahmen der elektrischen Energieversorgung genutzt werden, können jeweils von Kontakten von Steckverbindern von zum Anschließen an den Eingangsanschluss 110 und den Ausgangsanschluss 111 genutzten Versorgungsleitungen 500 (vgl. Figur 1) kontaktiert werden (nicht dargestellt), wodurch die elektrische Energie über die jeweilige Versorgungsleitung 500 eingespeist bzw. weitergeleitet werden kann.

Der zweite Gerätebereich 102 weist, wie in Figur 4 gezeigt ist, eine Anschlusseinrichtung 160 auf, welche die zum Anschließen von Ausgangsleitungen 510 verwendeten Ausgangsleitungsanschlüsse 165 umfasst. Über die Ausgangsleitungsanschlüsse 165 und hieran angeschlossene Ausgangsleitungen 510 kann das Feldgerät 100 mit Feldkomponenten 600 verbunden sein (vgl. die Figuren 1, 2). Die Anschlusseinrichtung 160 umfasst des Weiteren einen mit den Ausgangsleitungsanschlüssen 165 verbundenen Eingabe/Ausgabe-Controller 161, welcher wie weiter unten beschrieben im Rahmen der Datenkommunikation zum Einsatz kommen kann.

Der erste Gerätebereich 101 und der zweite Gerätebereich 102 sind über eine elektrische Energieversorgungverbindung 170 verbunden, über welche die über den Eingangsanschluss 110 in den ersten Gerätebereich 101 eingespeiste elektrische Energie zu dem zweiten Gerätebereich 102, und damit zu der Anschlusseinrichtung 160 mit den Ausgangsleitungsanschlüssen 165, übertragen werden kann. Die in den zweiten Gerätebereich 102 eingebrachte elektrische Energie kann dabei, wie in Figur 4 angedeutet ist, über den Eingabe/Ausgabe-Controller 161 bzw. durch den Eingabe/Ausgabe-Controller 161 hindurch, oder auch an dem Eingabe/Ausgabe-Controller 161 vorbei bzw. parallel zu dem Eingabe/Ausgabe-Controller 161 (nicht dargestellt), zu den Ausgangsleitungsanschlüssen 165 geleitet werden. Hiervon ausgehend kann die elektrische Energie zu Feldkomponenten 600 weitergeleitet werden, um diese elektrisch zu versorgen.

Die elektrische Energieversorgungverbindung 170 des Feldgeräts 100 umfasst, wie in Figur 4 gezeigt ist, neben internen elektrischen Leitern 171, eine Leistungsbegrenzungseinrichtung 300. Die Leistungsbegrenzungseinrichtung 300, welche sich zwischen dem Eingangsanschluss 110 und der Anschlusseinrichtung 160 bzw. dem Eingabe/Ausgabe-Controller 161 befindet, ist ausgebildet, eine Begrenzung der von dem ersten Gerätebereich 101 zu dem zweiten Gerätebereich 102 im Rahmen der Energieübertragung maximal übertragbaren elektrischen Leistung hervorzurufen. Mit Hilfe der Leistungsbegrenzungseinrichtung 300 kann eine Strombegrenzung und eine Spannungsbegrenzung hervorgerufen werden. Die Leistungsbegrenzung ist derart ausgestaltet, dass die unter Berücksichtigung aller nachgeordneten Energiespeicher (nicht gezeigt) zur Verfügung stehende elektrische Energie nicht ausreicht, um im Fehlerfall einen Zündfunken im Bereich der Anschlusseinrichtung 160 bzw. der Ausgangsleitungsanschlüsse 165, der hieran angeschlossenen Ausgangsleitungen 510 und der hiermit verbundenen Feldkomponenten 600 zu erzeugen.

Der erste Gerätebereich 101 des in Figur 4 abgebildeten Feldgeräts 100 weist ferner eine Entkopplungseinrichtung 200 auf, welche zwischen dem Eingangsanschluss 110 und der Leistungsbegrenzungseinrichtung 300 angeordnet ist. Die Entkopplungseinrichtung 200 ist ausgebildet, eine vorgegebene Eingangsimpedanz des Feldgeräts 100 mit Bezug auf das Erfassen der Funkenentstehung bereitzustellen. Hierdurch kann das Feldgerät 100 ein bekanntes und vorhersagbares elektrisches Verhalten besitzen, wodurch eine Funkenentstehung im Fehlerfall mit einer hohen Zuverlässigkeit und Genauigkeit durch das Einspeisegerät 400 oder durch ein Überwachungsfeldgerät 800 erfasst werden kann.

Wie in Figur 4 dargestellt ist, weist der erste Gerätebereich 101 des Feldgeräts 100 ferner eine Schalteinrichtung 180 auf. Über die Schalteinrichtung 180 und interne elektrische Leiter 171 sind der zum Einbringen von elektrischer Energie in den ersten Gerätebereich 101 eingesetzte Eingangsanschluss 110 und der zum Ausbringen bzw. Weiterleiten der elektrischen Energie genutzte Ausgangsanschluss 111 miteinander verbunden. Mit Hilfe der Schalteinrichtung 180 kann das Weiterleiten der elektrischen Energie geschaltet werden. In dieser Ausgestaltung kann durch entsprechendes Ansteuern der zwischen dem Eingangsanschluss 110 und dem Ausgangsanschluss 111 angeordneten Schalteinrichtung 180 ein Trennen und ein Verbinden des Eingangsanschlusses 110 und des Ausgangsanschlusses 111 hervorgerufen werden, wodurch das Weiterleiten der elektrischen Energie über den Ausgangsanschluss 111 flexibel gesteuert werden kann. Bei dem in Figur 4 abgebildeten Feldgerät 100 ist die Verbindung des Eingangsanschlusses 110 und Ausgangsanschlusses 111 u.a. über eine zu dem Ausgangsanschluss 111 bzw. zu der Schalteinrichtung 180 führende und durch interne elektrische Leiter 171 gebildete Stromabzweigung verwirklicht, welche zwischen dem Eingangsanschluss 110 und der Entkopplungseinrichtung 200 ausgebildet ist.

Für die Feldgeräte 100 des Systems 50 kann ferner eine Bauform mit einer galvanischen Trennung in Betracht kommen. Zur Veranschaulichung ist in Figur 4 eine mögliche Ausgestaltung des ersten Gerätebereichs 101 des Feldgeräts 100 mit einer optionalen Trenneinrichtung 131 angedeutet, welche zwischen der Entkopplungseinrichtung 200 und der Leistungsbegrenzungseinrichtung 300 angeordnet ist. Die Trenneinrichtung 131 ist dazu ausgebildet, eine galvanische Trennung zu bewirken. Auf diese Weise kann die in den ersten Gerätebereich 101 eingespeiste elektrische Energie auf getrennten elektrischen Stromkreisen geführt werden, wodurch ein zuverlässiger und sicherer Betrieb des Systems 50 begünstigt werden kann.

Die Trenneinrichtung 131 kann Bauelemente wie einen Wechselrichter, einen Übertrager, einen Gleichrichter und einen Glättungskondensator umfassen (nicht dargestellt). Mit Hilfe des Wechselrichters kann die als Gleichstrom vorliegende elektrische Energie in einen Wechselstrom umgewandelt und dem Übertrager zugeführt werden. Der von dem Übertrager ausgegebene Wechselstrom kann mit Hilfe des Gleichrichters und des Glättungskondensators gleichgerichtet und geglättet werden, so dass ausgangsseitig der Trenneinrichtung 131 wieder ein Gleichstrom vorliegen kann.

Wie oben angedeutet wurde, kann eine galvanische Trennung auch in dem Einspeisegerät 400 ausgebildet sein, zum Beispiel in der Einspeisegerät-Begrenzungseinrichtung 403 (vgl. Figur 3). Auf diese Weise können die Feldgeräte 100 ohne galvanische Trennung bzw. ohne die Trenneinrichtung 131 verwirklicht sein.

Das in Figur 4 gezeigte Feldgerät 100 bzw. dessen erster Gerätebereich 101 weist des Weiteren ein internes Netzteil 132 auf, welches über die dem ersten Gerätebereich 101 zugeführte elektrische Energie elektrisch versorgt werden kann. Eine zu dem internen Netzteil 132 führende und durch interne elektrische Leiter 171 gebildete Stromabzweigung kann dabei, wie in Figur 4 dargestellt ist, zwischen der Entkopplungseinrichtung 200 bzw. der Trenneinrichtung 131 und der Leistungsbegrenzungseinrichtung 300 ausgebildet sein. Das interne Netzteil 132 kann dazu genutzt werden, um interne Einrichtungen des Feldgeräts 100, zum Beispiel ein im Rahmen der Datenkommunikation genutzter und weiter unten beschriebener Kommunikationscontroller 150, mit elektrischer Energie zu versorgen.

Figur 5 zeigt eine Darstellung eines in Form eines Überwachungsfeldgerät 800 verwirklichten Feldgeräts 100 des Systems 50 gemäß einer möglichen ersten Ausgestaltung. Die hier gezeigte Bauform kann für sämtliche Überwachungsfeldgeräte 800 des Systems 50 zum Einsatz kommen, d.h. mit Bezug auf Figur 1 für das dritte und fünfte Feldgerät 100-3, 100-5. Das in Figur 5 dargestellte Überwachungsfeldgerät 800 stimmt zu einem großen Teil mit dem in Figur 4 gezeigten, nicht zur Überwachung einsetzbaren Feldgerät 100 überein. Übereinstimmende Merkmale und Details sowie gleiche und gleich wirkende Komponenten werden im Folgenden daher nicht erneut detailliert beschrieben. Für Details hierzu wird stattdessen auf die obige Beschreibung Bezug genommen.

Das in Figur 5 gezeigte Überwachungsfeldgerät 800 weist interne elektrische Leiter 171 zum Transportieren der elektrischen Energie, sowie die oben erläuterte Ausgestaltung mit dem ersten Gerätebereich 101 und dem zweiten Gerätebereich 102 auf. Der erste Gerätebereich 101 weist, zusätzlich zu dem Eingangsanschluss 110 und dem mit diesem verbundenen Ausgangsanschluss 111, Komponenten wie die Entkopplungseinrichtung 200, die Schalteinrichtung 180, die optionale Trenneinrichtung 131 und das interne Netzteil 132 auf. Der zweite Gerätebereich 102 umfasst die Anschlusseinrichtung 160 mit Ausgangsleitungsanschlüssen 165 und dem Eingabe/Ausgabe-Controller 161. Der erste und zweite Gerätebereich 101, 102 sind über die elektrische Energieversorgungverbindung 170 verbunden, über welche die über den Eingangsanschluss 110 in den ersten Gerätebereich 101 eingespeiste elektrische Energie zu dem zweiten Gerätebereich 102, und damit zu der Anschlusseinrichtung 160 mit den Ausgangsleitungsanschlüssen 165, übertragen werden kann. Hiervon ausgehend kann die elektrische Energie zu Feldkomponenten 600 weitergeleitet werden. Die elektrische Energieversorgungverbindung 170 umfasst, neben internen elektrischen Leitern 171, die zur Begrenzung der von dem ersten Gerätebereich 101 zu dem zweiten Gerätebereich 102 übertragbaren elektrischen Leistung eingesetzte Leistungsbegrenzungseinrichtung 300.

Wie in Figur 5 dargestellt ist, weist das Überwachungsfeldgerät 800 zwischen dem Eingangsanschluss 110 und dem Ausgangsanschluss 111 die Schalteinrichtung 180 und ferner, der Schalteinrichtung 180 nachgeordnet, eine optionale Weiterleitungsbegrenzungseinrichtung 305 und eine der Weiterleitungsbegrenzungseinrichtung 305 nachgeordnete Überwachungseinrichtung 810 auf. Mit Hilfe der Schalteinrichtung 180 kann das Weiterleiten der elektrischen Energie über den Ausgangsanschluss 111 flexibel gesteuert werden. Die Weiterleitungsbegrenzungseinrichtung 305 ist ausgebildet, eine Begrenzung der bei dem Weiterleiten der elektrischen Energie über den Ausgangsanschluss 111 übertragbaren bzw. maximal übertragbaren elektrischen Leistung hervorzurufen. Hierdurch kann ein zuverlässiger und sicherer Betrieb des Systems 50 begünstigt werden. Mit Hilfe der Weiterleitungsbegrenzungseinrichtung 305 kann eine Strombegrenzung und eine Spannungsbegrenzung hervorgerufen werden. Die Weiterleitungsbegrenzungseinrichtung 305 kann auch entfallen.

Die mit dem Ausgangsanschluss 111 verbundene Überwachungseinrichtung 810 des Überwachungsfeldgeräts 800 dient dazu, einen bei der elektrischen Energieversorgung wenigstens eines nachfolgenden Feldgeräts 100 durch Weiterleiten der elektrischen Energie über den Ausgangsanschluss 111 aufgrund eines Fehlers auftretenden Funken zu erfassen, und hierauf basierend die elektrische Energieversorgung abzuschalten. Entsprechend des Einspeisegeräts 400 findet das Erfassen der Funkenentstehung und Abschalten der Energieversorgung bei dem Überwachungsfeldgerät 800 mit einer niedrigen Latenz statt, um zu verhindern, dass ein Zündfunke mit für eine Zündung ausreichender Energie erzeugt werden kann.

Die Überwachungseinrichtung 810 umfasst eine Detektoreinrichtung 815 mit einem ersten Detektor 811 und einem zweiten Detektor 812, sowie eine Schalteinheit 813 und eine Steuereinheit 814, welche mit den beiden Detektoren 811, 812 und der Schalteinheit 813 verbunden ist. Der erste Detektor 811 kann, entsprechend des ersten Einspeisegerät-Detektors 411 des Einspeisegeräts 400, dazu ausgebildet sein, eine Stromänderung bei einem entstehenden Schließfunken zu erfassen. Der zweite Detektor 812 kann, entsprechend des zweiten Einspeisegerät-Detektors 412, dazu ausgebildet sein, eine Stromänderung bei einem entstehenden Öffnungsfunken zu erfassen.

Im Betrieb der Überwachungseinrichtung 810 können mit Hilfe des ersten und zweiten Detektors 811, 812 eine für eine Funkenentstehung charakteristische Stromänderung und damit die Funkenentstehung erfasst werden. Die Steuereinheit 814 kann hierauf basierend durch entsprechendes Ansteuern der Schalteinheit 813 die elektrische Energieversorgung von wenigstens einem dem Überwachungsfeldgerät 800 nachgeordneten Feldgerät 100 abschalten, was ein Erlöschen des Funkens zur Folge hat.

Ähnlich dem in Figur 4 abgebildeten und nicht zur Überwachung einsetzbaren Feldgerät 100 ist die Verbindung des Eingangsanschlusses 110 und Ausgangsanschlusses 111 bei dem in Figur 5 gezeigten Überwachungsfeldgerät 800 u.a. über eine zu dem Ausgangsanschluss 111 bzw. zu der Schalteinrichtung 180 führende und durch interne elektrische Leiter 171 gebildete Stromabzweigung verwirklicht. Im Unterschied zu dem Feldgerät 100 von Figur 4 ist die betreffende Stromabzweigung bei dem Überwachungsfeldgerät 800 von Figur 5 jedoch nicht zwischen dem Eingangsanschluss 110 und der Entkopplungseinrichtung 200, sondern stattdessen nach der Entkopplungseinrichtung 200, und damit zwischen der Entkopplungseinrichtung 200 und der Leistungsbegrenzungseinrichtung 300, ausgebildet. Die zur Weiterleitung über den Ausgangsanschluss 111 vorgesehene elektrische Energie wird hierdurch nicht vor, sondern nach der Entkopplungseinrichtung 200 entnommen. Auf diese Weise umfasst die Verbindung des Eingangsanschlusses 110 und Ausgangsanschlusses 111 bei dem Überwachungsfeldgerät 800 von Figur 5 die Entkopplungseinrichtung 200, wohingegen dies bei dem Feldgerät 100 von Figur 4 nicht der Fall ist.

Diese Ausgestaltung des Überwachungsfeldgeräts 800 beruht auf der oben angedeuteten, in aufgeteilter Form durchgeführten Überwachung des Systems 50, gemäß welcher mit Hilfe des Einspeisegeräts 400 und der Überwachungsfeldgeräte 800 jeweils eigene Systemabschnitte des Systems 50 überwacht werden. Die Entkopplungseinrichtung 200 des Überwachungsfeldgeräts 800 von Figur 5 dient dabei als Endabschluss bzw. Abschlussimpedanz eines solchen überwachten Systemabschnitts. Abhängig von der Ausgestaltung des Systems 50 und von der Anordnung des Überwachungsfeldgeräts 800 innerhalb des Systems 50 kann der betreffende Systemabschnitt durch das dem Überwachungsfeldgerät 800 vorgeordnete Einspeisegerät 400, oder durch ein dem betrachteten Überwachungsfeldgerät 800 vorgeordnetes weiteres Überwachungsfeldgerät 800, überwacht werden.

Mit Hilfe der einen Systemabschnitt abschließenden Entkopplungseinrichtung 200 kann erzielt werden, dass der Entkopplungseinrichtung 200 nachgeordnete Schaltungskomponenten keinen Einfluss auf das Erfassen der Funkenentstehung bei dem betreffenden Systemabschnitt haben. Gemäß der in Figur 5 gezeigten Ausgestaltung des Überwachungsfeldgeräts 800 ist die zu dem Ausgangsanschluss 111 führende Stromabzweigung nach der Entkopplungseinrichtung 200 ausgebildet. Auf diese Weise ist die Entkopplungseinrichtung 200 zwischen dem Eingangsanschluss 110 und der Überwachungseinrichtung 810 angeordnet, und ist die Überwachungseinrichtung 810 damit der Entkopplungseinrichtung 200 nachgeordnet. Entsprechendes gilt für die optionale Weiterleitungsbegrenzungseinrichtung 305, welche ebenfalls der Entkopplungseinrichtung 200 nachgeordnet ist. Hierdurch kann verhindert werden, dass es aufgrund der Überwachungseinrichtung 810 sowie der Weiterleitungsbegrenzungseinrichtung 305 zu einer Beeinflussung bzw. Beeinträchtigung in Bezug auf das Erfassen der Funkenentstehung kommt.

Zur weiteren Veranschaulichung zeigt Figur 6 eine weitere Darstellung des Systems 50 mit dem Einspeisegerät 400 und den ersten bis fünften Feldgeräten 100-1, 100-2, 100-3, 100-4, 100-5. Wie in Figur 6 angedeutet ist, kann dem fünften Feldgerät 100-5 (wenigstens) ein weiteres und mit diesem verbundenes Feldgerät 100 nachgeordnet sein. Das dritte und fünfte Feldgerät 100-3, 100-5 sind in Form von Überwachungsfeldgeräten 800 verwirklicht. Das Einspeisegerät 400 dient, zusammen mit dem als Überwachungsfeldgerät 800 ausgeführten dritten und fünften Feldgerät 100-3, 100-5 dazu, eine Funkenentstehung bei der elektrischen Energieversorgung zu erfassen und hierauf basierend die elektrische Energieversorgung abzuschalten. Wie in Figur 6 gezeigt ist, kann durch das Einspeisegerät 400 ein erster Systemabschnitt 821 des Systems 50 überwacht werden. Mit Hilfe des dritten Feldgeräts 100-3 kann ein Überwachen eines zweiten Systemabschnitts 822 erfolgen. Durch das fünfte Feldgerät 100-5 kann, sofern diesem (wenigstens) ein weiteres Feldgerät 100 nachgeordnet ist, ein dritter Systemabschnitt 823 überwacht werden. Für den Fall, dass zusätzlich wenigstens ein weiteres nachgeordnetes Überwachungsfeldgerät 800 zum Einsatz kommt, kann wenigstens ein weiterer Systemabschnitt durch das betreffende Überwachungsfeldgerät 800 überwacht werden (nicht dargestellt).

Die Überwachung der ersten bis dritten Systemabschnitte 821, 823, 823 kann sich auf die von dem jeweiligen Systemabschnitt umfassten bzw. sich in dem jeweiligen Systemabschnitt befindenden Eingangs- und Ausgangsanschlüsse 110, 111 der Feldgeräte 100 und die hieran angeschlossenen Versorgungsleitungen 500 beziehen. Insofern betrifft die durch das Einspeisegerät 400 bzw. die Einspeisegerät-Überwachungseinrichtung 410 verwirklichte Überwachung des ersten Systemabschnitts 821, wie anhand von Figur 6 deutlich wird, die Eingangs- und Ausgangsanschlüsse 110, 111 des ersten und zweiten Feldgeräts 100-1, 100-2, den Eingangsanschluss des dritten Feldgeräts 100-3, und die Versorgungsleitungen 500, über welche das Einspeisegerät 400 mit dem ersten Feldgerät 100-1, das erste Feldgerät 100-1 mit dem zweiten Feldgerät 100-2, und das zweite Feldgerät 100-2 mit dem dritten Feldgerät 100-3, verbunden sind. Auch der Einspeisegerät-Ausgangsanschluss 420 kann unter die Überwachung durch die Einspeisegerät-Überwachungseinrichtung 410 fallen. Die Entkopplungseinrichtung 200 des dritten Feldgeräts 100-3 kann als Abschlussimpedanz des ersten überwachten Systemabschnitts 821 dienen. Hierdurch kann die Überwachung des ersten Systemabschnitts 821 einer Beeinflussung durch die Überwachungseinrichtung 810 (und die gegebenenfalls vorhandene Weiterleitungsbegrenzungseinrichtung 305, vgl. Figur 5) des dritten Feldgeräts 100-3 entzogen sein.

Die Überwachung des zweiten Systemabschnitts 822 durch das dritte Feldgerät 100-3 bzw. durch dessen Überwachungseinrichtung 810 bezieht sich, wie anhand von Figur 6 deutlich wird, auf den Ausgangsanschluss 111 des dritten Feldgeräts 100-3, den Eingangs- und Ausgangsanschluss 110, 111 des vierten Feldgeräts 100-4, den Eingangsanschluss 110 des fünften Feldgeräts 100-5, und die Versorgungsleitungen 500, über welche das dritte Feldgerät 100-3 mit dem vierten Feldgerät 100-4 und das vierte Feldgerät 100-4 mit dem fünften Feldgerät 100-5 verbunden sind. Die Entkopplungseinrichtung 200 des fünften Feldgeräts 100-5 kann als Abschlussimpedanz des zweiten überwachten Systemabschnitts 822 dienen. Auf diese Weise kann die Überwachung des zweiten Systemabschnitts 822 nicht durch die Überwachungseinrichtung 810 (und die gegebenenfalls vorhandene Weiterleitungsbegrenzungseinrichtung 305, vgl. Figur 5) des fünften Feldgeräts 100-5 beeinflusst werden.

Die Überwachung des dritten Systemabschnitts 823 durch das fünfte Feldgerät 100-5 bzw. durch dessen Überwachungseinrichtung 810 betrifft die von dem dritten Systemabschnitt 823 umfassten Eingangs- und Ausgangsanschlüsse 110, 111, d.h. (wenigstens) den Ausgangsanschluss 111 des fünften Feldgeräts 100-5 und den Eingangsanschluss 110 eines weiteren Feldgeräts 100, sowie die diese Feldgeräte 100 verbindende Versorgungsleitung 500. Sofern zusätzliche Feldgeräte 100 vorhanden sind, kann sich die Überwachung des dritten Systemabschnitts 823 auf eine größere Anzahl an Eingangs- und Ausgangsanschlüssen 110, 111 und Versorgungsleitungen 500 beziehen. Den Abschluss des dritten Systemabschnitts 823 kann eine Entkopplungseinrichtung 200 eines Feldgeräts 100 bilden.

Bei dem System 50 kommen, im Hinblick auf die elektrische Energieversorgung, somit unterschiedliche und jeweils eine hohe Sicherheit bietende Schutzmechanismen zum Einsatz, wodurch das in Figur 2 gezeigte Anwendungsszenario möglich ist. Mit Hilfe der Einspeisegerät-Überwachungseinrichtung 410 des Einspeisegeräts 400 und der Überwachungseinrichtungen 810 der in Form von Überwachungsfeldgeräten 800 ausgeführten Feldgeräte 100 (vgl. die Figuren 3 und 5) kann ein bei der elektrischen Energieversorgung aufgrund eines Fehlers auftretender Funke im Bereich der Eingangsanschlüsse 110 und Ausgangsanschlüsse 111 der Feldgeräte 100 und im Bereich der hieran angeschlossenen Versorgungsleitungen 500 in dessen Entstehung zuverlässig erfasst, und kann hierauf basierend mit einer niedrigen Latenz die elektrische Energieversorgung abgeschaltet werden, um den Funken zu löschen. Die hierdurch erreichte Funkendauerbegrenzung verhindert die Erzeugung eines Zündfunkens mit für eine Zündung ausreichender Energie im Bereich der Eingangsanschlüsse 110, Ausgangsanschlüsse 111 und Versorgungsleitungen 500. Auf diese Weise können die Feldgeräte 100 in Zone 1/21 gemäß der ATEX-Richtlinie (zweiter Bereich 11 in Figur 2) angeordnet sein.

Durch die Ausgestaltung der Feldgeräte 100 mit dem ersten und zweiten Gerätebereich 101, 102 und der Leistungsbegrenzungseinrichtung 300 (vgl. die Figuren 4 und 5) kann eine Begrenzung der von dem ersten Gerätebereich 101 zu dem zweiten Gerätebereich 102 maximal übertragbaren elektrischen Leistung hervorgerufen werden. Hierdurch kann mit einer hohen Zuverlässigkeit sichergestellt werden, dass die zur Verfügung stehende elektrische Energie derart limitiert ist, dass bei einem Fehlerfall kein Zündfunke mit für eine Zündung ausreichender Energie im Bereich der Anschlusseinrichtungen 160 bzw. Ausgangsleitungsanschlüsse 165 der zweiten Gerätebereiche 102 der Feldgeräte 100, der Ausgangsleitungen 510 und der über die Ausgangsleitungen 510 mit den Feldgeräten 100 verbundenen Feldkomponenten 600 erzeugt werden kann. Daher können die Feldkomponenten 600 in Zone 0/20 gemäß der ATEX-Richtlinie (erster Bereich 10 in Figur 2) angeordnet sein.

Die Überwachung der elektrischen Energieversorgung der Feldgeräte 100 und die Leistungslimitierung innerhalb der Feldgeräte 100 bietet ferner die Möglichkeit, einfache und kostengünstige Bauformen für die Versorgungsleitungen 500 und Ausgangsleitungen 510, und für die an den Leitungen 500, 510 angeordneten Steckverbinder, vorzusehen. Auch ist es möglich, eine relativ große elektrische Leistung in die Feldgeräte 100 einzubringen.

Darüber hinaus kann aufgrund der Ausgestaltung des Systems 50 dahingehend, die Überwachung der elektrischen Energieversorgung abschnittsweise mit Hilfe des Einspeisegeräts 400 und der Überwachungsfeldgeräte 800 durchzuführen, erreicht werden, dass sich Parameter wie Leitungslängen von Versorgungsleitungen 500, kapazitive und/oder induktive Effekte und hiermit verbundene Einschränkungen lediglich auf die einzelnen Systemabschnitte, und nicht auf das gesamte System 50, beziehen. Hierdurch ist es möglich, für das System 50 eine Ausgestaltung mit relativ großen Leitungslängen und/oder Anzahlen von Feldgeräten 100 vorzusehen, wobei auch in einer solchen Ausgestaltung eine zuverlässige Überwachung der Energieversorgung gewährleistet werden kann. Die jeweilige Auslegung des Systems 50 kann gegebenenfalls durch den innerhalb des Systems 50 transportierten Summenstrom limitiert sein.

Im Folgenden werden weitere Merkmale und Details beschrieben, welche für Bestandteile des Systems 50 wie die Feldgeräte 100 in Betracht kommen können.

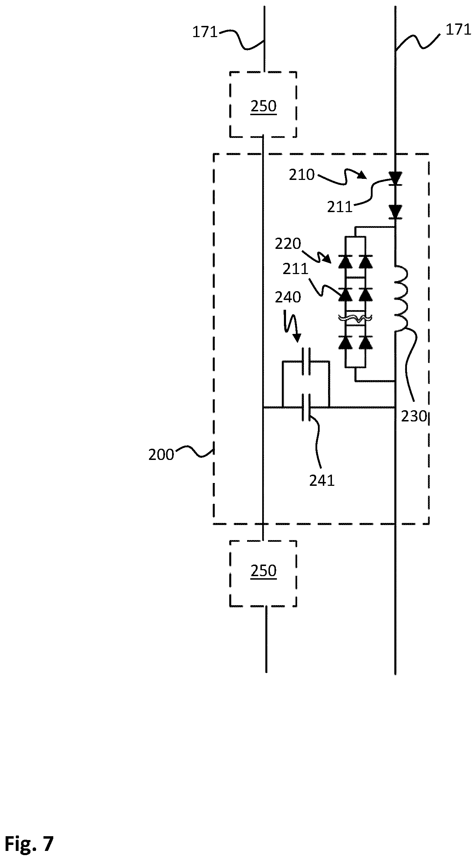

Figur 7 zeigt eine mögliche Ausgestaltung der Entkopplungseinrichtung 200. Die Entkopplungseinrichtung 200 umfasst einen LC-Tiefpass mit einer Induktivität 230 und einer kapazitive Baugruppe 240, welche parallel zu einem Ende der Induktivität 230 geschaltet ist, und über welche ein die Induktivität 230 umfassender Leitungspfad mit einem weiteren Leitungspfad verbunden ist. An einem hierzu entgegengesetzten Ende der Induktivität 230 befindet sich eine in Reihe zu der Induktivität 230 geschaltete weitere Baugruppe 210. Die weitere Baugruppe 210 umfasst gemäß der in Figur 7 gezeigten Ausgestaltung zwei seriell verbundene Dioden 211, und kann daher auch als Dioden-Baugruppe bezeichnet werden. Ein weiterer Bestandteil der Entkopplungseinrichtung 200 ist eine parallel zu der Induktivität 230 geschaltete Spannungsbegrenzungseinrichtung, welche gemäß der in Figur 7 gezeigten Ausgestaltung in Form einer Klemmschaltung 220 aus zwei Strängen aus seriell verbundenen Dioden 211 verwirklicht ist, wobei die Stränge und die Dioden 211 zueinander parallel geschaltet sind. Die kapazitive Baugruppe 240 weist zwei zueinander parallel geschaltete Kapazitäten 241 auf.

Die vorgegebene Eingangsimpedanz eines Feldgeräts 100 bzw. die Abschlussimpedanz eines überwachten Systemabschnitts des Systems 50 wird durch die Induktivität 230 und die kapazitive Baugruppe 240 der Entkopplungseinrichtung 200 vorgegeben. Die weitere Baugruppe 210 dient dazu, eine Stromflussrichtung vorzugeben. Die Spannungsbegrenzungseinrichtung bzw. Klemmschaltung 220 dient dazu, einen maximalen Spannungsabfall über die Induktivität 230 vorzugeben und im Falle einer Spannungsüberschreitung, beispielsweise aufgrund einer Unterbrechung eines internen elektrischen Leiters 171 an einem Ende der Induktivität 230, die überschüssige Spannung in Wärme umzusetzen.

Figur 7 veranschaulicht ferner die Möglichkeit, die Feldgeräte 100 des Systems 50 mit einem Einschaltstrombegrenzer 250 auszubilden. Der Einschaltstrombegrenzer 250 kann sich ebenfalls in dem ersten Gerätebereich 101 befinden. Der Einschaltstrombegrenzer 250 kann eingangsseitig der Entkopplungseinrichtung 200 bzw. zwischen der Entkopplungseinrichtung 200 und dem Eingangsanschluss 110 angeordnet und damit der Entkopplungseinrichtung 200 vorgeordnet sein, wie in Figur 7 anhand einer Position oberhalb der Entkopplungseinrichtung 200 angedeutet ist. Alternativ dazu kann der Einschaltstrombegrenzer 250 ausgangsseitig der Entkopplungseinrichtung 200 bzw. zwischen der Entkopplungseinrichtung 200 und der Leistungsbegrenzungseinrichtung 300 vorgesehen und damit der Entkopplungseinrichtung 200 nachgeordnet sein, wie in Figur 7 anhand einer Position unterhalb der Entkopplungseinrichtung 200 angedeutet ist.

Der Einschaltstrombegrenzer 250 ist ausgebildet, einen Einschaltstrom bei einem Beginn der elektrischen Energieversorgung zu begrenzen. Auf diese Weise kann vermieden werden, dass zu Beginn der elektrischen Energieversorgung ein hoher bzw. überhöhter Einschaltstrom bei einem oder mehreren Feldgeräten 100 auftritt mit der Folge, dass das Einspeisegerät 400 oder ein Überwachungsfeldgerät 800 des Systems 50 die Energieversorgung fälschlicherweise abschaltet, obwohl keine Funkenentstehung vorliegt. Mit Hilfe des Einschaltstrombegrenzers 250 kann zum Beispiel ein langsames Laden von gegebenenfalls vorhandenen lokalen Kapazitäten (nicht dargestellt) erzielt werden.

Der Einschaltstrombegrenzer 250 kann eine Reihenschaltung aus einem Widerstand und einem Transistor, sowie zusätzlich einen Regler umfassen (nicht dargestellt). Mit Hilfe des Reglers kann der über den Widerstand fließende Strom gemessen und hiervon abhängig, durch entsprechendes Ansteuern eines Gates des Transistors, der Spannungsabfall über den Transistor derart geregelt werden, dass ein Auftreten eines überhöhten Stroms vermieden wird.

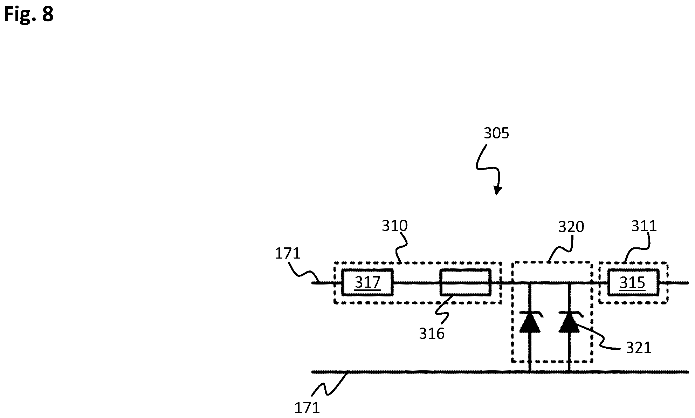

Figur 8 zeigt eine mögliche Ausgestaltung der Weiterleitungsbegrenzungseinrichtung 305 eines Überwachungsfeldgeräts 800, mittels derer eine Strombegrenzung und eine Spannungsbegrenzung hervorgerufen werden kann. Die Weiterleitungsbegrenzungseinrichtung 305 weist eine eingangsseitig angeordnete Schutzeinrichtung 310, eine der Schutzeinrichtung 310 nachangeordnete Spannungsbegrenzungseinrichtung 320 und eine der Spannungsbegrenzungseinrichtung 320 nachgeordnete ausgangsseitige Strombegrenzungseinrichtung 311 auf. Die Schutzeinrichtung 310, welche in Reihe zu der Strombegrenzungseinrichtung 311 geschaltet ist, umfasst einen optionalen Schutzwiderstand 317 und eine seriell mit dem Schutzwiderstand 317 verbundene Schmelzsicherung 316. Der Schutzwiderstand 317 kann auch entfallen. Die Strombegrenzungseinrichtung 311 umfasst einen Widerstand 315. Die Spannungsbegrenzungseinrichtung 320, über welche ein die Schutzeinrichtung 310 und die Strombegrenzungseinrichtung 311 umfassender Leitungspfad mit einem weiteren und gemäß der Darstellung von Figur 8 lediglich einen internen elektrischen Leiter 171 umfassenden Leitungspfad verbunden ist, umfasst zwei zueinander parallel geschaltete spannungsbegrenzende Bauelemente, welche vorliegend in Form von Zener-Dioden 321 ausgestaltet sind.

Bei der Weiterleitungsbegrenzungseinrichtung 305 von Figur 8 dient der Widerstand 315 der Strombegrenzungseinrichtung 311 zum Bewirken der Strombegrenzung. Über die Schmelzsicherung 316 und den optionalen Schutzwiderstand 317 der Schutzeinrichtung 310 kann eine Absicherung der Spannungsbegrenzungseinrichtung 320 bzw. von deren Zener-Dioden 321 erzielt werden. Bezüglich der Spannungsbegrenzung werden die Zener-Dioden 321 in Sperrrichtung betrieben, so dass die an den beiden Leitungspfaden anliegende Spannung auf eine durch die Zener-Dioden 321 vorgegebene Grenzspannung begrenzt wird. Für den Fall einer Spannungsüberschreitung werden die Zener-Dioden 321 leitend, wodurch die überschüssige Spannung in Wärme umgesetzt werden kann.

Die Leistungsbegrenzungseinrichtung 300 eines Feldgeräts 100 (vgl. die Figuren 4 und 5), welche wie oben angegeben zum Begrenzen der von dem ersten Gerätebereich 101 zu dem zweiten Gerätebereich 102 übertragbaren elektrischen Leistung dient, kann entsprechend des in Figur 8 gezeigten Schaltbildes aufgebaut sein. Auf diese Weise ist es möglich, eine gemeinsame Strombegrenzung und Spannungsbegrenzung mit Bezug auf die Ausgangsleitungsanschlüsse 165 der zugehörigen Anschlusseinrichtung 160 hervorzurufen.

Für die Leistungsbegrenzungseinrichtung 300 können ferner weitere Bauformen in Betracht kommen. Beispielsweise kann die Leistungsbegrenzungseinrichtung 300 mit einer galvanischen Trennung ausgebildet sein. Ferner kann die Leistungsbegrenzungseinrichtung 300 derart ausgestaltet sein, dass mehrere separate und gegebenenfalls unterschiedliche Strombegrenzungen und/oder mehrere separate und gegebenenfalls unterschiedliche Spannungsbegrenzungen mit Bezug auf einzelne oder mehrere Ausgangsleitungsanschlüsse 165 bewirkt werden können (jeweils nicht dargestellt).

Für die Einspeisegerät-Begrenzungseinrichtung 403 des Einspeisegeräts 400 (vgl. Figur 3) ist ebenfalls ein Aufbau entsprechend des in Figur 8 gezeigten Schaltbildes denkbar.

Wie oben angedeutet wurde, dient das System 50 neben einer elektrischen Energieversorgung der Feldgeräte 100 und der hieran angeschlossenen Feldkomponenten 600 auch zum Durchführen einer Datenkommunikation, um zum Beispiel Steuerdaten bzw. Steuersignale, welche durch die übergeordnete Steuervorrichtung 700 ausgegeben werden können, an Aktoren zu übermitteln, sowie Sensordaten bzw. Sensorsignale von Sensoren zu empfangen und an die Steuervorrichtung 700 zu übermitteln.

Die Feldgeräte 100 können zu diesem Zweck einen Aufbau und Bestandteile aufweisen, wie er in Figur 4 für ein nicht zur Überwachung einsetzbares Feldgerät 100 und in Figur 5 für ein als Überwachungsfeldgerät 800 ausgestaltetes Feldgerät 100 dargestellt ist. Hierbei weist das Feldgerät 100 bzw. der erste Gerätebereich 101 einen ersten Kommunikationsanschluss 120, einen zweiten Kommunikationsanschluss 121 und einen Kommunikationscontroller 150 auf. Der Kommunikationscontroller 150 kann monolithisch oder diskret aufgebaut sein. Über den ersten Kommunikationsanschluss 120, sowie auch über den zweiten Kommunikationsanschluss 121, können Datensignale gesendet und empfangen werden. Der erste Kommunikationsanschluss 120 ist über eine erste Barriereschaltung 140, eine erste physikalische Schnittstelle 145 und interne Datenleitungen 176 des Feldgeräts 100 mit dem Kommunikationscontroller 150 verbunden. Der zweite Kommunikationsanschluss 121 ist über eine zweite Barriereschaltung 141, eine zweite physikalische Schnittstelle 146 und interne Datenleitungen 176 mit dem Kommunikationscontroller 150 verbunden. Hierdurch kann der Kommunikationscontroller 150 sowohl über den ersten Kommunikationsanschluss 120 als auch über den zweiten Kommunikationsanschluss 121 Datensignale senden und empfangen.

Die internen Datenleitungen 176 des in Figur 4 und Figur 5 gezeigten Feldgeräts 100 können mehrere elektrische Leiter, zum Beispiel in Form von Leiterbahnen, aufweisen (nicht dargestellt). Die erste und zweite Barriereschaltung 140, 141 sind ausgebildet, eine zu dem ersten bzw. zweiten Kommunikationsanschluss 120, 121 des ersten Gerätebereichs 101 im Zuge der Datenkommunikation übertragbare elektrische Leistung zu limitieren und/oder eine galvanische Trennung hervorzurufen. Ein Auftreten eines Zündfunkens mit für eine Zündung ausreichender Energie im Bereich der Kommunikationsanschlüsse 120, 121 aufgrund der Datenkommunikation kann infolgedessen vermieden werden. Auf diese Weise kann eine hohe Sicherheit in Bezug auf die Datenkommunikation erzielt werden, was im Hinblick auf das in Figur 2 gezeigte Anwendungsszenario eine Anordnung der Feldgeräte 100 in Zone 1/21 der ATEX-Richtlinie (zweiter Bereich 11 gemäß Figur 2) möglich macht. Zum Zwecke der Leistungslimitierung können die erste und zweite Barriereschaltung 140, 141 elektrische Bauelemente wie wenigstens eine Diode und wenigstens einen Widerstand umfassen. Eine galvanische Trennung kann mit einer Ausgestaltung der ersten und zweiten Barriereschaltung 140, 141 mit einem Übertrager oder einer Kapazität verwirklicht sein (jeweils nicht dargestellt). Die erste und zweite physikalische Schnittstelle 145, 146, welche in Form von physikalischen Schnittstellenbausteinen ausgebildet sein können, dienen zum Verarbeiten, d.h. zum Kodieren bzw. Dekodieren von Datensignalen. Gegebenenfalls können die erste und zweite physikalische Schnittstelle 145, 146 jeweils eine zusätzliche energielimitierende Barriereschaltung aufweisen (nicht dargestellt).

Die Figuren 4 und 5 zeigen ferner, dass der Eingangsanschluss 110 in Form eines Hybridanschlusses verwirklicht ist, welcher den ersten Kommunikationsanschluss 120 umfasst. In entsprechender Weise ist der Ausgangsanschluss 111 in Form eines weiteren Hybridanschlusses ausgebildet, welcher den zweiten Kommunikationsanschluss 121 umfasst. In dieser Ausgestaltung können der Eingangsanschluss 110 und Ausgangsanschluss 111 zur Einspeisung bzw. Übertragung von elektrischer Energie zur Energieversorgung als auch zur Übertragung von Datensignalen genutzt werden. Korrespondierend dazu können die an den Eingangsanschluss 110 und Ausgangsanschluss 111 angeschlossenen Versorgungsleitungen 500 (vgl. Figur 1) gleichzeitig als Datenleitungen fungieren, über welche elektrische Energie zur Energieversorgung und Datensignale übertragen werden können. Hierauf abgestimmt können die Versorgungsleitungen 500 entsprechende elektrische Leiter bzw. Adern zur Datenübertragung, und können die an den Enden der Versorgungsleitungen 500 vorgesehenen Steckverbinder zu den Kommunikationsanschlüssen 120, 121 korrespondierende Kommunikationsanschlüsse aufweisen (nicht dargestellt). Dadurch kann der Verkabelungsaufwand bei dem System 50 gering gehalten werden.

Die Feldgeräte 100 des Systems 50 bzw. deren Kommunikationscontroller 150 können über den Eingangsanschluss 110 und den Ausgangsanschluss 111 Datensignale empfangen und senden. Auf diese Weise ist eine Datenkommunikation zwischen den Feldgeräten 100 untereinander und zwischen den Feldgeräten 100 und dem Einspeisegerät 400 möglich. Letztere kann über das erste Feldgerät 100-1 des Systems 50 erfolgen, welches wie in Figur 1 dargestellt über eine an den Eingangsanschluss 110 angeschlossene Versorgungsleitung 500 mit dem Einspeisegerät 400 verbunden ist.

Die Figuren 4 und 5 zeigen des Weiteren, dass der Kommunikationscontroller 150 des ersten Gerätebereichs 101 über eine Kommunikationsverbindung 175 mit der Anschlusseinrichtung 160 des zweiten Gerätebereichs 102 bzw. mit dem Eingabe/Ausgabe-Controller 161 verbunden ist. Hierdurch kann der Kommunikationscontroller 150 Datensignale über die Anschlusseinrichtung 160 empfangen und senden. Auf diese Weise ist eine Datenkommunikation zwischen dem Kommunikationscontroller 150 und Feldkomponenten 600 möglich, welche über Ausgangsleitungen 510 mit Ausgangsleitungsanschlüssen 165 der Anschlusseinrichtung 160 verbunden sein können (vgl. Figur 1). Die Datenkommunikation kann dabei über den Eingabe/Ausgabe-Controller 161 der Anschlusseinrichtung 160 erfolgen.

Wie in den Figuren 4 und 5 dargestellt ist, umfasst die Kommunikationsverbindung 175, neben entsprechenden internen Datenleitungen des Feldgeräts 100, welche elektrische Leiter in Form von Leiterbahnen umfassen können (nicht dargestellt), eine Barriereeinrichtung 155. Die Barriereeinrichtung 155 ist ausgebildet, eine Begrenzung einer von dem Kommunikationscontroller 150 zu der Anschlusseinrichtung 160 bei einer Datenkommunikation übertragbaren elektrischen Leistung und/oder eine galvanische Trennung hervorzurufen.

Die Verwendung der Barriereeinrichtung 155 bei den Feldgeräten 100 des Systems 50 dient ebenfalls dazu, eine hohe Sicherheit in Bezug auf die Datenkommunikation zur Verfügung zu stellen. Mit Hilfe der Barriereeinrichtung 155 kann erreicht werden, dass die elektrische Leistung, welche im Zuge der Datenkommunikation in die zweiten Gerätebereiche 102 der Feldgeräte 100 eingebracht werden kann, limitiert ist. Hierdurch kann sichergestellt werden, dass aufgrund der Datenkommunikation kein Zündfunke mit für eine Zündung ausreichender Energie im Bereich der Anschlusseinrichtungen 160 bzw. Ausgangsleitungsanschlüsse 165 der zweiten Gerätebereiche 102 der Feldgeräte 100, der Ausgangsleitungen 510 und der über die Ausgangsleitungen 510 an die Feldgeräte 100 angeschlossenen Feldkomponenten 600 hervorgerufen werden kann. Infolgedessen können die Feldkomponenten 600 entsprechend des in Figur 2 abgebildeten Anwendungsszenarios in Zone 0/20 der ATEX-Richtlinie (erster Bereich 10 gemäß Figur 2) angeordnet sein, und können sich die Feldgeräte 100 in Zone 1/21 der ATEX-Richtlinie (zweiter Bereich 11 gemäß Figur 2) befinden.

Die Barriereeinrichtung 155 der Kommunikationsverbindung 175 kann in Form eines Digitalisolators wie zum Beispiel eines Optokopplers oder eines Magnetkopplers ausgebildet sein (nicht dargestellt). In einer solchen Ausgestaltung kann durch die Barriereeinrichtung 155 eine zuverlässige und sichere Leistungslimitierung zusammen mit einer galvanischen Trennung erzielt werden.

Der Eingabe/Ausgabe-Controller 161 des in Figur 4 und Figur 5 dargestellten Feldgeräts 100, über welchen der Kommunikationscontroller 150 mit Feldkomponenten 600 kommunizieren kann, kann dazu ausgebildet sein, das Senden und Empfangen von Datensignalen über die Anschlusseinrichtung 160 bzw. über deren Ausgangsleitungsanschlüsse 165 zu steuern. Derartige Datensignale kann der Eingabe/Ausgabe-Controller 161 über die Kommunikationsverbindung 175 zuvor von dem Kommunikationscontroller 150 empfangen bzw. nachfolgend zu dem Kommunikationscontroller 150 weiterleiten.

Hierbei können von dem Kommunikationscontroller 150 kommende und durch den Eingabe/Ausgabe-Controller 161 empfangene Datensignale (zum Beispiel Steuerdaten) mit Hilfe des Eingabe/Ausgabe-Controllers 161 zu Feldkomponenten 600 (zum Beispiel Aktoren) weiter gesendet werden. Ferner können von Feldkomponenten 600 (zum Beispiel Sensoren) kommende und durch den Eingabe/Ausgabe-Controller 161 empfangene Datensignale (zum Beispiel Sensordaten) mit Hilfe des Eingabe/Ausgabe-Controllers 161 weiter zu dem Kommunikationscontroller 150 gesendet werden. Gegebenenfalls kann ferner eine Umsetzung bzw. Verarbeitung der jeweils empfangenen Datensignale durch den Eingabe/Ausgabe-Controller 161 vor deren Weitersenden erfolgen.

Der Eingabe/Ausgabe-Controller 161 kann darüber hinaus dazu ausgebildet sein, ein im Rahmen der elektrischen Energieversorgung durchgeführtes Weiterleiten von elektrischer Energie zu Feldkomponenten 600 über die Ausgangsleitungsanschlüsse 165 zu steuern. Auf diese Weise kann das Verteilen der elektrischen Energie über die Anschlusseinrichtung 160 flexibel festgelegt werden. Dies kann zum Beispiel durch den Kommunikationscontroller 150 gesteuert werden, welcher zu diesem Zweck entsprechende Datensignale bzw. Steuerdaten an den Eingabe/Ausgabe-Controller 161 übermitteln kann. Derartige Steuerdaten können von der übergeordneten Steuervorrichtung 700 des Systems 50 erzeugt werden, oder auf von der Steuervorrichtung 700 erzeugten Steuerdaten basieren. In den vorgenannten Fällen kann eine Kommunikation zwischen dem Kommunikationscontroller 150 und dem Eingabe/Ausgabe-Controller 161 gemäß eines vorgegebenen Kommunikationsprotokolls und über nicht gezeigte Schnittstellen des Kommunikationscontrollers 150 und des Eingabe/Ausgabe-Controllers 161 stattfinden.

Auch die Ansteuerung der in Figur 4 und Figur 5 gezeigten Schalteinrichtung 180 zum Weiterleiten der elektrischen Energie über den Ausgangsanschluss 111 des Feldgeräts 100 kann zum Beispiel mit Hilfe des Kommunikationscontrollers 150 durchgeführt werden. Dies kann ebenfalls auf von der übergeordneten Steuervorrichtung 700 erzeugten Steuerdaten beruhen, welche der Kommunikationscontroller 150 empfangen kann.

Das Einspeisegerät 400 des Systems 50 ist, wie oben angegeben, im Rahmen der Datenkommunikation mit einbezogen. Zu diesem Zweck kann der in Figur 3 dargestellte Aufbau für das Einspeisegerät 400 zum Einsatz kommen. Hierbei weist das Einspeisegerät 400 einen Kommunikationseingang 405 auf. Über den Kommunikationseingang 405, welcher in Form eines Anschlusses des Einspeisegeräts 400 verwirklicht sein kann, und eine in Figur 3 lediglich gestrichelt angedeutete Datenleitung, kann das Einspeisegerät 400 mit der übergeordneten Steuervorrichtung 700 des Systems 50 verbunden sein. Auf diese Weise kann das Einspeisegerät 400 Datensignale von der Steuervorrichtung 700 empfangen und zu der Steuervorrichtung 700 übermitteln. Das Einspeisegerät 400 weist ferner einen Einspeisegerät-Kommunikationsanschluss 425 auf, über welchen Datensignale gesendet und empfangen werden können, und über welchen das Einspeisegerät 400 mit den Feldgeräten 100, d.h. mit dem ersten Feldgerät 100-1 und über dieses mit den anderen Feldgeräten 100, kommunizieren kann (vgl. Figur 1). Ein weiterer Bestandteil ist ein Einspeisegerät-Kommunikationscontroller 450, welcher über eine erste physikalische Einspeisegerät-Schnittstelle 445 und interne Datenleitungen 476 des Einspeisegerät 400 mit dem Kommunikationseingang 405 verbunden ist. Der Einspeisegerät-Kommunikationscontroller 450 ist über eine zweite physikalische Einspeisegerät-Schnittstelle 446, eine Einspeisegerät-Barriereschaltung 430 und interne Datenleitungen 476 mit dem Einspeisegerät-Kommunikationsanschluss 425 verbunden. Auf diese Weise kann der Einspeisegerät-Kommunikationscontroller 450 über den Kommunikationseingang 405 und über den Einspeisegerät-Kommunikationsanschluss 425 Datensignale senden und empfangen.

Die erste und zweite physikalische Einspeisegerät-Schnittstelle 445, 446 dienen zum Kodieren bzw. Dekodieren von Datensignalen. Die Einspeisegerät-Barriereschaltung 430 ist ausgebildet, eine im Zuge der Datenkommunikation zu dem Einspeisegerät-Kommunikationsanschluss 425 übertragbare elektrische Leistung zu limitieren und/oder eine galvanische Trennung hervorzurufen. Hierdurch kann ein sicheres Durchführen der Datenkommunikation weiter begünstigt werden. Die Einspeisegerät-Barriereschaltung 430 kann Bauelemente wie wenigstens eine Diode und wenigstens einen Widerstand zur Leistungslimitierung und/oder einen Übertrager oder eine Kapazität zur galvanischen Trennung aufweisen (nicht dargestellt).

Entsprechend den Feldgeräten 100 ist der Einspeisegerät-Ausgangsanschluss 420 in Form eines Hybridanschlusses verwirklicht, welcher den Einspeisegerät-Kommunikationsanschluss 425 umfasst. Daher kann der Einspeisegerät-Ausgangsanschluss 420 zur Übertragung von elektrischer Energie und von Datensignalen genutzt werden. Ferner kann an den Einspeisegerät-Ausgangsanschluss 420 eine in Form einer Hybridleitung ausgebildete Versorgungsleitung 500 angeschlossen werden, welche einen Steckverbinder mit einem zu dem Einspeisegerät-Kommunikationsanschluss 425 korrespondierenden Kommunikationsanschluss aufweisen kann (nicht dargestellt). Hierdurch kann das Einspeisegerät 400 mit einem der Feldgeräte 100 (bzw. gemäß Figur 1 mit dem ersten Feldgerät 100-1) verbunden sein, um eine Übertragung von elektrischer Energie und einen Austausch von Datensignalen zu ermöglichen.

Der in Figur 3 gezeigte Aufbau des Einspeisegeräts 400 macht es möglich, eine Datenkommunikation zwischen dem Einspeisegerät 400 und der Steuervorrichtung 700, sowie zwischen dem Einspeisegerät 400 und den Feldgeräten 100 (über das erste Feldgerät 100-1, vgl. Figur 1) durchzuführen. Die Feldgeräte 100 können ebenfalls untereinander, sowie mit den hieran angeschlossenen Feldkomponenten 600 kommunizieren. Auf diese Weise ist eine Datenkommunikation zwischen der Steuervorrichtung 700 und den Feldkomponenten 600 über das Einspeisegerät 400 und die Feldgeräte 100 möglich.

Im Folgenden werden weitere mögliche Varianten und Ausgestaltungen beschrieben, welche für Bestandteile des Systems 50 wie die Feldgeräte 100 bzw. Überwachungsfeldgeräte 800 in Betracht kommen können. Übereinstimmende Merkmale und Details sowie gleiche und gleich wirkende Komponenten werden im Folgenden nicht erneut detailliert beschrieben. Für Details hierzu wird stattdessen auf die obige Beschreibung Bezug genommen. Ferner können Aspekte und Details, welche in Bezug auf eine Ausgestaltung genannt werden, auch in Bezug auf eine andere Ausgestaltung zur Anwendung kommen und können Merkmale von zwei oder mehreren Ausgestaltungen miteinander kombiniert werden.

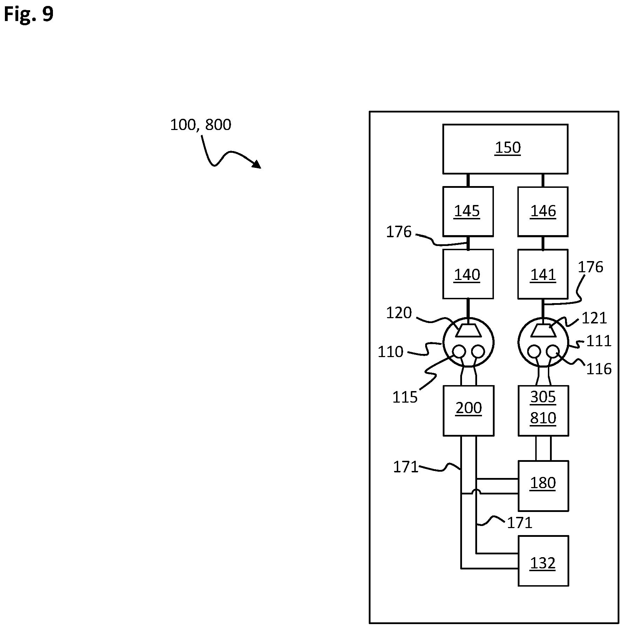

Figur 9 zeigt eine Darstellung eines Überwachungsfeldgeräts 800 gemäß einer zweiten Ausgestaltung. Das in Figur 9 dargestellte Überwachungsfeldgerät 800 weist im Unterschied zu der in Figur 5 abgebildeten Bauform keine Anschlusseinrichtung 160 auf. Auf diese Weise kann das Überwachungsfeldgerät 800 nicht mit einer Feldkomponente 600 verbunden werden. Hierzu korrespondierend fehlt bei dem Überwachungsfeldgerät 800 von Figur 9 die Unterteilung in den ersten und zweiten Gerätebereich 101, 102, und entfallen Bestandteile wie die Energieversorgungverbindung 170 mit der Leistungsbegrenzungseinrichtung 300 und die Kommunikationsverbindung 175 mit der Barriereeinrichtung 155. Auch die Trenneinrichtung 131 kann entfallen.

Abgesehen hiervon stimmt der Aufbau des Überwachungsfeldgeräts 800 von Figur 9 mit demjenigen von Figur 5 überein, d.h. das Überwachungsfeldgerät 800 umfasst Komponenten wie den Eingangsanschluss 110, den Ausgangsanschluss 111, interne elektrische Leiter 171, die Entkopplungseinrichtung 200, die Schalteinrichtung 180, die Überwachungseinrichtung 810, die optionale Weiterleitungsbegrenzungseinrichtung 305 und das interne Netzteil 132. Entsprechend der in Figur 5 gezeigten Bauform sind der Eingangs- und Ausgangsanschluss 110, 111 über interne elektrische Leiter 171 und, ausgehend von dem Eingangsanschluss 110 und in aufeinanderfolgender Weise, über die Entkopplungseinrichtung 200, die Schalteinrichtung 180, die optionale Weiterleitungsbegrenzungseinrichtung 305 und die Überwachungseinrichtung 810 miteinander verbunden.

Über den Eingangsanschluss 110 kann die von dem Einspeisegerät 400 bereitgestellte elektrische Energie in das Überwachungsfeldgerät 800 eingespeist, und über den Ausgangsanschluss 111 an ein nachfolgendes Feldgerät 100 weitergeleitet werden. Mit Hilfe der Schalteinrichtung 180 kann das Weiterleiten der elektrischen Energie über den Ausgangsanschluss 111 gesteuert werden. Mit Hilfe der Weiterleitungsbegrenzungseinrichtung 305 kann eine Begrenzung der bei dem Weiterleiten über den Ausgangsanschluss 111 übertragbaren elektrischen Leistung bewirkt werden. Die Überwachungseinrichtung 810 dient dazu, einen bei der elektrischen Energieversorgung wenigstens eines nachfolgenden Feldgeräts 100 durch Weiterleiten der elektrischen Energie infolge eines Fehlers auftretenden Funken zu erfassen und hierauf basierend die elektrische Energieversorgung abzuschalten. Mit Hilfe der Überwachungseinrichtung 810 kann auf diese Weise, wie oben angegeben, ein Systemabschnitt des Systems 50 überwacht werden. Die Entkopplungseinrichtung 200 kann als Abschlussimpedanz eines anderen Systemabschnitts des Systems 50 wirken, welcher durch das Einspeisegerät 400 oder ein anderes vorgeordnetes Überwachungsfeldgerät 800 überwacht werden kann.

Das in Figur 9 gezeigte Überwachungsfeldgerät 800 kann ebenfalls zur Datenkommunikation genutzt werden, und weist dementsprechend Bestandteile wie den ersten und zweiten Kommunikationsanschluss 120, 121, die erste und zweite Barriereschaltung 140, 141, die erste und zweite physikalische Schnittstelle 145, 146 und den Kommunikationscontroller 150 auf. Der Kommunikationscontroller 150 kann über den ersten und zweiten Kommunikationsanschluss 120, 121 Datensignale senden und empfangen. Hierdurch ist eine Datenkommunikation zwischen dem Überwachungsfeldgerät 800 und Bestandteilen des Systems 50 wie dem Einspeisegerät 400 und einem oder mehreren Feldgeräten 100 möglich. Das Überwachungsfeldgerät 800 kann in diesem Zusammenhang zum Beispiel zur Auffrischung von Datensignalen verwendet werden, welche über das Überwachungsfeldgerät 800 übertragen bzw. weitergeleitet werden können.

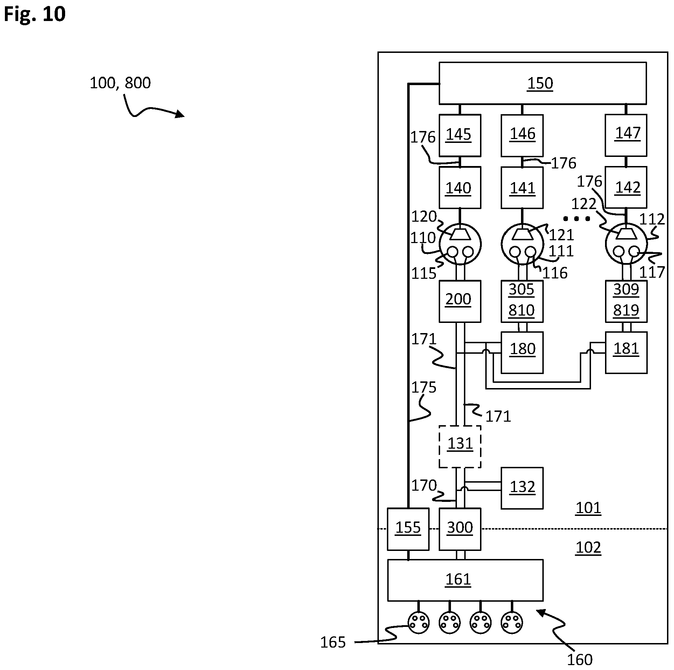

Figur 10 zeigt eine Darstellung eines Überwachungsfeldgeräts 800 gemäß einer dritten Ausgestaltung. Das Überwachungsfeldgerät 800 von Figur 10 stimmt zu einem großen Teil mit dem in Figur 5 gezeigten Überwachungsfeldgerät 800 überein und unterscheidet sich von diesem dadurch, dass das Überwachungsfeldgerät 800 von Figur 10 bzw. dessen erster Gerätebereich 101 (wenigstens) einen weiteren Ausgangsanschluss 112 aufweist. Der weitere Ausgangsanschluss 112 ist entsprechend des Ausgangsanschlusses 111 in Form eines Hybridanschlusses ausgebildet und weist, neben im Rahmen der elektrischen Energieversorgung genutzten Anschlusskontakten 117, einen weiteren Kommunikationsanschluss 122 auf. Hierdurch kann der weitere Ausgangsanschluss 112 entsprechend des anderen Ausgangsanschlusses 111 zur Datenkommunikation eingesetzt und ferner dazu genutzt werden, um die in das Überwachungsfeldgerät 800 über den Eingangsanschluss 110 eingebrachte elektrische Energie an ein nachgeordnetes Feldgerät 100 weiterzuleiten.

Bei dem Überwachungsfeldgerät 800 von Figur 10 ist, entsprechend der in Figur 5 gezeigten Bauform, dem Ausgangsanschluss 111 die Schalteinrichtung 180, die optionale Weiterleitungsbegrenzungseinrichtung 305 und die Überwachungseinrichtung 810 zugeordnet. Auch hierbei sind der Eingangsanschluss 110 und der Ausgangsanschluss 111 über interne elektrische Leiter 171 und, ausgehend von dem Eingangsanschluss 110 und in aufeinanderfolgender Weise, über die Entkopplungseinrichtung 200, die Schalteinrichtung 180, die optionale Weiterleitungsbegrenzungseinrichtung 305 und die Überwachungseinrichtung 810 miteinander verbunden. Mit Hilfe der Überwachungseinrichtung 810 kann ein Systemabschnitt des Systems 50 überwacht werden.

Mit Bezug auf den weiteren Ausgangsanschluss 112 weist das in Figur 10 abgebildete Überwachungsfeldgerät 800 bzw. dessen erster Gerätebereich 101 eine weitere Schalteinrichtung 181, eine weitere optionale Weiterleitungsbegrenzungseinrichtung 309 und eine weitere Überwachungseinrichtung 819 auf, wobei diese Bestandteile dem weiteren Ausgangsanschluss 112 zugeordnet sind. Die weitere Überwachungseinrichtung 819 ist entsprechend der Überwachungseinrichtung 810 ausgestaltet. Insofern kann die Ausgestaltung, wie sie in Figur 5 für die Überwachungseinrichtung 810 gezeigt ist und wie sie oben erläutert wurde, auch für die weitere Überwachungseinrichtung 819 zur Anwendung kommen. Die weitere optionale Weiterleitungsbegrenzungseinrichtung 309 kann entsprechend der Weiterleitungsbegrenzungseinrichtung 305, und damit entsprechend des in Figur 8 gezeigten Schaltbildes, ausgeführt sein. Die Weiterleitungsbegrenzungseinrichtungen 305, 309 können auch entfallen. Entsprechend der Verbindung zwischen dem Eingangs- und Ausgangsanschluss 110, 111 sind der Eingangsanschluss 110 und der weitere Ausgangsanschluss 112 über interne elektrische Leiter 171 und, ausgehend von dem Eingangsanschluss 110 und in aufeinanderfolgender Weise, über die Entkopplungseinrichtung 200, die weitere Schalteinrichtung 181, die weitere optionale Weiterleitungsbegrenzungseinrichtung 309 und die weitere Überwachungseinrichtung 819 miteinander verbunden.

Mit Hilfe der weiteren Schalteinrichtung 181 kann das Weiterleiten der elektrischen Energie über den weiteren Ausgangsanschluss 112 gesteuert werden. Mit Hilfe der weiteren Weiterleitungsbegrenzungseinrichtung 309 kann eine Begrenzung der bei dem Weiterleiten über den weiteren Ausgangsanschluss 112 übertragbaren elektrischen Leistung erzielt werden. Unter Verwendung der weiteren Überwachungseinrichtung 819 kann ein bei der elektrischen Energieversorgung wenigstens eines nachfolgenden Feldgeräts 100 durch Weiterleiten der elektrischen Energie über den weiteren Ausgangsanschluss 112 infolge eines Fehlers auftretender Funke erfasst und hierauf basierend die elektrische Energieversorgung abgeschaltet werden. Mit Hilfe der weiteren Überwachungseinrichtung 819 kann auf diese Weise ein weiterer Systemabschnitt des Systems 50 überwacht werden.

Bei dem Überwachungsfeldgerät 800 von Figur 10 kann die Entkopplungseinrichtung 200 erneut einen Abschluss eines Systemabschnitts des Systems 50 bilden, welcher durch das Einspeisegerät 400 oder ein anderes vorgeordnetes Überwachungsfeldgerät 800 überwacht werden kann. Auf diese Weise kann eine Beeinflussung der Überwachung dieses Systemabschnitts durch die Überwachungseinrichtungen 810, 819 sowie die optionalen Weiterleitungsbegrenzungseinrichtungen 305, 309 des Überwachungsfeldgeräts 800 vermieden werden.

Hinsichtlich der Datenkommunikation ist das in Figur 10 gezeigte Überwachungsfeldgerät 800 bzw. dessen erster Gerätebereich 101 derart ausgestaltet, dass der weitere Kommunikationsanschluss 122 des weiteren Ausgangsanschlusses 112 über eine weitere Barriereschaltung 142, eine weitere physikalische Schnittstelle 147 und interne Datenleitungen 176 mit dem Kommunikationscontroller 150 des Überwachungsfeldgeräts 800 verbunden ist. Auf diese Weise kann der Kommunikationscontroller 150 auch über den weiteren Kommunikationsanschluss 122 Datensignale senden und empfangen. Die weitere Barriereschaltung 142 ist entsprechend der ersten und zweiten Barriereschaltung 140, 141 ausgebildet, eine zu dem weiteren Kommunikationsanschluss 122 im Zuge der Datenkommunikation übertragbare elektrische Leistung zu limitieren und/oder eine galvanische Trennung hervorzurufen. Die weitere physikalische Schnittstelle 147 dient zum Verarbeiten, d.h. zum Kodieren bzw. Dekodieren von Datensignalen.

Das in Figur 10 gezeigte Überwachungsfeldgerät 800 kann über den ersten Ausgangsanschluss 111 und den weiteren Ausgangsanschluss 112, sowie unter Verwendung von zwei hieran angeschlossenen Versorgungsleitungen 500, mit zwei weiteren Feldgeräten 100 verbunden sein (nicht dargestellt). Über beide Ausgangsanschlüsse 111, 112 und die entsprechenden Versorgungsleitungen 500 kann eine Weiterleitung von elektrischer Energie und eine Datenkommunikation erfolgen. Das in Figur 10 gezeigte Überwachungsfeldgerät 800 kann in diesem Sinne als Verteiler für die elektrische Energieversorgung und Datenkommunikation genutzt werden. Unter Verwendung von einem oder auch mehreren und gemäß Figur 10 ausgeführten Überwachungsfeldgeräten 800 kann somit ein System 50 mit mehreren verzweigten Reihen bzw. Strängen aus Feldgeräten 100 aufgebaut werden. Hierbei können durch ein gemäß Figur 10 ausgestaltetes Überwachungsfeldgerät 800 mehrere bzw. zwei und von dem Feldgerät 800 ausgehende Systemabschnitte des Systems 50 mit Hilfe der Überwachungseinrichtungen 810, 819 überwacht werden (jeweils nicht dargestellt).

Mit Bezug auf das in Figur 10 gezeigte Überwachungsfeldgerät 800 besteht ferner die Möglichkeit, mehrere weitere Ausgangsanschlüsse 112 mit jeweils einem weiteren Kommunikationsanschluss 122, und in entsprechender Weise mehrere weitere Barriereschaltungen 142 und physikalische Schnittstellen 147 zur jeweiligen Verbindung der weiteren Kommunikationsanschlüsse 122 mit dem Kommunikationscontroller 150 vorzusehen, wie in Figur 10 anhand von Punkten in einem Bereich zwischen den Barriereschaltungen 141, 142 angedeutet ist. In entsprechender Weise können mehrere weitere Schalteinrichtungen 181, mehrere weitere optionale Weiterleitungsbegrenzungseinrichtungen 309 und mehrere Überwachungseinrichtungen 819 vorgesehen sein, über welche jeweils der Eingangsanschluss 110 und jeweils ein weiterer Ausgangsanschluss 122 verbunden sind, um separat voneinander bzw. in Bezug auf jeden der weiteren Ausgangsanschlüsse 112 das Weiterleiten der elektrischen Energie zu steuern, die übertragbare elektrische Leistung zu limitieren und eine Überwachung der elektrischen Energieversorgung zu erzielen. In dieser Ausgestaltung kann jedem der weiteren Ausgangsanschlüsse 112 eine weitere Schalteinrichtung 181, eine weitere Weiterleitungsbegrenzungseinrichtung 309 und eine weitere Überwachungseinrichtung 819 zugeordnet sein. In dieser Ausgestaltung können mit Hilfe der Überwachungseinrichtung 810 und der weiteren Überwachungseinrichtungen 819 mehrere Systemabschnitte des Systems 50 überwacht werden.

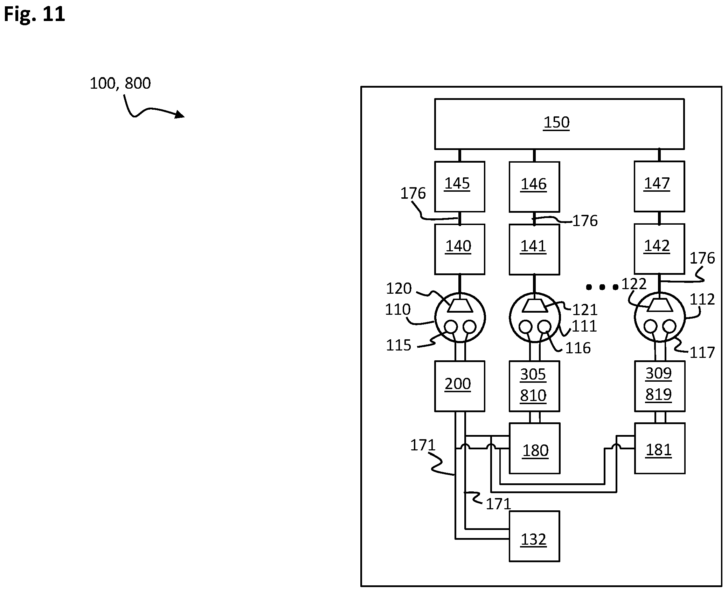

Figur 11 zeigt eine Darstellung eines Überwachungsfeldgeräts 800 gemäß einer vierten Ausgestaltung. Diese Ausgestaltung entspricht der in Figur 10 gezeigten Bauform, indem das Überwachungsfeldgerät 800 von Figur 11 (wenigstens) einen weiteren Ausgangsanschluss 112 aufweist, unterscheidet sich jedoch von Figur 10 dadurch, dass das Überwachungsfeldgerät 800 von Figur 11, entsprechend der in Figur 9 gezeigten Bauform, keine Anschlusseinrichtung 160 aufweist. Auf diese Weise kann das Überwachungsfeldgerät 800 nicht mit einer Feldkomponente 600 verbunden werden. Hierzu korrespondierend fehlt bei dem Überwachungsfeldgerät 800 von Figur 11 die Unterteilung in den ersten und zweiten Gerätebereich 101, 102, und entfallen Bestandteile wie die Energieversorgungverbindung 170 mit der Leistungsbegrenzungseinrichtung 300 und die Kommunikationsverbindung 175 mit der Barriereeinrichtung 155. Auch die Trenneinrichtung 131 kann entfallen.

Abgesehen hiervon stimmt der Aufbau des Überwachungsfeldgeräts 800 von Figur 11 mit demjenigen von Figur 10 überein. Das Überwachungsfeldgerät 800 kann daher ebenfalls als Verteiler für die elektrische Energieversorgung und Datenkommunikation eingesetzt werden. Hierbei kann die über den Eingangsanschluss 110 in das Überwachungsfeldgerät 800 eingebrachte elektrische Energie zum Zwecke der Energieversorgung weiterer Feldgeräte 100 über die Ausgangsanschlüsse 111, 112 weitergeleitet werden. Mit Hilfe der Schalteinrichtungen 180, 181 kann das Weiterleiten der elektrischen Energie über die Ausgangsanschlüsse 111, 112 gesteuert werden. Mit Hilfe der optionalen Weiterleitungsbegrenzungseinrichtungen 305, 309 kann eine Begrenzung der bei dem Weiterleiten über die Ausgangsanschlüsse 111, 112 übertragbaren elektrischen Leistung bewirkt werden. Mit Hilfe der Überwachungseinrichtungen 810, 819 kann eine Funkenentstehung im Fehlerfall erfasst und hierauf basierend die elektrische Energieversorgung abgeschaltet werden. Auf diese Weise können mehrere, von dem Feldgerät 800 ausgehende Systemabschnitte des Systems 50 mit Hilfe der Überwachungseinrichtungen 810, 819 überwacht werden. Die Entkopplungseinrichtung 200 kann einen Abschluss eines anderen Systemabschnitts des Systems 50 bilden, welcher durch das Einspeisegerät 400 oder ein anderes vorgeordneten Überwachungsfeldgerät 800 überwacht werden kann. Mit Bezug auf die Datenkommunikation kann der Kommunikationscontroller 150 über die Eingangs- und Ausgangsanschlüsse 110, 111, 112 bzw. die zugehörigen Kommunikationsanschlüsse 120, 121, 122 Datensignale senden und empfangen. Hierbei kann zum Beispiel eine Auffrischung von Datensignalen erfolgen, welche über das Überwachungsfeldgerät 800 weitergeleitet werden können.

Im Hinblick auf die Datenkommunikation ist es möglich, ferner folgende Ausgestaltung in Bezug auf Feldgeräte 100 des Systems 50 vorzusehen. Die Feldgeräte 100 können ausgebildet sein, eine Datenkommunikation über die Kommunikationsanschlüsse 120, 121, 122 und die physikalischen Schnittstellen 145, 146, 147 gemäß eines ersten Kommunikationsprotokolls, und eine Datenkommunikation über die Anschlusseinrichtung 160 (sofern vorhanden) gemäß eines sich von dem ersten Kommunikationsprotokoll unterscheidenden zweiten Kommunikationsprotokolls durchzuführen. Hierzu kann die Anschlusseinrichtung 160 bzw. kann der Eingabe/Ausgabe-Controller 161 entsprechende Schnittstellen bzw. physikalische Schnittstellen aufweisen (nicht dargestellt). Auf diese Weise kann die Datenkommunikation zwischen den Feldgeräten 100 und den Feldkomponenten 600 von der übrigen Datenkommunikation, was den Datenaustausch zwischen den Feldgeräten 100 untereinander sowie zwischen den Feldgeräten 100 und der übergeordneten Steuervorrichtung 700 über das Einspeisegerät 400 umfassen kann, entkoppelt werden.

Das erste Kommunikationsprotokoll kann sich zum Beispiel auf eine Ethernet-Kommunikation mit einer Datenübertragungsrate von beispielsweise 100MBit, wie zum Beispiel EtherCAT, beziehen. Das zweite Kommunikationsprotokoll kann sich zum Beispiel auf eine Kommunikation gemäß HART oder Profibus PA beziehen. Das zweite Kommunikationsprotokoll kann sich ferner ebenfalls auf eine Ethernet-Kommunikation beziehen, wobei im Unterschied zu dem ersten Ethernet-Kommunikationsprotokoll eine kleinere Datenübertragungsrate von beispielsweise 10MBit eingesetzt werden kann. In diesem Zusammenhang können für die Datenkommunikation verwendete interne Komponenten der Anschlusseinrichtung 160 bzw. des Eingabe/Ausgabe-Controllers 161 gegebenenfalls gemäß des zukünftigen APL-Standards (Advanced Physical Layer) ausgebildet sein.

Im Hinblick auf das in Figur 2 dargestellte Anwendungsszenario können ferner folgende Merkmale für die Feldgeräte 100 des Systems 50 zur Anwendung kommen. Die Eingangsanschlüsse 110 und Ausgangsanschlüsse 111, 112, können gemäß einer ersten Zündschutzart, und die Ausgangsleitungsanschlüsse 165 (sofern vorhanden) können gemäß einer zweiten Zündschutzart ausgebildet sein, wobei die zweite Zündschutzart einem größeren Schutzniveau entspricht als die erste Zündschutzart. Die zweite Zündschutzart kann die Zündschutzart Eigensicherheit Ex ia, und die erste Zündschutzart kann die Zündschutzart Eigensicherheit Ex ib sein.

Für das Erfüllen der unterschiedlichen Zündschutzarten können im Bereich der jeweiligen Anschlüsse 110, 111, 112, 165 vorliegende Bestandteile wie interne Komponenten und elektrische Leiter den Zündschutzarten genügende Ausgestaltungen, zum Beispiel im Hinblick auf Abstände und Redundanzen, aufweisen.

Die mit Hilfe des Einspeisegeräts 400 und der Überwachungsfeldgeräte 800 verwirklichte Überwachung der elektrischen Energieversorgung der Feldgeräte 100 kann ebenfalls zur Eigensicherheit Ex ib der Eingangs- und Ausgangsanschlüsse 110, 111, 112 beitragen. Mit Bezug auf die Ausgangsleitungsanschlüsse 165 kann die mit Hilfe der Leistungsbegrenzungseinrichtung 300 und Barriereeinrichtung 155 verwirklichte Leistungslimitierung zur Eigensicherheit Ex ia beitragen.

Um eine hohe Sicherheit des Systems 50 zu erzielen, können die Feldgeräte 100 ferner zum Beispiel mit einer Vergusskapselung (Schutzart Ex mb) ausgebildet sein. In dieser Ausgestaltung können die Feldgeräte 100 bzw. deren Gehäuse mit einer Vergussmasse verfüllt sein, wodurch das Eindringen eines explosionsfähigen Gemisches in die Feldgeräte 100 verhindert werden kann. Möglich ist auch eine Ausgestaltung von Teilen der Feldgeräte 100 gemäß erhöhter Sicherheit (Schutzart Ex eb). Es ist ferner eine weitere Schutzart für die Feldgeräte 100 denkbar, zum Beispiel eine Ausgestaltung mit einer druckfesten Kapselung (Schutzart Ex db).

Auch für das Einspeisegerät 400 kann eine Vergusskapselung (Schutzart Ex mb) oder eine druckfeste Kapselung (Schutzart Ex db), und kann eine teilweise Ausgestaltung gemäß erhöhter Sicherheit (Schutzart Ex eb) in Betracht kommen.

Die Feldkomponenten 600 können eigensichere Feldkomponenten sein, und gemäß der Zündschutzart Eigensicherheit Ex ia ausgestaltet sein.

Neben den vorstehend beschriebenen und in den Figuren abgebildeten Ausführungsformen sind weitere Ausführungsformen vorstellbar, welche weitere Abwandlungen und/oder Kombinationen von Merkmalen umfassen können.

Mit Bezug auf in den Figuren gezeigte Anschlüsse wie die Eingangsanschlüsse 110 und Ausgangsanschlüsse 111, 112 der Feldgeräte 100 und den Einspeisegerät-Ausgangsanschluss 420 des Einspeisegeräts 400 besteht die Möglichkeit, dass diese Anschlüsse neben zwei Anschlusskontakten 115, 116, 117, 421 einen zusätzlichen Massekontakt aufweisen.

Zur Spannungsbegrenzung können in einer Weiterleitungsbegrenzungseinrichtung 305 (vgl. Figur 8) anstelle von Zener-Dioden 321 andere sich zur Spannungsbegrenzung eignende Bauelemente bzw. Halbleiter-Bauelemente wie zum Beispiel Thyristoren zum Einsatz kommen. Entsprechendes gilt zum Beispiel für die Leistungsbegrenzungseinrichtung 300 der Feldgeräte 100 sowie die Einspeisegerät-Begrenzungseinrichtung 403 des Einspeisegeräts 400.

Hinsichtlich der in Figur 7 gezeigten Entkopplungseinrichtung 200 ist es möglich, die Dioden 211 der weiteren Baugruppe 210 und/oder der Klemmschaltung 220 durch andere Bauelemente bzw. Halbleiter-Bauelemente zu ersetzen.

Im Hinblick auf Überwachungsfeldgeräte 800 mit mehreren Ausgangsanschlüssen 111, 112, wie sie in den Figuren 10 und 11 dargestellt sind, können abgewandelte Bauformen in Betracht kommen, in welchen die Überwachungsfeldgeräte 800 lediglich eine Überwachungseinrichtung 810 aufweisen. Hierbei kann die betreffende Überwachungseinrichtung 810 den mehreren Ausgangsanschlüssen 111, 112 zugeordnet und mit den mehreren Ausgangsanschlüssen 111, 112 verbunden sein. In entsprechender Weise können mit Hilfe der Überwachungseinrichtung 810 mehrere Systemabschnitte des Systems 50 überwacht werden.

Für Feldgeräte 100, welche nicht zur Überwachung der Energieversorgung einsetzbar sind und welche keine Überwachungseinrichtung 810 aufweisen, kann, vergleichbar zu der in Figur 10 gezeigten Bauform, eine Ausgestaltung mit (wenigstens) einem weiteren Ausgangsanschluss 112 in Betracht kommen. Hierbei kann der weitere Ausgangsanschluss 112 über interne elektrische Leiter 171 und eine weitere Schalteinrichtung 181 mit dem Eingangsanschluss 110 verbunden sein.

Möglich ist auch eine Ausgestaltung eines nicht zur Überwachung einsetzbaren Feldgeräts 100 ohne jeglichen Ausgangsanschluss 111, wodurch ferner Bestandteile wie die Schalteinrichtung 180, der zweite Kommunikationsanschluss 121, die zweite Barriereschaltung 141 und die zweite physikalische Schnittstelle 146 entfallen können, und eine Datenkommunikation lediglich über den Eingangsanschluss 110 bzw. den Kommunikationsanschluss 120 erfolgen kann. Ein Feldgerät 100 mit einer solchen Ausgestaltung kann als Endgerät dienen, und zum Beispiel am Ende einer Reihe bzw. eines Strangs von Feldgeräten 100 zum Einsatz kommen, um die dem Feldgerät 100 zugeführte Energie lediglich an Feldkomponenten 600 weiterzuleiten, und um eine Datenkommunikation über das Feldgerät 100 mit den Feldkomponenten 600 durchzuführen.

Für Feldgeräte 100 mit einer bzw. mehreren Schalteinrichtungen 180, 181, wie sie in Figuren 4, 5, 9, 10 und 11 gezeigt sind, besteht eine mögliche Abwandlung darin, diese ohne Schalteinrichtung 180, 181 auszubilden.

Hinsichtlich des Einspeisegeräts 400 besteht die Möglichkeit, dieses abweichend von Figur 2 ebenfalls in Zone 1/21 gemäß der ATEX-Richtlinie (zweiter Bereich 11 in Figur 2) anzuordnen. Das Einspeisegerät 400 kann hierzu korrespondierend ausgebildet sein. Ferner können Maßnahmen wie zum Beispiel die Verwendung eines explosionsgesicherten Steckverbinders an einer zum Anschließen an den Stromversorgungseingang 401 des Einspeisegeräts 400 verwendeten Versorgungsleitung zum Einsatz kommen, über welche das Einspeisegerät 400 mit einer Stromquelle verbunden sein kann. Auch kann der Stromversorgungseingang 401 zum Beispiel gemäß der Schutzart Ex db oder Ex eb ausgestaltet sein.

In einer weiteren Abwandlung handelt es sich bei der mit Hilfe des Einspeisegeräts 400 bereitgestellten elektrischen Energie, welche von bzw. zwischen den Feldgeräten 100 transportiert und zu den Feldkomponenten 600 weitergeleitet werden kann, um einen elektrischen Wechselstrom. Hierbei können Bestandeile des Systems 50 wie das Einspeisegerät 400 und die Feldgeräte 100 sowie Komponenten bzw. Schaltungskomponenten derselben hierauf abgestimmt ausgebildet sein. Ferner kann das Einspeisegerät 400 über dessen Stromversorgungseingang 401 mit einer Wechselstromquelle elektrisch verbunden sein.

Die Datenkommunikation zwischen den Feldgeräten 100, sowie die Datenkommunikation zwischen dem Einspeisegerät 400 und einem Feldgerät 100 und mit der übergeordneten Steuervorrichtung 700, kann in elektrischer Form erfolgen. Möglich ist auch ein Durchführen einer optischen Datenkommunikation, gemäß welcher optische Datensignale unter Verwendung von Glasfasern bzw. glasfaserbasierten Datenleitungen übertragen und ausgetauscht werden.

Für das Durchführen einer optischen Datenkommunikation können für die in den Figuren 4, 5, 9, 10 und 11 gezeigten Feldgeräte 100 folgende Abwandlungen in Betracht kommen. Die Barriereschaltungen 140, 141, 142 können entfallen, und stattdessen kann zwischen den physikalischen Schnittstellen 145, 146, 147 und den zugehörigen Eingangs- und Ausgangsanschlüssen 110, 111, 112 bzw. den Kommunikationsanschlüssen 120, 121, 122 jeweils ein optischer Transceiver angeordnet sein. In dieser Ausgestaltung kann jede der Barriereschaltungen 140, 141, 142 durch einen optischen Transceiver ersetzt sein. Hierbei können die Kommunikationsanschlüsse 120, 121, 122 jeweils über einen optischen Transceiver und eine entsprechende physikalische Schnittstelle 145, 146, 147 mit dem Kommunikationscontroller 150 verbunden sein. Die optischen Transceiver können ausgebildet sein, optische Datensignale in elektrische Datensignale sowie elektrische Datensignale in optische Datensignale umzuwandeln. Dabei bezieht sich die Umsetzung in elektrische Datensignale auf das Empfangen, und die Umsetzung in optische Datensignale auf das Senden von Datensignalen über den entsprechenden Kommunikationsanschluss 120, 121, 122.

Mit Bezug auf das in Figur 3 gezeigte Einspeisegerät 400 kann folgende Abwandlung in Betracht kommen, um eine optische Datenkommunikation zu ermöglichen. Die Einspeisegerät-Barriereschaltung 430 kann entfallen, und zwischen der zweiten physikalischen Einspeisegerät-Schnittstelle 446 und dem Einspeisegerät-Kommunikationsanschluss 425 kann ein optischer Einspeisegerät-Transceiver angeordnet sein. Hierbei kann die Einspeisegerät-Barriereschaltung 430 durch den optischen Einspeisegerät-Transceiver ersetzt sein, und kann der Einspeisegerät-Kommunikationsanschluss 425 über den optischen Einspeisegerät-Transceiver und die zweite physikalische Einspeisegerät-Schnittstelle 446 mit dem Einspeisegerät-Kommunikationscontroller 450 verbunden sein. Das Einspeisegerät 400 kann ferner einen weiteren optischen Einspeisegerät-Transceiver aufweisen, welcher zwischen der ersten physikalische Einspeisegerät-Schnittstelle 445 und dem Kommunikationseingang 405 angeordnet sein kann, so dass der Kommunikationseingang 405 über den weiteren optischen Einspeisegerät-Transceiver und die erste physikalische Einspeisegerät-Schnittstelle 445 mit dem Einspeisegerät-Kommunikationscontroller 450 verbunden sein kann. Die optischen Einspeisegerät-Transceiver können ausgebildet sein, optische Datensignale in elektrische Datensignale sowie elektrische Datensignale in optische Datensignale umzuwandeln. Dabei bezieht sich die Umsetzung in elektrische Datensignale auf das Empfangen, und die Umsetzung in optische Datensignale auf das Senden von Datensignalen über den entsprechenden Einspeisegerät-Kommunikationsanschluss 425 bzw. Kommunikationseingang 405.

Es ist gegebenenfalls möglich, auch die Datenkommunikation zwischen den Feldgeräten 100 und den Feldkomponenten 600 in optischer Form durchzuführen. Hierbei können die Feldgeräte 100 bzw. deren Anschlusseinrichtungen 160 entsprechende optische Transceiver zum Umsetzen von optischen Datensignalen in elektrische Datensignale sowie von elektrischen Datensignalen in optische Datensignale aufweisen. Gleiches gilt für die Feldkomponenten 600.

Hinsichtlich des Durchführens einer optischen Datenkommunikation können verwendete Datenleitungen bzw. als Hybridleitungen ausgestaltete Versorgungsleitungen 500 sowie Ausgangsleitungen 510 eine oder mehrere Glasfasern zur Datenübertragung aufweisen.

Für das Einspeisegerät 400 ist ferner eine Bauform denkbar, in welcher das Einspeisegerät 400 abweichend von Figur 3 mehrere Einspeisegerät-Ausgangsanschlüsse 420 aufweist. Auf diese Weise kann das Einspeisegerät 400 unter Verwendung von mehreren an die Einspeisegerät-Ausgangsanschlüsse 420 angeschlossenen Versorgungsleitungen 500 mit mehreren Feldgeräten 100 verbunden sein. In einer solchen Ausgestaltung kann das Einspeisegerät 400 als Verteiler für die elektrische Energieversorgung und auch Datenkommunikation genutzt werden. Hierbei kann ein System 50 aufgebaut werden, bei welchem von dem Einspeisegerät 400 mehrere Reihen bzw. Stränge aus Feldgeräten 100 ausgehen können. Das Einspeisegerät 400 kann hierzu korrespondierend mehrere, den jeweiligen Einspeisegerät-Ausgangsanschlüssen 420 zugeordnete und mit diesen verbundene Einspeisegerät-Überwachungseinrichtungen 410 überweisen, mit deren Hilfe die elektrische Energieversorgung von Feldgeräten 100 der unterschiedlichen Stränge, und damit mehrere von dem Einspeisegerät ausgehende Systemabschnitte des Systems 50, separat überwacht werden können. Möglich ist auch eine Ausgestaltung des Einspeisegeräts 400 mit lediglich einer Einspeisegerät-Überwachungseinrichtung 410, welche den mehreren Einspeisegerät-Ausgangsanschlüssen 420 zugeordnet und mit diesen verbunden ist, so dass mit Hilfe der Einspeisegerät-Überwachungseinrichtung 410 mehrere Systemabschnitte des Systems 50 überwacht werden können.

Bei den oben beschriebenen und in den Figuren 1, 4, 5, 9, 10 und 11 gezeigten Feldgeräten 100 ist eine Datenkommunikation zwischen den Feldgeräten 100 untereinander, und mit dem Einspeisegerät 400, in Form einer Punkt-zu-Punkt-Verbindung verwirklicht. Die Feldgeräte 100 und das Einspeisegerät 400 können des Weiteren dahingehend verwirklicht sein, dass eine Datenkommunikation auch über eine Bus-Struktur erfolgen kann.

In einer weiteren Abwandlung können die Feldgeräte 100 und das Einspeisegerät 400 derart ausgebildet sein, dass die elektrische Energieversorgung und die Datenkommunikation nicht unter Verwendung von Hybridleitungen und Hybridanschlüssen erfolgt, sondern stattdessen mit Hilfe von getrennten Versorgungsleitungen und Datenleitungen, sowie getrennten Anschlüssen für die Energieversorgung und Datenkommunikation, durchgeführt wird.

Bei einer Ausgestaltung eines Systems 50 mit mehreren Überwachungsfeldgeräten 800 können die Überwachungsfeldgeräte 800 übereinstimmend ausgeführt sein. Ein System 50 kann ferner mit Überwachungsfeldgeräten 800 mit unterschiedlichen Bauformen ausgebildet sein, zum Beispiel mit Bauformen entsprechend den Figuren 5 und 10.

Darüber hinaus wird auf die Möglichkeit verwiesen, ein System 50 mit einem Einspeisegerät 400 und mehreren Feldgeräten 100 zu verwirklichen, bei welchem sämtliche Feldgeräte 100 zur Überwachung der elektrischen Energieversorgung ausgebildete Überwachungsfeldgeräte 800 sind, und damit sämtliche Feldgeräte 100 (wenigstens) einen Ausgangsanschluss 111, 112 und (wenigstens) eine Überwachungseinrichtung 810, 819 aufweisen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

### Bezugszeichenliste

- 10: erster Bereich
- 11: zweiter Bereich
- 12: dritter Bereich
- 50: System
- 100: Feldgerät
- 101: erster Gerätebereich
- 102: zweiter Gerätebereich
- 110: Eingangsanschluss
- 111: Ausgangsanschluss
- 112: weiterer Ausgangsanschluss
- 115: Anschlusskontakt
- 116: Anschlusskontakt
- 117: Anschlusskontakt
- 120: erster Kommunikationsanschluss
- 121: zweiter Kommunikationsanschluss
- 122: weiterer Kommunikationsanschluss
- 131: Trenneinrichtung
- 132: internes Netzteil
- 140: erste Barriereschaltung
- 141: zweite Barriereschaltung
- 142: weitere Barriereschaltung
- 145: erste physikalische Schnittstelle
- 146: zweite physikalische Schnittstelle
- 147: weitere physikalische Schnittstelle
- 150: Kommunikationscontroller
- 155: Barriereeinrichtung
- 160: Anschlusseinrichtung
- 161: Eingabe/Ausgabe-Controller
- 165: Ausgangsleitungsanschluss
- 170: Energieversorgungsverbindung
- 171: interner Leiter
- 175: Kommunikationsverbindung
- 180: Schalteinrichtung
- 181: weitere Schalteinrichtung
- 200: Entkopplungseinrichtung
- 210: weitere Baugruppe
- 211: Diode
- 220: Klemmschaltung
- 230: Induktivität
- 240: kapazitive Baugruppe
- 241: Kapazität
- 250: Einschaltstrombegrenzer
- 300: Leistungsbegrenzungseinrichtung
- 305: Weiterleitungsbegrenzungseinrichtung
- 309: weitere Weiterleitungsbegrenzungseinrichtung
- 310: Schutzeinrichtung
- 311: Strombegrenzungseinrichtung
- 315: Widerstand
- 316: Schmelzsicherung
- 317: Schutzwiderstand
- 320: Spannungsbegrenzungseinrichtung
- 321: Zener-Diode
- 400: Einspeisegerät
- 401: Stromversorgungseingang
- 403: Einspeisegerät-Begrenzungseinrichtung
- 405: Kommunikationseingang
- 410: Einspeisegerät-Überwachungseinrichtung
- 411: erster Einspeisegerät-Detektor
- 412: zweiter Einspeisegerät-Detektor
- 413: Einspeisegerät-Schalteinheit
- 414: Einspeisegerät-Steuereinheit
- 415: Einspeisegerät-Detektoreinrichtung
- 420: Einspeisegerät-Ausgangsanschluss
- 421: Anschlusskontakt
- 425: Einspeisegerät-Kommunikationsanschluss
- 430: Einspeisegerät-Barriereschaltung
- 445: erste physikalische Einspeisegerät-Schnittstelle
- 446: zweite physikalische Einspeisegerät-Schnittstelle
- 450: Einspeisegerät-Kommunikationscontroller
- 471: interner Leiter
- 476: interne Datenleitung
- 500: Versorgungsleitung
- 510: Ausgangsleitung
- 600: Feldkomponente
- 700: Steuervorrichtung
- 800: Überwachungsfeldgerät
- 810: Überwachungseinrichtung
- 811: erster Detektor
- 812: zweiter Detektor
- 813: Schalteinheit
- 814: Steuereinheit
- 815: Detektoreinrichtung
- 819: weitere Überwachungseinrichtung
- 821: erster Systemabschnitt
- 822: zweiter Systemabschnitt
- 823: weiterer Systemabschnitt

## Patentansprüche

1. System umfassend ein Einspeisegerät (400) und mehrere mit dem Einspeisegerät (400) elektrisch verbundene Feldgeräte (100),
wobei das Einspeisegerät (400) ausgebildet ist, eine elektrische Energie zur elektrischen Energieversorgung der Feldgeräte (100) bereitzustellen,
wobei das Einspeisegerät (400) eine Einspeisegerät-Überwachungseinrichtung (410) aufweist, welche ausgebildet ist, eine Funkenentstehung bei der elektrischen Energieversorgung zu erfassen und hierauf basierend die elektrische Energieversorgung abzuschalten,
wobei die Feldgeräte (100) jeweils einen Eingangsanschluss (110) zum Anschlie-ßen einer Versorgungsleitung (500) aufweisen, über welchen die von dem Einspeisegerät (400) bereitgestellte elektrische Energie dem jeweiligen Feldgerät (100) zuführbar ist, und
wobei wenigstens ein Feldgerät (100) eine Anschlusseinrichtung (160) zum Anschließen wenigstens einer Ausgangsleitung (510) aufweist, über welche die elektrische Energie zur elektrischen Energieversorgung wenigstens einer Feldkomponente (600) weiterleitbar ist,
**dadurch gekennzeichnet, dass**
wenigstens ein Feldgerät (100) ein zur elektrischen Energieversorgung wenigstens eines nachfolgenden Feldgeräts (100) und zur Überwachung ausgebildetes Überwachungsfeldgerät (800) ist und Folgendes aufweist:
wenigstens einen Ausgangsanschluss (111, 112) zum Anschließen einer weiteren Versorgungsleitung (500), über welchen die elektrische Energie zur elektrischen Energieversorgung wenigstens eines nachfolgenden Feldgeräts (100) weiterleitbar ist; und
eine Überwachungseinrichtung (810, 819), welche ausgebildet ist, eine Funkenentstehung bei der elektrischen Energieversorgung wenigstens eines nachfolgenden Feldgeräts (100) zu erfassen und hierauf basierend die elektrische Energieversorgung abzuschalten,
wobei die Feldgeräte (100) eine Entkopplungseinrichtung (200) aufweisen, welche einen LC-Tiefpass mit einer Induktivität (230) und wenigstens einer Kapazität (241) umfasst, so dass eine vorgegebene Eingangsimpedanz der Feldgeräte (100) für das Erfassen der Funkenentstehung bereitgestellt wird,
wobei die Entkopplungseinrichtung (200) eines Feldgeräts (100) mit dem Eingangsanschluss (110) des Feldgeräts (100) verbunden und diesem nachgeordnet ist,
wobei im Betrieb des Systems mit Hilfe des Einspeisegeräts (400) und des wenigstens einen Überwachungsfeldgeräts (800) unterschiedliche Systemabschnitte des Systems überwacht werden,
und wobei die Entkopplungseinrichtung (200) des wenigstens einen Überwachungsfeldgeräts (800) der Überwachungseinrichtung (810, 819) des Überwachungsfeldgeräts (800) vorgeordnet ist und als Abschlussimpedanz eines Systemabschnitts des Systems dient, welcher durch das Einspeisegerät (400) oder durch ein dem Überwachungsfeldgerät (800) vorgeordnetes weiteres Überwachungsfeldgerät (800) überwacht wird.

2. System nach Anspruch 1,
wobei die Überwachungseinrichtung (810, 819) des Überwachungsfeldgeräts (800) eine Detektoreinrichtung (815) zum Erfassen einer Stromänderung bei einer Funkenentstehung, eine Steuereinheit (814) und eine Schalteinheit (813) aufweist, und wobei die Steuereinheit (814) ausgebildet ist, das Abschalten der Energieversorgung durch Ansteuern der Schalteinheit (813) auf der Grundlage einer mit Hilfe der Detektoreinrichtung (815) erfassten Stromänderung durchzuführen.

3. System nach einem der vorhergehenden Ansprüche,
wobei das Überwachungsfeldgerät (800) eine Weiterleitungsbegrenzungseinrichtung (305, 309) aufweist, welche ausgebildet ist, eine Begrenzung einer bei dem Weiterleiten der elektrischen Energie über den wenigstens einen Ausgangsanschluss (111, 112) übertragbaren elektrischen Leistung hervorzurufen.

4. System nach einem der vorhergehenden Ansprüche,
wobei das Überwachungsfeldgerät (800) eine Schalteinrichtung (180, 181) aufweist, mit deren Hilfe das Weiterleiten der elektrischen Energie über den wenigstens einen Ausgangsanschluss (111, 112) schaltbar ist.

5. System nach einem der vorhergehenden Ansprüche,
wobei die Feldgeräte (100) einen Einschaltstrombegrenzer (250) aufweisen, welcher ausgebildet ist, einen Einschaltstrom bei einem Beginn der elektrischen Energieversorgung zu begrenzen.

6. System nach einem der vorhergehenden Ansprüche,
wobei die Feldgeräte (100) zum Durchführen einer Datenkommunikation ausgebildet sind,
indem die Feldgeräte (100) wenigstens einen Kommunikationsanschluss (120) zum Anschließen einer Datenleitung zum Empfangen und/oder Senden von Datensignalen und einen mit dem wenigstens einen Kommunikationsanschluss (120) verbundenen Kommunikationscontroller (150) aufweisen.

7. System nach Anspruch 6,
wobei bei dem wenigstens einen mit der Anschlusseinrichtung (160) versehenen Feldgerät (100) der Kommunikationscontroller (150) über eine Kommunikationsverbindung (175) mit der Anschlusseinrichtung (160) verbunden ist, um Datensignale über die Anschlusseinrichtung (160) zu empfangen und/oder zu senden.

8. System nach einem der vorhergehenden Ansprüche,
wobei das wenigstens eine mit der Anschlusseinrichtung (160) versehene Feldgerät (100) einen ersten Gerätebereich (101) und einen zweiten Gerätebereich (102) aufweist,
wobei der erste Gerätebereich (101) den Eingangsanschluss (110) und der zweite Gerätebereich (102) die Anschlusseinrichtung (160) aufweist,
wobei die von dem Einspeisegerät (400) bereitgestellte elektrische Energie über den Eingangsanschluss (110) dem ersten Gerätebereich (101) zuführbar, über eine elektrische Energieversorgungsverbindung (170) von dem ersten Gerätebereich (101) zu dem zweiten Gerätebereich (102) übertragbar ist, und über die Anschlusseinrichtung (160) weiterleitbar ist, und
wobei die elektrische Energieversorgungsverbindung (170) des ersten und zweiten Gerätebereichs (101, 102) eine Leistungsbegrenzungseinrichtung (300) aufweist, welche ausgebildet ist, eine Begrenzung einer von dem ersten Gerätebereich (101) zu dem zweiten Gerätebereich (102) im Rahmen der Energieübertragung übertragbaren elektrischen Leistung hervorzurufen.

## Claims

1. A system comprising a feed-in device (400) and a plurality of field devices (100) electrically connected to the feed-in device (400),
wherein the feed-in device (400) is configured to provide an electrical energy for electrical energy supply to the field devices (100),
wherein the feed-in device (400) comprises a feed-in device monitoring device (410) configured to detect spark generation in the electrical energy supply and, based on this, to switch off the electrical energy supply,
wherein the field devices (100) each comprise an input terminal (110) for connecting a supply line (500), via which the electrical energy provided by the feed-in device (400) may be supplied to the respective field device (100), and
wherein at least one field device (100) comprises a terminal device (160) for connecting at least one output line (510), via which the electrical energy may be forwarded for electrical energy supply to at least one field component (600),
**characterized in that**
at least one field device (100) is a monitoring field device (800) configured for electrical energy supply to at least one subsequent field device (100) and for monitoring, and comprises the following:
at least one output terminal (111, 112) for connecting a further supply line (500), via which the electrical energy may be forwarded for electrical energy supply to at least one subsequent field device (100); and
a monitoring device (810, 819) configured to detect spark generation in the electrical energy supply to at least one subsequent field device (100) and, based on this, to switch off the electrical energy supply,
wherein the field devices (100) comprise a decoupling device (200), which comprises an LC low-pass filter having an inductor (230) and at least one capacitor (241), so that a predetermined input impedance of the field devices (100) is provided for detecting the spark generation,
wherein the decoupling device (200) of a field device (100) is connected to the input terminal (110) of the field device (100) and is arranged downstream thereof,
wherein during operation of the system, different system sections of the system are monitored with the aid of the feed-in device (400) and the at least one monitoring field device (800),
and wherein the decoupling device (200) of the at least one monitoring field device (800) is arranged upstream of the monitoring device (810, 819) of the monitoring field device (800) and serves as a termination impedance of a system section of the system which is monitored by the feed-in device (400) or by a further monitoring field device (800) arranged upstream of the monitoring field device (800).

2. The system according to claim 1,
wherein the monitoring device (810, 819) of the monitoring field device (800) comprises a detector device (815) for detecting a current change during spark generation, a control unit (814) and a switching unit (813), and wherein the control unit (814) is configured to carry out the switching off of the energy supply by actuating the switching unit (813) based on a current change detected with the aid of the detector device (815).

3. The system according to any one of the preceding claims,
wherein the monitoring field device (800) comprises a forwarding limiting device (305, 309) configured to cause a limitation of an electrical power transmittable during the forwarding of the electrical energy via the at least one output terminal (111, 112).

4. The system according to any one of the preceding claims,
wherein the monitoring field device (800) comprises a switching device (180, 181), with the aid of which the forwarding of the electrical energy via the at least one output terminal (111, 112) is switchable.

5. The system according to any one of the preceding claims,
wherein the field devices (100) comprise an inrush current limiter (250) configured to limit an inrush current at a start of the electrical energy supply.

6. The system according to any one of the preceding claims,
wherein the field devices (100) are configured to carry out data communication,
in that the field devices (100) comprise at least one communication terminal (120) for connecting a data line for receiving and/or transmitting data signals and a communication controller (150) connected to the at least one communication terminal (120).

7. The system according to claim 6,
wherein in the at least one field device (100) provided with the terminal device (160) the communication controller (150) is connected to the terminal device (160) via a communication connection (175) to receive and/or transmit data signals via the terminal device (160).

8. The system according to any one of the preceding claims,
wherein the at least one field device (100) provided with the terminal device (160) comprises a first device section (101) and a second device section (102),
wherein the first device section (101) comprises the input terminal (110) and the second device section (102) comprises the terminal device (160),
wherein the electrical energy provided by the feed-in device (400) may be supplied to the first device section (101) via the input terminal (110), may be transmitted from the first device section (101) to the second device section (102) via an electrical energy supply connection (170), and may be forwarded via the terminal device (160), and
wherein the electrical energy supply connection (170) of the first and second device sections (101, 102) comprises a power limiting device (300) configured to cause a limitation of an electrical power transmittable from the first device section (101) to the second device section (102) in the course of the energy transmission.

## Revendications

1. Système comprenant un appareil d'alimentation (400) et plusieurs appareils de terrain (100) reliés électriquement à l'appareil d'alimentation (400),
dans lequel l'appareil d'alimentation (400) est réalisé pour fournir une énergie électrique pour l'alimentation en énergie électrique des appareils de terrain (100),
dans lequel l'appareil d'alimentation (400) présente un dispositif de surveillance d'appareil d'alimentation (410) qui est réalisé pour détecter une apparition d'étincelles lors de l'alimentation en énergie électrique et pour déconnecter l'alimentation en énergie électrique sur cette base,
dans lequel les appareils de terrain (100) présentent respectivement une borne d'entrée (110) pour connecter une ligne d'alimentation (500), qui permet d'amener à l'appareil de terrain respectif (100) l'énergie électrique fournie par l'appareil d'alimentation (400), et
dans lequel au moins un appareil de terrain (100) présente un dispositif de connexion (160) pour connecter au moins une ligne de sortie (510) par laquelle l'énergie électrique peut être transférée pour l'alimentation en énergie électrique d'au moins un composant de terrain (600),
**caractérisé en ce qu'**au moins un appareil de terrain (100) est un appareil de terrain de surveillance (800) réalisé pour l'alimentation en énergie électrique d'au moins un appareil de terrain suivant (100) et pour la surveillance et présente :
au moins une borne de sortie (111, 112) pour connecter une ligne d'alimentation supplémentaire (500), qui permet de transférer l'énergie électrique pouvant être retransmise pour l'alimentation en énergie électrique d'au moins un appareil de terrain suivant (100) ; et
un dispositif de surveillance (810, 819) qui est réalisé pour détecter une apparition d'étincelles lors de l'alimentation en énergie électrique d'au moins un appareil de terrain suivant (100) et pour déconnecter l'alimentation en énergie électrique sur cette base,
dans lequel les appareils de terrain (100) présentent un dispositif de découplage (200) qui comprend un filtre passe bas LC pourvu d'une inductance (230) et d'au moins un condensateur (241) de sorte qu'une impédance d'entrée prédéfinie des appareils de terrain (100) est fournie pour détecter l'apparition d'étincelles,
dans lequel le dispositif de découplage (200) d'un appareil de terrain (100) est relié à la borne d'entrée (110) de l'appareil de terrain (100) et est placé en aval de celle-ci,
dans lequel, en cours de fonctionnement du système, différentes parties fonctionnelles du système sont surveillées à l'aide de l'appareil d'alimentation (400) et dudit au moins un appareil de terrain de surveillance (800),
et dans lequel le dispositif de découplage (200) dudit au moins un appareil de terrain de surveillance (800) est placé en amont du dispositif de surveillance (810, 819) de l'appareil de terrain de surveillance (800) et sert d'impédance terminale d'une partie fonctionnelle du système qui est surveillée par l'appareil d'alimentation (400) ou par un appareil de terrain de surveillance supplémentaire (800) placé en amont de l'appareil de terrain de surveillance (800).

2. Système selon la revendication 1,
dans lequel le dispositif de surveillance (810, 819) de l'appareil de terrain de surveillance (800) présente un dispositif de détection (815) pour détecter une variation de courant en cas d'apparition d'étincelles, une unité de commande (814) et une unité de commutation (813),
et dans lequel l'unité de commande (814) est réalisée pour effectuer la déconnexion de l'alimentation en énergie en pilotant l'unité de commutation (813) sur la base d'une variation de courant détectée à l'aide du dispositif de détection (815) .

3. Système selon l'une quelconque des revendications précédentes,
dans lequel l'appareil de terrain de surveillance (800) présente un dispositif de limitation de transfert (305, 309) qui est réalisé pour provoquer une limitation d'une puissance électrique pouvant être transmise lors du transfert de l'énergie électrique par l'intermédiaire de ladite au moins une borne de sortie (111, 112).

4. Système selon l'une quelconque des revendications précédentes, dans lequel l'appareil de terrain de surveillance (800) présente un dispositif de commutation (180, 181) à l'aide duquel le transfert de l'énergie électrique peut être commuté par l'intermédiaire de ladite au moins une borne de sortie (111, 112).

5. Système selon l'une quelconque des revendications précédentes, dans lequel les appareils de terrain (100) présentent un limiteur de courant de démarrage (250) qui est réalisé pour limiter un courant de démarrage au début de l'alimentation en énergie électrique.

6. Système selon l'une quelconque des revendications précédentes,
dans lequel les appareils de terrain (100) sont réalisés pour effectuer une communication de données,
en ce que les appareils de terrain (100) présentent au moins une borne de communication (120) pour connecter une ligne de données pour recevoir et/ou émettre des signaux de données, et un contrôleur de communication (150) relié à ladite au moins une borne de communication (120).

7. Système selon la revendication 6, dans lequel, sur ledit au moins un appareil de terrain (100) muni du dispositif de connexion (160), le contrôleur de communication (150) est relié au dispositif de connexion (160) par l'intermédiaire d'une liaison de communication (175) pour recevoir et/ou émettre des signaux de données par l'intermédiaire du dispositif de connexion (160).

8. Système selon l'une quelconque des revendications précédentes,
dans lequel ledit au moins un appareil de terrain (100) muni du dispositif de connexion (160) présente une première zone d'appareil (101) et une deuxième zone d'appareil (102),
dans lequel la première zone d'appareil (101) présente la connexion d'entrée (110), et la deuxième zone d'appareil (102) présente le dispositif de connexion (160),
dans lequel l'énergie électrique fournie par l'appareil d'alimentation (400) peut être amenée à la première zone d'appareil (101) par l'intermédiaire de la borne d'entrée (110), peut être transmise de la première zone d'appareil (101) à la deuxième zone d'appareil (102) par l'intermédiaire d'une liaison d'alimentation en énergie électrique (170), et peut être transférée par l'intermédiaire du dispositif de connexion (160), et
dans lequel la liaison d'alimentation en énergie électrique (170) de la première et de la deuxième zone d'appareil (101, 102) présente un dispositif de limitation de puissance (300) qui est réalisé pour provoquer une limitation d'une puissance électrique pouvant être transmise de la première zone d'appareil (101) à la deuxième zone d'appareil (102) dans le cadre la transmission d'énergie.
